(19) Europäisches Patentamt
European Patent Office
Office européen des brevets

(11) **EP 3 483 879 A1**

(12) **EUROPEAN PATENT APPLICATION**

(43) Date of publication:
**15.05.2019 Bulletin 2019/20**

(21) Application number: **17201086.0**

(22) Date of filing: **10.11.2017**

(51) Int Cl.:
**G10L 19/022** (2013.01)   **G10L 19/02** (2013.01)
**H04N 19/60** (2014.01)   **G06F 17/14** (2006.01)
**G06T 9/00** (2006.01)   **G10L 25/45** (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fraunhofer-Gesellschaft zur Förderung der angewandten Forschung e.V.**
**80686 München (DE)**

(72) Inventors:
• **SCHNELL, Markus**
  **90409 Nürnberg (DE)**

• **LUTZKY, Manfred**
  **90427 Nürnberg (DE)**
• **TSCHEKALINSKIJ, Alexander**
  **90429 Nürnberg (DE)**
• **GEIGER, Ralf**
  **91052 Erlangen (DE)**

(74) Representative: **Zinkler, Franz et al Schoppe, Zimmermann, Stöckeler Zinkler, Schenk & Partner mbB Patentanwälte Radlkoferstrasse 2 81373 München (DE)**

(54) **ANALYSIS/SYNTHESIS WINDOWING FUNCTION FOR MODULATED LAPPED TRANSFORMATION**

(57)   There are provided methods and apparatus for performing modified cosine transformation (MDCT) with an analysis/synthesis windowing function, using an analysis windowing function (40, 50, 60, 70, 90) having a meandering portion (44, 64, 94) which passes a linear function (40', 60') in correspondence of at least four points (#1, #2, #3, #4).

Fig. 6

**Description**

1. Background

Lapped transforms have been developed for several audiocoding applications. These transforms are normally performed on consecutive blocks of a larger dataset (e.g., two consecutive frames) for an audio signal. Subsequent blocks may be overlapped. Accordingly, a last part of one block coincides with a first part of a subsequent block. A windowing function may be used.

Asymmetric modified discrete cosine transform (MDCT) windows, asymmetric modified discrete sine transform (MDST), time to frequency transformations, have been developed which embody modulated lapped transforms.

Asymmetric modified discrete cosine transform (MDCT) windows, asymmetric modified discrete sine transform (MDST) windows and other types of windows have been developed in the past years as they provide improved frequency responses compared to symmetric shapes, esp. for low delay signal applications, such as audio coding applications.

The first generation of window shapes just focused on the design of the frequency response, e.g. the G.718 or MPEG-4 AAC-ELD window. Recent developments also take the temporal shape of the window into account which is responsible for the temporal modulation of the quantization error, e.g. the ALDO window as used in the 3GPP EVS codec.

However, the design approach presented there comes along with the problem that the window shapes show a non-continuous differentiation which leads to a suboptimal frequency response. The described invention in this document presents a solution to overcome this problem.

2. Summary of the invention

There is provided an apparatus for encoding an information signal comprising a plurality of frames, the apparatus comprising:

a modified discrete cosine transformation, MDCT, tool for transforming a time domain, TD, representation of the information signal, or a processed version thereof, into a frequency domain, FD, representation, the MDCT tool being configured to perform an MDCT analysis using an analysis windowing function having a meandering portion crossing a linear function in correspondence of at least four points; and

a bitstream writer configured to prepare a bitstream based on the FD representation of the information signal or a processed version thereof.

In examples, the MDCT tool is configured to scale time input buffers and/or cosine values with values of the analysis windowing function.

In examples, the MDCT tool is configured to use input buffers in the form of

$$t(n) = x(Z - N_F + n) \; for \; n = 0..2N_F - 1 - Z,$$

wherein $x(n)$ is a TD sample of the information signal or a processed version of the information signal at the time instant $n$, $N_F$ is the number of samples processed in one frame, and Z is the number of leading zeros in MDCT window.

In examples, an initialization may be performed as:

$$t(2N - Z + n) = 0 \; for \; n = 0..Z - 1$$

In examples, the MDCT (or MDST) tool is configured to perform:

$$X(k) = \sqrt{\frac{2}{N_F}} \sum_{n=0}^{2N_F-1} w_N(n) \cdot t(n) \cos\left[\frac{\pi}{N_F}\left(n + \frac{1}{2} + \frac{N_F}{2}\right)\left(k + \frac{1}{2}\right)\right] \; for \; k = 0..N_F - 1$$

where $X(k)$ is the MDCT (or MDST) frequency value at a frequency index k, $n$ is the time instant, $w_N(n)$ is the analysis windowing function, t(n) is a time input buffer, and $N_F$ is the number of samples processed in one frame.

In examples, there is provided an apparatus which comprises a bitstream reader configured to read a bitstream encoding the information signal; and

an inverse modified cosine transformation, IMDCT (or IMDST), tool, configured to perform an IMDCT (or IMDST) synthesis on the information signal, or a processed version thereof, using a synthesis windowing function having a meandering portion crossing a linear function in correspondence of at least four points.

In examples, the IMDCT (or IMDST) tool is configured to scale values at a time domain aliasing buffer with values of the synthesis windowing function.

In examples, the IMDCT (or IMDST) tool is configured to generate a time domain, TD, signal representation in the form of

$$\hat{t}(n) = \sqrt{\frac{2}{N_F}} \sum_{k=0}^{N_F-1} \hat{X}(k) \cos\left[\frac{\pi}{N_F}\left(n + \frac{1}{2} + \frac{N_F}{2}\right)\left(k + \frac{1}{2}\right)\right] \ for \ n = 0..2N_F - 1$$

wherein $\hat{t}(n)$ is an aliasing buffer, $\hat{X}(k)$ is the information signal or a processed version thereof, and $N_F$ is the number of samples for a TD frame.

In examples, the IMDCT (or IMDST) tool is configured to perform a windowing of the time-aliased buffer.

In examples, the IMDCT (or IMDST) tool is configured to perform a windowing operation by performing:

$$\hat{t}(n) = w_N(2N - 1 - n) \cdot \hat{t}(n) \ for \ n = 0..2N_F - 1$$

In examples, the IMDCT (or IMDST) tool is configured to perform an overlap-and-add operation, which may be, for example, as:

$$\hat{x}(n) = mem\_ola\_add(n) + \hat{t}(Z + n) \ for \ n = 0..N_F - Z - 1$$

$$\hat{x}(n) = \hat{t}(Z + n) \ for \ n = N_F - Z..N_F - 1$$

$$mem\_ola\_add(n) = \hat{t}(N_F + Z + n) \ for \ n = 0..N_F - Z - 1$$

wherein $\hat{x}(n)$ is the output value, $\hat{t}(.)$ is a windowed time-aliasing buffer, and $N_F$ is the number of samples in one frame.

In examples, the analysis windowing function and/or the synthesis windowing function is defined so as to be, in the meandering portion:

greater than the linear function in a first interval between a first crossing point and a second crossing point;

lower than the linear function in a second interval between the second crossing point and a third crossing point;

greater than the linear function in a third interval between the third crossing point and a fourth crossing point.

In examples, the analysis windowing function and/or the synthesis windowing function is defined so that the absolute maximum value is in the first or third interval.

In examples, the analysis windowing function and/or the synthesis windowing function is defined so that, in the meandering portion, a relative maximum value is in the first or third interval and a relative minimum value is in the second interval.

In examples, the analysis windowing function and/or the synthesis windowing function is defined so that, in the meandering portion, the value of the meandering window function in correspondence to at least one of the first and third interval is greater than 0.9.

In examples, the analysis windowing function and/or the synthesis windowing function is defined so as to present, in the meandering portion, a value greater than the linear function in an interval comprised of the 30% and 50% of two frames.

In examples, the analysis windowing function and/or the synthesis windowing function is defined so that the maximum of the analysis windowing function and/or the synthesis windowing function is less than 25% (in particular 5%) greater than the value of the linear function at the same time instant.

In examples, the analysis windowing function and/or the synthesis windowing function is defined so as to present a second numerical differentiation is between $-3*10^{-4}$ and $+3*10^{-4}$ and/or the third numerical differentiation is between $-2*10^{-5}$ and $+2*10^{-5}$.

In examples, the linear function is defined so as to have a value which is constant or varies of maximum +2% or -2%.

In examples, the linear function is defined so as to have increments between -0.05 and -0.20.

In examples, the analysis windowing function and/or the synthesis windowing function is defined so as to be asymmetric.

In examples, the analysis windowing function and the synthesis windowing function is defined are symmetric with each other.

In examples, a storage space to store the values of the analysis windowing function and/or the synthesis windowing function.

In examples, there is provided a system comprising:

an encoder as an apparatus as above and/or below; and

a decoder as an apparatus as above and/or below.

In examples, the encoder comprise a communication unit configured to transmit a bitstream and/or the decoder comprises a communication unit configured to receive a bitstream.

In examples, there is also provided a method comprising performing an MDCT (MDST), analysis for transforming a time domain, TD, representation of an information signal, or a processed version thereof, into a frequency domain, FD, representation, using an analysis windowing function having a meandering portion which passes a linear function in correspondence of at least four points.

In examples, there is also provided a method comprising performing an MDCT (or MDST), synthesis for transforming a frequency domain, FD, representation of an information signal, or a processed version thereof, into a time domain, TD, representation, using a synthesis windowing function having a meandering portion which passes a linear function in correspondence of at least four points.

In has been noted that the analysis and/or synthesis windowing functions used for the invention are particularly suitable for performing MDCT (or MDST) synthesis and analysis.

Examples of analysis/synthesis windowing functions for modulated lapped transformation and methods and apparatus for using them are disclosed hereinafter.

3. Description of the drawings

Fig. 1 and 2 show schemes according to the prior art.

Fig. 3-12 show schemes of the functions according to examples.

Figs. 13 and 13A show encoders according to examples.

Fig. 14 and 14A shows decoders according to examples.

Figs. 15 and 16 show methods according to examples.

Figs. 17 and 18 show apparatus according to examples.

Fig. 19 shows a scheme according to examples.

Fig. 20 shows a scheme according to the prior art.

Figs. 21-25 shows schemes according to examples.

4. Examples

An information signal may be described in the time domain, TD, as a succession of samples (e.g., $x_b(n)$ for a block b and index, e.g., instant, n). The TD representation may be made of a plurality of frames, each associated to a plurality of samples. In the frequency domain, FD, a frame may be represented as a succession of bins (e.g., X (k), each associated to a particular frequency (each frequency being associated to an index k).

It is possible to convert a TD representation into an FD representation using a modulated lapped transform technique (such as a modified discrete cosine transform, MDCT, technique or a modified discrete sine transform, MDST, technique, for example). Such a technique may be implemented, for example, at an encoder side, so as to transform sampled values into frequency values.

It is possible to convert an FD representation into a TD representation using an inverse modulated lapped transform technique (such as an inverse modified discrete cosine transform, IMDCT, technique or an inverse modified discrete sine, IMDST, technique). Such a technique may be implemented, for example, at a decoder side, so as to transform frequency values into TD values (e.g., for performing reproduction).

The table below indicates symbols used in the following sections.

| Symbol | Description |
| --- | --- |
| $N$ or $N_F$ | Frame size; number of sample processed in one frame |
| $f_s$ | Sampling rate |
| $x_b(n)$ | Time domain sample of block b and index n |
| $X_b(k)$ | Frequency domain bin of block b and frequency index k |
| $Z$ or $L_Z$ | Number of leading zeros in MDCT window |

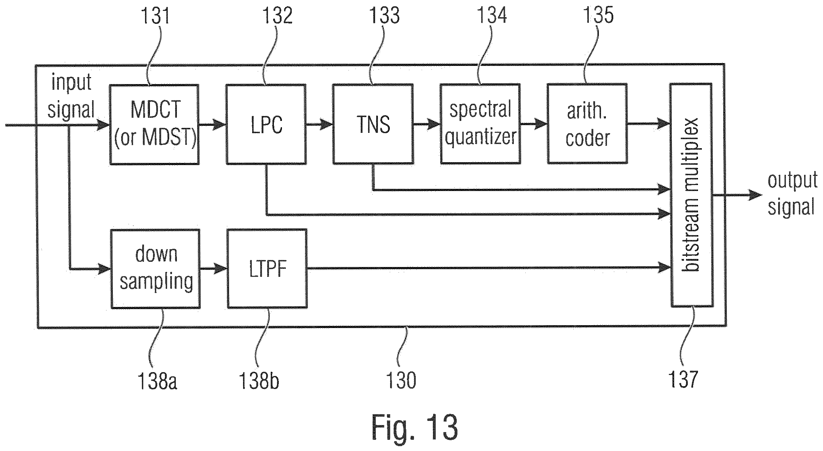

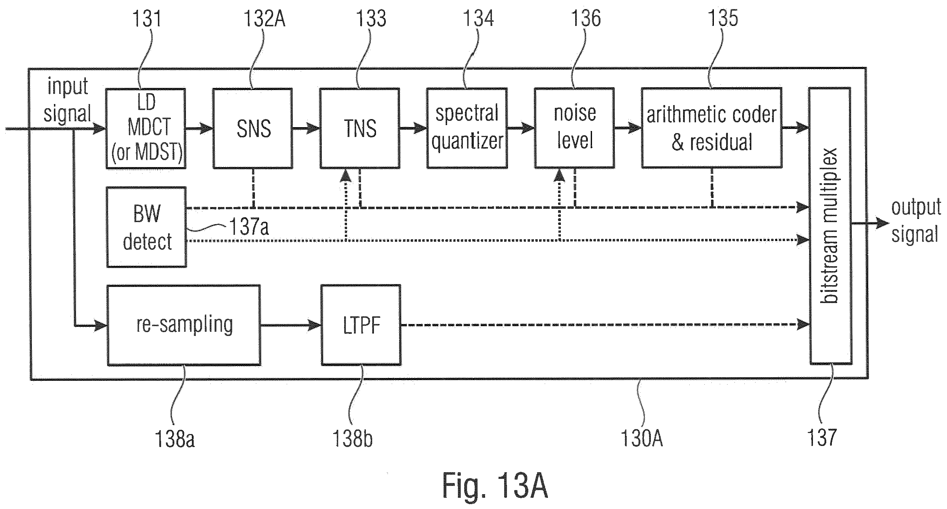

Figs. 13 and 13A show encoder apparatus 130 and 130A, respectively. Each of the encoder apparatus 130 or 130A may comprise a plurality of tools, such as functional blocks capable of performing signal processing techniques. Each of these blocks may be a standalone device or may be a functional block which divides a hardware structure with other tools of the encoder apparatus 130 and 130A.

The encoder apparatus 130 or 130A may comprise a modulated lapped transform tool 131 (such as a low delay modified discrete cosine transform, MDCT, tool, or a low delay modified discrete sine transform, MDST, tool, or another type of modulated lapped transform tool) which may convert an information signal (e.g., an audio signal) from a time domain, TD, representation to a frequency domain, FD, representation. The modulated lapped transform tool 131 (e.g., MDCT or MDST tool) performs modulated lapped transform analysis (e.g., an MDCT analysis, MDST analysis).

Other tools may be provided. e.g., downstream to the modulated lapped transform tool 131 or operating in TD. Some of them are here mentioned.

The encoder apparatus 130 may comprise a linear predictive coding, LPC, tool 132 for performing an LPC analysis in the FD. The encoder apparatus 130A may comprise a spectral noise shaping, SNS, tool 132A for performing an LPC analysis in the FD.

SNS may be seen as a generalization of LPC and, therefore, in some examples, the LPC block 132 may be seen as a particular example of the SNS tool 132A (and the encoder apparatus 130 may be seen as a particular example of the encoder apparatus 130A).

Each of the encoder apparatus 130 and 130A may comprise a temporal noise shaping, TNS, tool 133, to control the temporal shape of noise within each window of the information signal (e.g., as output by the modulated lapped transform tool) in the FD.

Each of the encoder apparatus 130 and 130A may comprise a spectral quantizer 134 processing signals in the in the FD. The signal as output by the TNS tool 133 may be quantized, e.g., using dead-zone plus uniform thresholds scalar quantization.

Each of the encoder apparatus 130 and 130A may comprise a noise level estimator 136, e.g., downstream to the spectral quantizer 134.

Each of the encoder apparatus 130 and 130A may comprise a coder 135 processing signals in the FD, for example, to perform entropy coding, e.g., to compress a bitstream. The coder 135 may, for example, perform entropy coding.

Each of the encoder apparatus 130 and 130A may comprise a bandwidth detector 137a which may control, for example, a bandwidth controller at the decoder.

Each of the encoder apparatus 130 and 130A may comprise tools which process signals in the time domain, TD. For example, the encoder apparatus 130 or 130A may comprise a re-sampling tool 138a (e.g., a downsampler) and/or a long term postfiltering, LTPF, tool 138b, for controlling an LTPF active in TD at the decoder side.

Each of the encoder apparatus 130 and 130A may comprise a bitstream multiplexer tool (bitstream writer) 137 to prepare a bitstream with data obtained from TD and/or FD tools placed upstream. The bitstream may comprise a digital representation of an information signal together with control data to be used at the decoder side. The bitstream may be compressed or include portions which are compressed.

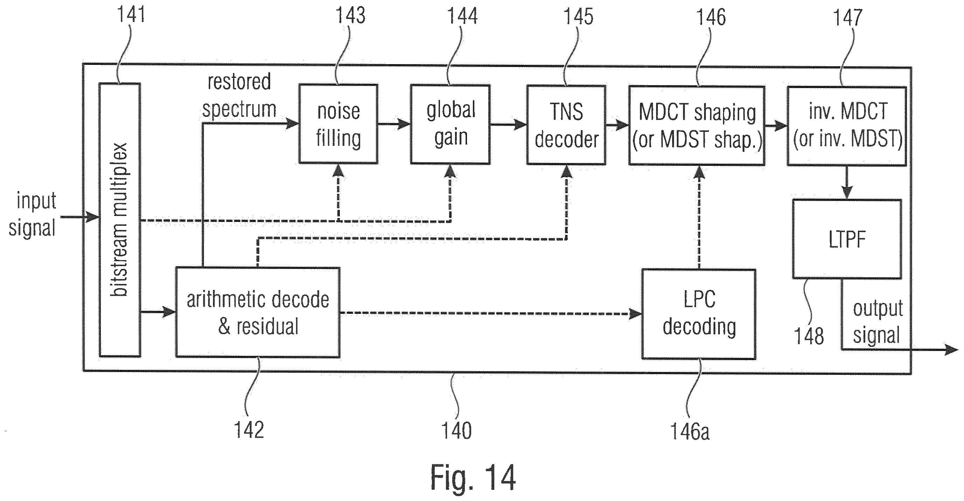

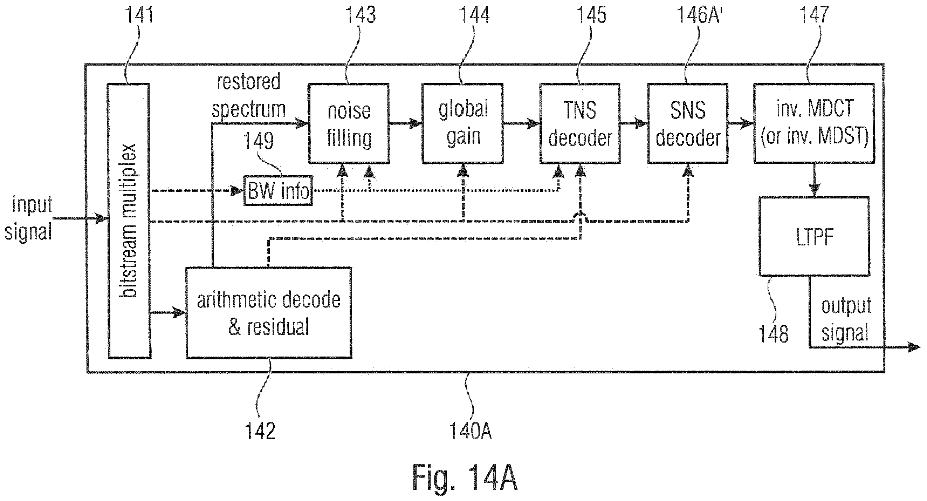

Fig. 14 and 14A show decoder apparatus 140 and 140A, respectively. Each of them may decode a digital representation of an information signal, e.g., as encoded by the encoder 130 or 130A, for example.

Each of the decoder apparatus 140 and 140A may comprise an inverse modulated lapped transform tool 147 (e.g., a low delay inverse MDCT tool or a low delay inverse DMST tool) to transform signal representations from FD to TD. The modulated lapped transform tool 147 performs a modulated lapped transform synthesis (e.g., an MDCT synthesis and/or an MDST synthesis, etc.).

Other tools may be provided, e.g., upstream to the inverse modulated lapped transform tool 147 or operating in TD. Some of them are here mentioned.

Each of the decoder apparatus 140 and 140A may comprise a bitstream multiplex tool 141 to obtain a bitstream (e.g., by transmission) from an encoder apparatus (e.g., the apparatus 130 or 130A). For example, an output from the encoder apparatus 130 or 130A may be provided as an input signal to the decoder apparatus 140 or 140A.

Each of the decoder apparatus 140 and 140A may comprise a decoder 142 which may, for example, decompress data in the bitstream. Arithmetic decoding may be performed. A residual decoding may be performed.

Each of the decoder apparatus 140 and 140A may comprise a noise filling tool 143 processing signals in the FD.

Each of the decoder apparatus 140 and 140A may comprise a global gain tool 144 processing signals in the FD.

Each of the decoder apparatus 140 and 140A may comprise a TNS decoder tool 145 processing signals in the FD.

The decoder apparatus 140 may comprise an MDCT (or MDST) shaping tool 146 (other lapped transformation tools are possible). The MDCT (or MDST) shaping tool 146 may process signals by applying gain factors computed from decoded LP filter coefficients (obtained from an LPC decoding tool 146a, for example) transformed to the FD spectrum (e.g., MDCT or MDST spectrum, etc.).

The decoder apparatus 140A may comprise an SNS decoder tool 146A', for example, obtaining LPC coefficients from the SNS tool 132A.

Each of the decoder apparatus 140 and 140A may comprise an LTPF tool 148 for performing a postfilter in the TD.

The decoder apparatus 140A may comprise a decoder bandwidth controller 149 which may obtain bandwidth information from the bandwidth detector 137a, for example.

The encoder apparatus 130 (or 130A) and the decoder apparatus 140 (or 140A) may be composed to each other to form a system.

Basically, the tools downstream to the modulated lapped transform tool 131 in the encoder apparatus 130 or 130A and the tools upstream to the inverse modulated lapped transform tool 147 in the decoder apparatus 140 or 140A may perform signal processing in the FD and are therefore FD tools.

Techniques are here discussed regarding the conversion techniques, e.g., at the tools 131 and 147.

In general terms, the MDCT, MDST, etc., are discrete transforms which have the additional property of being lapped transforms. One of these transforms is performed on consecutive blocks of a larger dataset (e.g., two consecutive frames). Subsequent blocks may be overlapped. Accordingly, a last part of one block may coincide with a first part of a subsequent block. A windowing function $w_n$ (n = 0, ..., 2N-1) may be used. In particular, the windowing function may be used as a weight. An advantage is that it is possible to avoid or reduce discontinuities at the borders of the blocks.

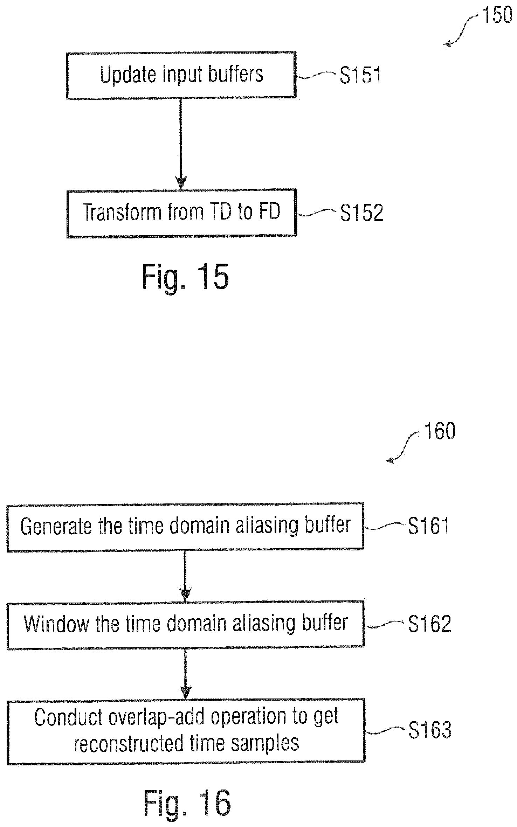

Fig. 15 shows a method 150 for performing a modulated lapped transform analysis, e.g., at the modulated lapped transform tool 131 (which may be a MDCT tool). The input signal $x_b(n)$ of the current frame b may consist of N audio samples, where the newest one is located at $x_b(N - 1)$.

At step S151, input buffers may be updated. The time input buffer for the modulated lapped transform t may be updated according to

$$t(n) = x_{b-1}(Z + n) \ \text{for} \ \ n = 0..N - 1 - Z$$

$$t(N - Z + n) = x_b(n) \ \text{for} \ \ n = 0..N - 1$$

$$t(2N - Z + n) = 0 \ \ \text{for} \ \ n = 0..Z - 1$$

The latter is an initialization just required for consistency.

At step S152, a block of N time samples may be transformed to frequency coefficients X(k) using the following

equation:

$$X(k) = \sqrt{\frac{2}{N}} \sum_{n=0}^{2N-1} w_N(n) \cdot t(n) \cos\left[\frac{\pi}{N}\left(n + \frac{1}{2} + \frac{N}{2}\right)\left(k + \frac{1}{2}\right)\right] \text{ for } k = 0..N-1$$

where $w_N$ is an asymmetric modulated lapped transform window (e.g., MDCT window) according to the used frame size.

Fig. 16 shows a method 160 for performing a modulated lapped transform synthesis (e.g., MDCT synthesis), e.g., at the modulated lapped transform tool 147 (which may be an IMDCT tool). Here, a spectrum $\widehat{X_b}(k)$ (i.e., a representation in the FD) may be transformed to TD by the following steps:

At step S161, a generation of time domain aliasing buffer $\widehat{x_{T,b}}(n)$ of frame b may be performed. For example:

$$\widehat{x_{T,b}}(n) = \sqrt{\frac{2}{N}} \sum_{k=0}^{N-1} \widehat{X_b}(k) \cos\left[\frac{\pi}{N}\left(n + \frac{1}{2} + \frac{N}{2}\right)\left(k + \frac{1}{2}\right)\right] \text{ for } n = 0..2N-1$$

At step S162, windowing of time domain aliasing buffer may be performed. For example:

$$\widehat{x_{w,b}}(n) = w_N(2N-1-n) \cdot \widehat{x_{T,b}}(n) \text{ for } n = 0..2N-1$$

At step S163, overlap-add operation to get reconstructed time samples $\widehat{X_b}(n)$ of frame b may be conducted. For example:

$$\widehat{x_b}(n) = \widehat{x_{w,b-1}}(N+Z+n) + \widehat{x_{w,b}}(Z+n) \text{ for } n = 0..N-Z-1$$

$$\widehat{x_b}(n) = \widehat{x_{w,b}}(Z+n) \text{ for } n = N-Z..N-1$$

Notably, the windowing function $w_N(n)$ at the analysis (analysis windowing function) and the windowing function $w_N(2N - 1 - n)$ at the synthesis (synthesis windowing function) may be defined so as to be time reversed with each other. The window coefficients of the analysis and synthesis window are time reversed versions of each other.

It has been noted that a particularly effective windowing function (e.g., synthesis windowing function) may be an analysis windowing function having a meandering portion crossing a linear function in correspondence of four points.

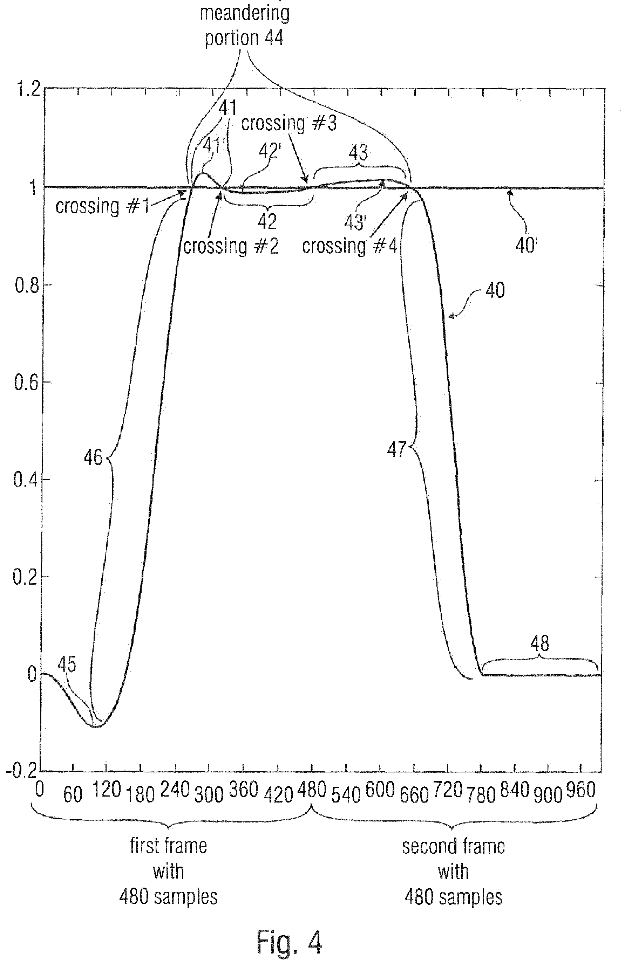

Fig. 4 shows an analysis windowing function 40. The analysis windowing function 40 may be defined between 0 and 2N or between 0 and a value intermediate between the 80% and the 85% or 90% of 2N (e.g., 81.25%). In some examples, the analysis windowing function 40 may be defined in a different (e.g., broader) range.

The analysis windowing function 40 may be defined, at least for one portion, with reference to a linear function 40'. In Fig. 4, the linear function 40' is a constant function whose value is 1. However, the linear function 40' may be in general a linear function, e.g., defined in terms of y = an + b, where n is the index between the 0 and 2N (or its non-zero portion) and a and b are constants.

The analysis windowing function 40 may comprise a meandering portion 44. The meandering portion 44 may be so that the analysis windowing function 40 encounters and/or crosses the linear function 40' at four points #1, #2, #3, #4.

The meandering portion 44 may be so that the analysis windowing function 40 is different from the linear function 40' at the majority of indexes e.g., for more than the 99% of the indexes.

The meandering portion 44 may be so that, at least at one index immediately preceding one of the indexes associated to the points (crossing points) #1, #2, #3, #4, the value of the analysis windowing function 40 is greater than the value at the point (#1, #2, #3, of #4), and, at least at the index immediately subsequent the same index (associated to the point), the value of the analysis windowing function 40 is smaller than the value at the point. The meandering portion 44 may be so that, at least at one index immediately preceding one of the indexes associated to the crossing points #1, #2, #3, #4, the value of the analysis windowing function 40 is smaller than the value at the crossing point (#1, #2, #3, of #4), and, at least at the index immediately subsequent the same index (associated to the point), the value of the analysis windowing function 40 is greater than the value at the crossing point.

The meandering portion 44 may be such that each of the crossing points #1, #2, #3, #4 is not immediately consecutive with the previous and the following ones. For example, between two crossing points #1, #2, #3, and #4, there is at least one index of the analysis windowing function 40 whose value does not coincide with the value of the analysis windowing function 40 at the same index.

The analysis windowing function 40 may be defined so as to be, in correspondence to the meandering portion 44:

- greater than the linear function 40' in a first interval 41 between a first crossing point #1 and a second crossing point #2;

- lower than the linear function 40' in a second interval 42 between the second crossing point #2 and a third crossing point #3;

- greater than the linear function 40' in a third interval 43 between the third crossing point #3 and a fourth crossing point #4.

The first crossing point #1 may precede the second crossing point #2, which may precede the third crossing point #3, which may precede the fourth crossing point #4.

The analysis windowing function 40 may also comprise an initial decreasing portion 45, in which a negative minimum may be reached. The negative minimum may be localized between the 6.25% of 2N and the 18.75% of 2N. The analysis windowing function 40 may also comprise a rapidly increasing portion 46, rapidly increasing from the negative minimum towards the meandering portion 44. The analysis windowing function 40 may also comprise a rapidly decreasing portion 47, rapidly decreasing from the meandering portion 44 to 0. The analysis windowing function 40 may also comprise a constantly null portion 48, which may start between the 80% and the 85% or 90% of 2N (size of two frames) and continue to the end of 2N.

The absolute maximum value 41' is in the first interval 41 (or in the third interval). The analysis windowing function 40 may, in the meandering portion 44, have a relative maximum value 43' in the third interval 43 (or in the first interval) and a relative minimum value 42' is in the second interval 42.

The analysis windowing function 40 may, in the meandering portion 44, have the values of the meandering window function 40 in correspondence to the second interval 42 greater than 0.9. The second interval 42 may be above 0.9.

The analysis windowing function 40 may present, in the meandering portion 44, a value lower than the linear function 40' in an interval comprised of the 30% and 50% of two frames (2N). In examples, after the 50% of two frames (2N), the windowing function 40 may greater than the linear function 40'. Hence, point #3 may be in correspondence to the last index of the first frame or in correspondence to the first index of the second frame. In the interval 30% to 50%, the meandering window portion 44 may be below the linear function.

The maximum 41' of the meandering window function 44 may be less than 25% (and preferably less than 5%) greater than the value of the linear function 40' at the same index n.

The analysis windowing function 40 may present a first numerical differentiation between 0.02 and -0.02. The second numerical differentiation may be between $-5*10^{-4}$ and $+5*10^{-4}$, and preferably between $-3*10^{-4}$ and $+3*10^{-4}$. The third numerical differentiation may be between $-2*10^{-5}$ and $+2*10^{-5}$.

The linear function 40' may be a non-increasing function. In their examples, the linear function 40' may be a non-decreasing function. The linear function 40' may have a value which is constant or varies of maximum +2% or -2%.

The analysis windowing function may be defined so as to be asymmetric.

In some examples, the analysis windowing function may be such that some of the interval (subsections) of the meandering portion 44 are in reverse order.

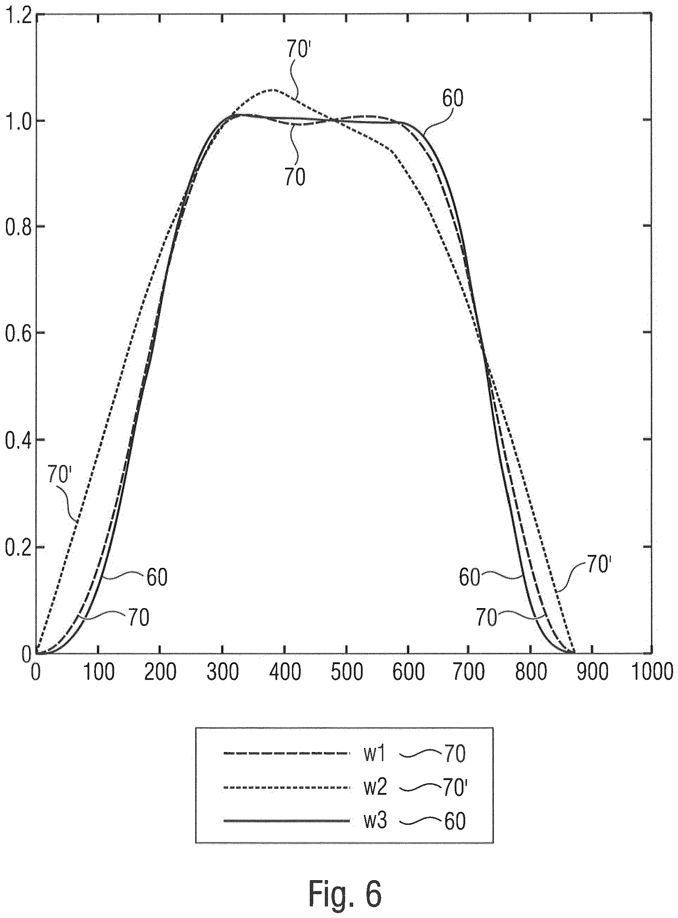

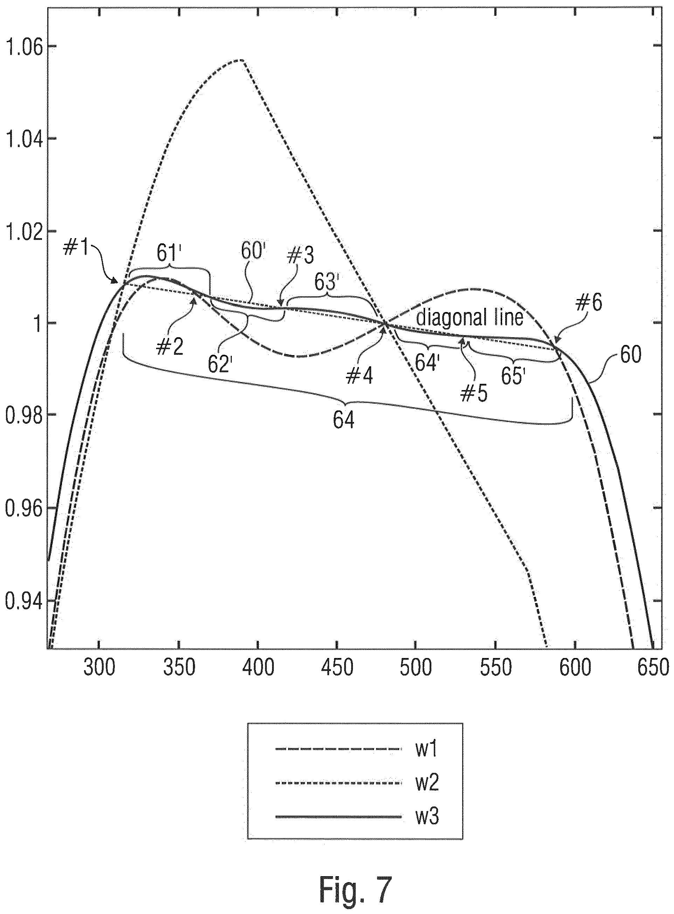

Fig. 6 shows another example of analysis windowing function 60. Fig. 7 shows an enlarged view of the analysis windowing function 60 in correspondence of a meandering portion 64.

In this case, the analysis windowing function 60 may be defined, at least for one portion, with reference to a linear function 60'. In Fig. 7, the linear function 60' is a linear decreasing function ("diagonal line").

The meandering portion 64 may be so that the analysis windowing function 60 encounters and/or crosses the linear function 60' at four points.

The analysis windowing function 40 may be defined so as to be, in correspondence to the meandering portion 64:

- greater than the linear function 60' in a first interval 61' between a first crossing point #1' and a second crossing point #2';

- lower than the linear function 60' in a second interval 62' between the second crossing #2' point and a third crossing point #3';

- greater than the linear function 60' in a third interval 63' between the third crossing point #3' and a fourth crossing point #4';

- lower than the linear function 60' in a fourth interval 64' between the fourth crossing point #4' and a fifth crossing point #5';

- greater than the linear function 60' in a fifth interval 65' between the fifth crossing point #5' and a sixth crossing point #6'.

The absolute maximum value may be in the first interval 61' (in other examples, e.g., where the linear function is increasing, may be in the fifth interval).

The analysis windowing function 60 may, in the meandering portion 64, have a relative maximum value in the third interval 63' and/or in the fifth interval 65', a relative minimum value being in the second interval 62' and/or in the fourth interval 64'.

The analysis windowing function 60 may, in the meandering portion 64, have the value of the windowing function in correspondence to at least one of the first and third interval greater than 0.9 and in particular 0.95 (in other examples, e.g., where the linear function is increasing, may be in the third and fifth interval).

The analysis windowing function 60 may present, in the meandering portion 64, a value greater than the linear function 60' in an interval comprised of the 30% and 50% of two frames (2N).

The maximum of the windowing function 60 may be less than 25% (and preferably less than 5%) greater than the value of the linear function 60 at the same index n.

The linear function 60' may be a non-increasing function, in particular a strictly decreasing function.

The analysis windowing function may be defined so as to be asymmetric.

In examples, the analysis windowing function may have the intervals which are reversed with respect to Fig. 6.

In examples, a synthesis windowing function may be construed to be symmetric with respect to the analysis windowing function. For example, the symmetry axis may be in the middle of the 2N range (479 or 480, for example).

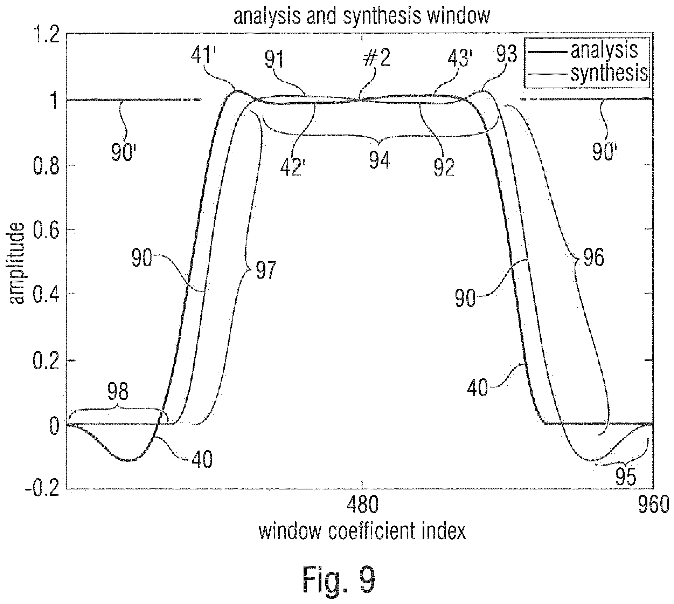

An example of synthesis windowing function 90 is provided in Fig. 9. The synthesis windowing function 90 may be defined between 0 and 2N or between a value intermediate between the 10% or 15% and the 20% of 2N and 2N.

The synthesis windowing function 90 may be defined, at least for one portion, with reference to a linear function (which in this case is not shown but is a constant value 1). In Fig. 9, the linear function may be a constant function whose value is 1. However, the linear function may be in general a linear function, e.g., defined in terms of $y=an+b$.

The synthesis windowing function 90 may comprise a meandering portion 94. The meandering portion 94 may be so that the synthesis windowing function 90 encounters and/or crosses the linear function 90' (constant 1, only partially shown for the sake of clarity) at four crossing points #1, #2, #3, #4 (only #2 being illustrated). The window functions cross the value 1 in the middle of the window (point #2), i.e. between sample N-1 and N.

The meandering portion 94 may be so that the synthesis windowing function 90 is different from the linear function 90' at the majority of indexes e.g., for more than the 99% of the indexes.

The meandering portion 94 may be so that, at least at one index immediately preceding one of the indexes associated to the points #1, #2, #3, #4, the value of the synthesis windowing function 90 is greater than the value at the point (#1, #2, #3, of #4), and, at least at the index immediately subsequent the same index (associated to the point), the value of the synthesis windowing function 90 is smaller than the value at the point. The meandering portion 94 may be so that, at least at one index immediately preceding one of the indexes associated to the points #1, #2, #3, #4, the value of the synthesis windowing function 90 is smaller than the value at the point (#1, #2, #3, of #4), and, at least at the index immediately subsequent the same index (associated to the point), the value of the synthesis windowing function 90 is greater than the value at the point (#1, #2, #3, of #4).

The meandering portion 94 may be such that each of the points #1, #2, #3, #4 is not immediately consecutive with another of the points #1, #2, #3, #4. For example, between two points of #1, #2, #3, and #4, there may be at least one index of the synthesis windowing function 90 whose value does not coincide with the value of the synthesis windowing function 90 at the same index.

The synthesis windowing function 90 may be defined so as to be, in correspondence to the meandering portion 94:

- greater than the linear function 90' in a first interval 91 between a first crossing point #1 (not shown in Fig. 9, but representable as symmetrical to point #4 in Fig. 4) and a second crossing point #2 (which, in this case, is at the 480th sample, e.g., in the middle of the 2N range);

- lower than the linear function 90' in a second interval 92 between the second crossing point #2 and a third crossing point #3 (not shown in Fig. 9, but representable as symmetrical to point #3 in Fig. 4);

- greater than the linear function 90' in a third interval 93 between the third crossing point #3 and a fourth crossing point #4 (not shown in Fig. 9, but representable as symmetrical to point #1 in Fig. 4).

The synthesis windowing function 90 may also comprise a constantly null portion 98, which may be located between the 10% and the 15% of 2N. The synthesis windowing function 90 may also comprise a rapidly increasing portion 97, rapidly increasing towards the meandering portion 94 from 0. The synthesis windowing function 90 may also comprise a rapidly decreasing portion 96, rapidly decreasing towards a negative minimum from the meandering portion 44. The negative minimum may be localized between the 81.25% of 2N and the 93.7% of 2N. The synthesis windowing function 90 may also comprise a final increasing portion 95, which reaches 0 from the negative minimum.

The absolute maximum value may be in the third interval 91 (or in the first interval).

The synthesis windowing function 90 may, in the meandering portion 94, have a relative maximum value in the first interval 91 (or in the first interval) and a relative minimum value is in the second interval.

The synthesis windowing function 90 may, in the meandering portion 94, have the value of the meandering window function in correspondence to at least one of the first and third interval (91, 93) greater than 0.9. The third interval may be above 0.9.

The synthesis windowing function 90 may present, in the meandering portion 94, a value greater than the linear function in an interval comprised of the 30% and 50% of two frames (2N).

The maximum of the synthesis windowing function 90 may be less than 25% (and preferably less than 5%) greater than the value of the linear function at the same index n.

The synthesis windowing function 90 may present a numerical differentiation between 0.02 and -0.02. The second numerical differentiation may be between $-5*10^{-4}$ and $+5*10^{-4}$, and preferably between $-3*10^{-4}$ and $+3*10^{-4}$. The third numerical differentiation may be between $-2*10^{-5}$ and $+2*10^{-5}$.

The synthesis linear function 90 may be a non-increasing function. In other examples, the synthesis linear function 90 may be a non-decreasing function. The synthesis linear function may 90 have a value which is constant or varies of maximum +2% or -2%.

The synthesis windowing function 90 may be defined so as to be asymmetric.

In some examples, the synthesis windowing function 90 may be a function symmetrical with respect to the shape shown in Fig. 9. E.g., the value at 0 would be the value which is at 960 in Fig. 9; the value at 1 would be the value which is at 959 in Fig. 9, and so on.

5. Discussion

It has been noted that this function has particularly interesting features which are extremely suited for the MDCT (or MDST or other) and IMDCT (or IMDST or other) techniques, in particular for audio coding.

As a metric for the smoothness of MDCT window shape, we use the numerical differentiation like

$$dw(t) = \frac{w(t+h) - w(t-h)}{2h} \quad \text{for } t = h..2N - 1 - h$$

Another metric in order to assess the quality of MDCT window is temporal shape of the quantization error which is described by

$$S_q(t) = w^2(t+N) + w^2(t) \quad \text{for } t = 0..N - 1$$

The quantization error may be introduced in the spectral domain as part of an audio coding process.

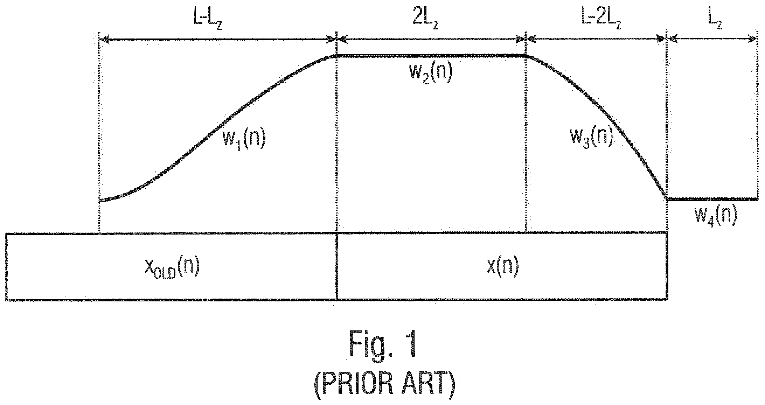

The ALDO window is here discussed. ALDO is a design approach for asymmetric window providing an improved temporal shape. The design process of the ALDO window as used in the EVS codec is described in (3GPP) and [2]. Fig. 1 shows a schematic window shape for a ALDO window scheme.

An ALDO window consists of four sections, a raising function, a section of strict ones, a decay function and zeros. The number of zeros in $w_4$ also determines the number of ones in $w_2$, with $w_2=2*w_4$. How to obtain $w_1$ and $w_3$ is described in [1] and [2].

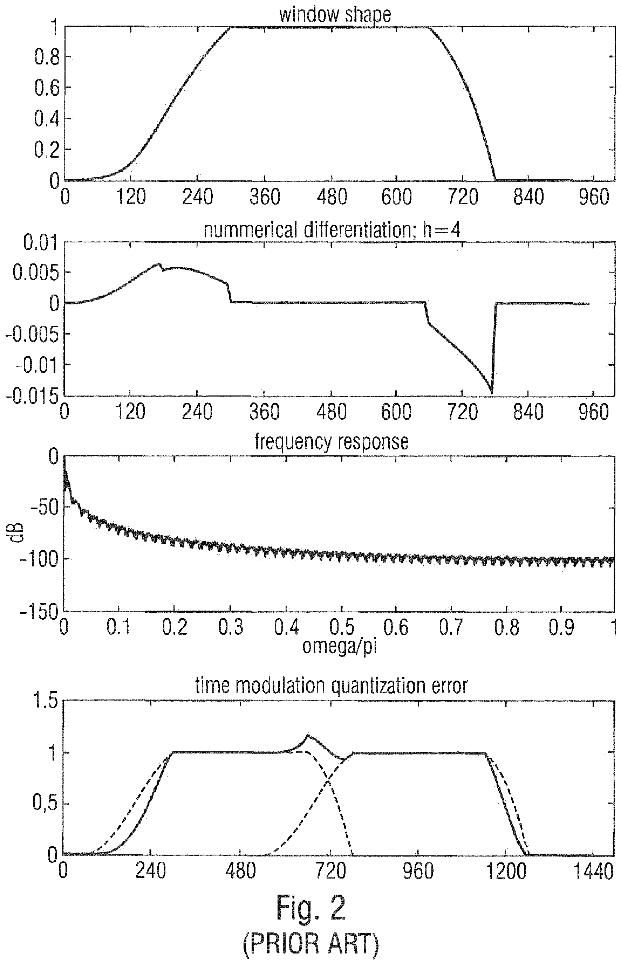

Figure 2 shows an ALDO window designed according to [1] and [2] for parameters Lz=180 (number of leading zeroes in the MDCT window, $W_4(n)$ in Fig. 1) and the total window length is 960 samples.

As can be seen in the fourth subplot of Fig. 2 ("Time modulation quantization error"), the ALDO shows a good temporal shape of the quantization error which mean the energy sum of two subsequent overlapping synthesis windows is close to one. The optimal result would require only ones which are achieved by symmetric window shapes.

The drawbacks of this design approach are mainly visible in the second subplot of Fig. 2 ("Numerical differentiation"), where the numerical differentiation is outlined. It can be seen that the window shape is a not a continuously differentiable mathematical function and is therefore non-optimal regarding the frequency response. Due to static ones in the window shape, smooth transitions coming from the raise function and going to the decay function are not possible.

The present invention breaks up with the design constraint to maintain a section of strict ones in order to optimize the temporal shape. Instead, the ones are replaced by a sequence of values meandering around a linear function (e.g., a constant value, such as "1"). This solution allows the smooth and continuous window shape while keeping the temporal shape close to an optimal state.

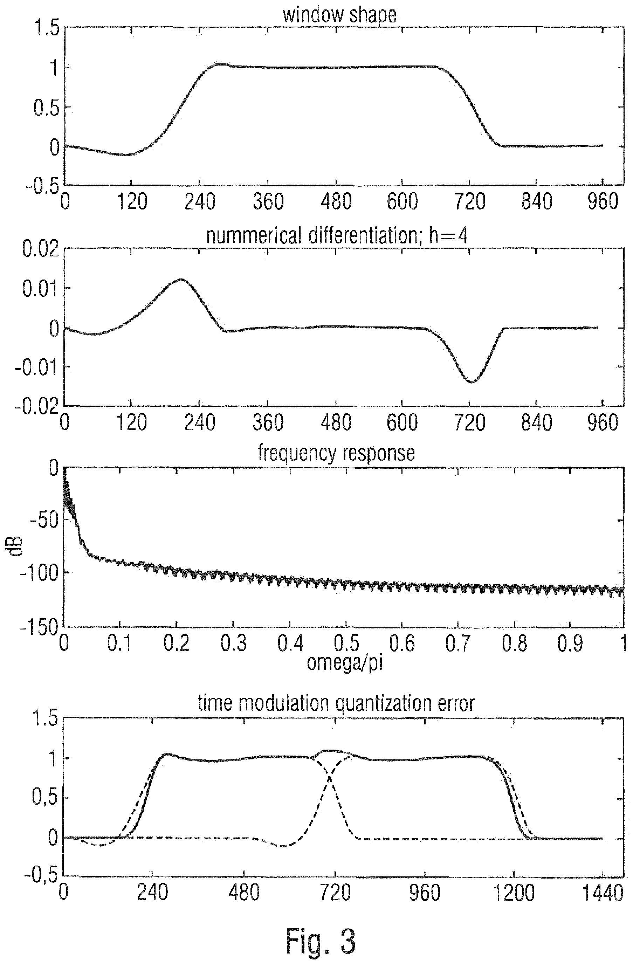

Fig. 3 shows an example window designed with a meandering section (portion) according to the invention. As can be seen in the fourth subplot of Fig. 3 ("Time modulation quantization error"), the window's property regarding the temporal shaping of the quantization error is similar to the ALDO window. However, comparing the second subplot of Fig. 3 ("Numerical differentiation") to second subplot of Fig. 2 (ALDO window), it may be understood that the invention permits to generate window shapes which are continuously differentiable. This enables for instance the design of window shapes with higher stop band attenuation, so far not possible with design process used for the ALDO window.

Fig. 4 outlines an example window shape 40 in more detail. In this example, the meandering section is based on crossing, in correspondence of four points, a linear function (in this case, a constant value "1"). Even a higher number of crossings is possible but four is considered as the minimum number.

Such a window can be the result of a mathematical optimization process combining one error function for the frequency response with and error function representing the deviation from the optimal temporal shaping of the quantization noise.

Some implementation required specific data formats, e.g. fix-point implementations. For such implementation, the value range of the window coefficients might be scales as values above one require a different scaling. In such cases, the meandering section might not be around one. Only after descaling, the values get into the obvious range.

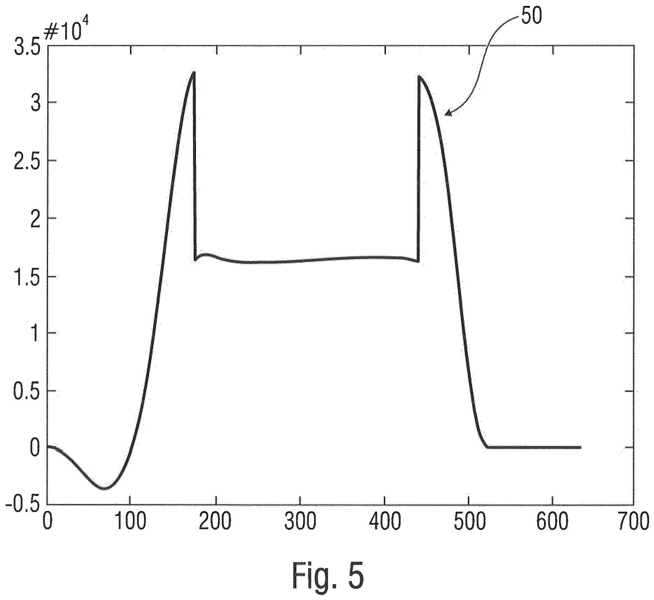

Fig. 5 shows an example how the MDCT window coefficients 50 are represented inside an fix-point implementation. It is an example representation where some values are scaled by $2^x$ and other by $2^{x-1}$ due to fix point architecture.

Considering a general case, the window does not necessarily meander around 1 but may meander around a virtual diagonal line without crossing the one. Fig. 6 shows three different windows, i.e.

- $w_1$: New optimized meandering around 1 (windowing function 70);
- $w_2$: G.718 window (not meandering at all) (windowing function 70');
- $w_3$: New optimized window for special case: Meandering around a diagonal(windowing function 60).

The described MDCT window fulfils the perfect reconstruction property. For that, we consider the MDCT to be decomposed as a windowing operation, a time domain alias cancellation (TDAC) step and a discrete cosine transform (DCT) type IV kernel, as for instance described in [3].

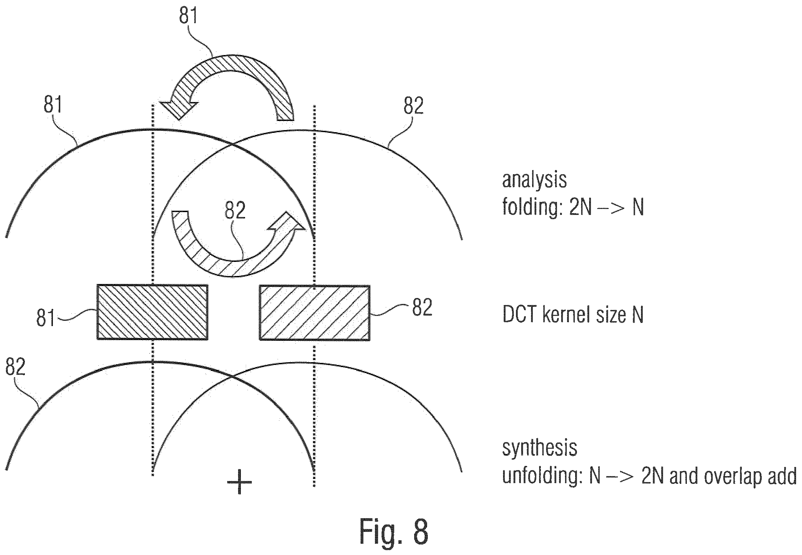

Therefore, the windowing and TDAC can be seen as a folding step on analysis and an unfolding step on synthesis side. At the latter one, the unfolded sequences of two blocks are combined in the overlap-and-add operation. See Fig. 8, which refers to a scheme of a block 1 (81) and a block 2 (82).

For the overlapping region on the analysis side, the windowing and TDAC of block 1 can be described as

$$P_1(n)=w_a(N+n)-w_a(2N-1-n) \qquad \text{for } n=0\ldots N-1$$

and block 2

$$P_2(n)=w_a(N+n)+w_a(N-1-n) \qquad \text{for } n=0\ldots N-1$$

For the syntheses side, P1 and P2 are folded-out, windowed and overlap-and-add is performed:

$$O(n)= w_s(N+n)P_1(n)+w_s(n)P_2(n) \qquad \text{for } n=0\ldots N-1$$

This can be written as

$$O(n)= w_a(N+n)w_s(N+n)-w_a(2N-1-n)w_s(N+n)+w_a(n)w_s(n)+w_a(N-1-n)w_s(n)$$

for n=0... N-1

which can be separated into two components:

PR1: Perfect reconstruction component

$$w_a(N+n)w_s(N+n)+w_a(n)w_s(n)=1$$

for n=0... N-1

- PR2: Alias cancellation component

$$w_a(N-1-n)w_s(n)-w_a(2N-1-n)w_s(N+n)=0$$

for n=0...N-1

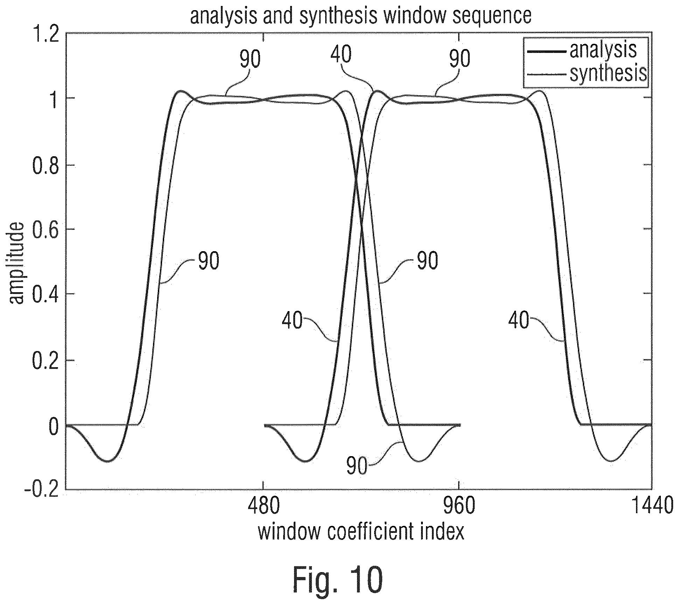

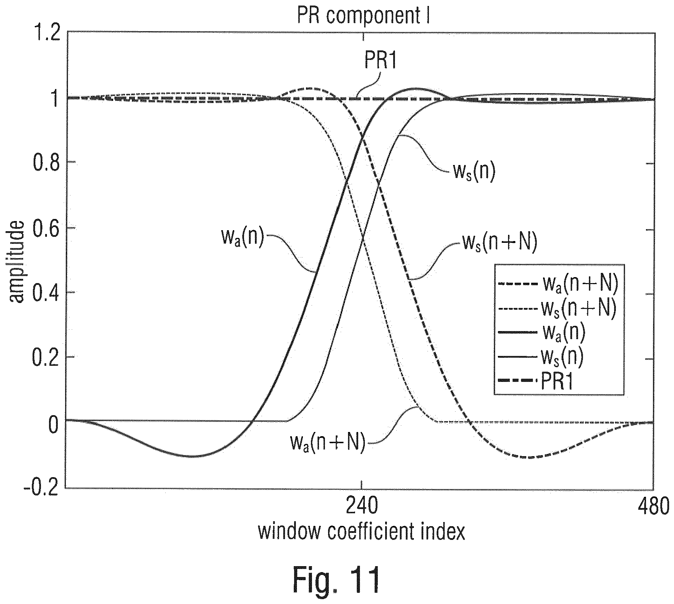

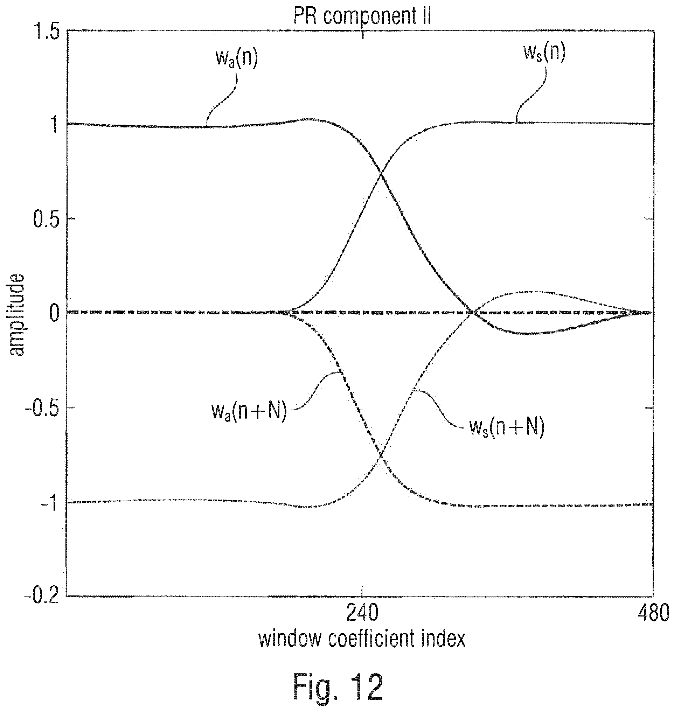

Figs. 9-12 show analysis and synthesis sequences.

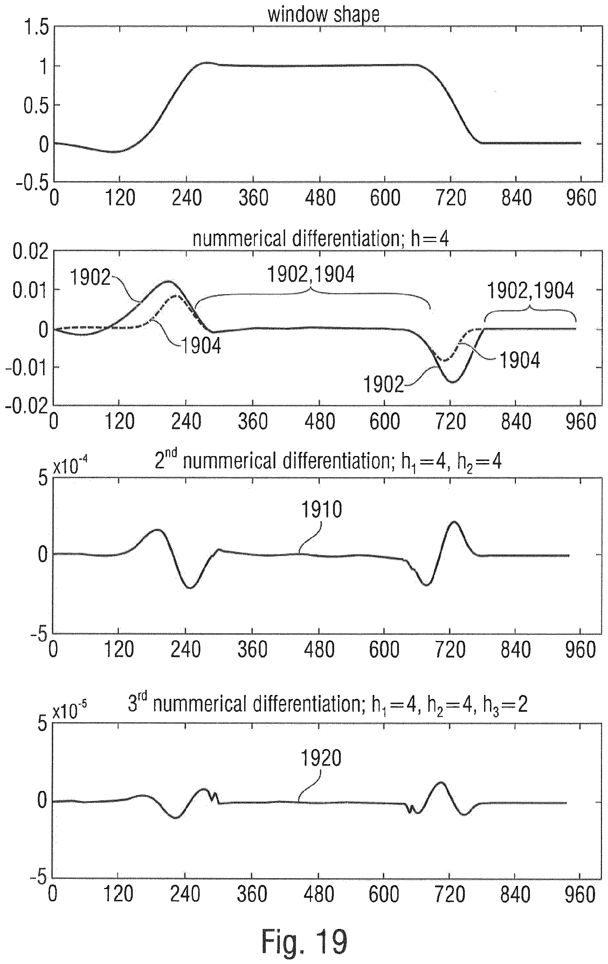

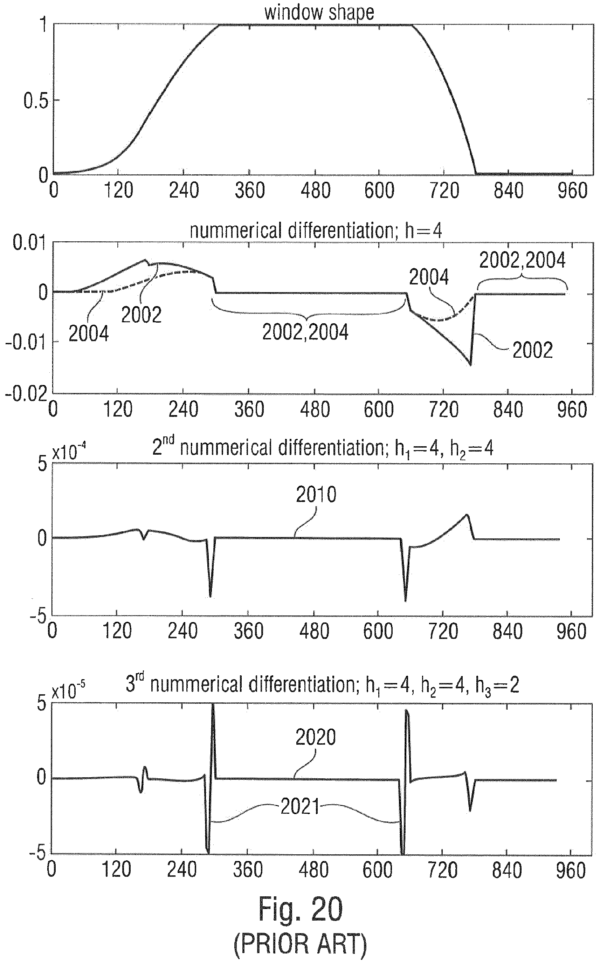

Reference is now made to Figs. 19 and 20 with reference to the numerical differentiation of the present analysis and synthesis windowing functions.

By considering also the 2nd and 3rd numerical differentiation, it is possible to clearly distinguish the properties of the present examples (in Fig. 19) with those of the prior art (ALDO, Fig. 20).

As a metric for the smoothness of modulated lapped transform window shape (e.g., MDCT or MDST window shape), we may use the numerical differentiation like:

$$dw(t) = \frac{w(t + h) - w(t - h)}{2h} \quad for\ t = h..2N - 1 - h$$

In order to weight the importance of each coefficient, i.e. higher amplitudes have a higher weight, the following describes a weighted

$$wdw(t) = dw(t)\ \frac{w(t + h) + w(t - h)}{2} \quad for\ t = h..2N - 1 - h$$

This allows neglecting low level window coefficients in the analysis of the continuity of the window shape.

In Figs. 19 and 20, the 1st numerical differentiation is plotted in the regular and weighted version (dashed). 1902 refers to the 1st numerical differentiation for the inventive windowing function; 1904 (dashed) refers to the weighted version of the 1st numerical differentiation for the inventive windowing function. 2002 refers to the 1st numerical differentiation for the ALDO windowing function; 2004 (dashed) refers to the weighted version of the 1st numerical differentiation for the ALDO windowing function.

For the 2nd and 3rd numerical differentiation (ND), the weighted version of the 1st one is used. 1910 refers to the weighted version of the 2nd numerical differentiation for the inventive windowing function. 2010 refers to the weighted version of the 2nd numerical differentiation for the ALDO windowing function. 1920 refers to the weighted version of the 3rd numerical differentiation for the inventive windowing function. 2020 refers to the weighted version of the 3rd numerical differentiation for the ALDO windowing function.

As can be observed, the 2nd ND version shows some clear peaks 2021 for the ALDO window while the inventive window shows only moderate changes. For the 3rd ND, also the amplitude level of both windows clear differentiate and can be expressed.

An analysis of the degree of freedom for window design for ALDO and for the inventive window function is here presented.

The ALDO design approach [2] offers only the parameters C1, C2 and the number of zeros Lz as degree of freedom. Any focus regarding near field or far field attenuation is not possible by the proposed method as the given degree of freedom in the design process is very limited.

In order to extend the ALDO algorithm and allowing a higher degree of freedom, the design approach in [2] has to be given up and has to be exchanged by a numerical optimization method. In a first step the section of strict ones in the middle of the window is maintained while the free window coefficients (or design parameter) are optimized.

Assuming that analysis and synthesis window are always time reversed versions of each other, the perfect reconstruction constraint can be expressed by

$$w_a(N+n)w_s(N+n)+w_a(n)w_s(n)=1 \quad \text{for } n=0\ldots N-1$$

$$\rightarrow w(N+n)w(2N-n)+w(n)w(N+n)=1 \quad \text{for } n=0\ldots N-1$$

This can always be fulfilled by restricting the number of free coefficients to 1.5N, e.g. by

$$w(2N-n) = (1- w(n)w(N+n)) / w(N+n) \quad \text{for } n=0\ldots N-1$$

The zero section is located inside w(2N-n). For the constraint of the strict ones in the middle, 2*Lz of the window coefficients are considered as non-free coefficients. For a transformation length of N=480 and a window size of 2N and Lz=180, this leads to a degree of freedom of 1.5N-2*Lz = 360 free coefficients. This window is referred to as intermediate window.

The new invention increases the degree of freedom to the maximum by exchanging the portion of strict ones by a meandering section (e.g., 44, 64, 94) around one or around any other linear (e.g., diagonal) line (e.g., 40', 60', 90'). Thus, only half of the middle section needs to be excluded from the free coefficients. Consequently, the number of available coefficients is increased to 1.5*480-180=540 free coefficients. This allows to maximally optimize the frequency response towards any indented focus.

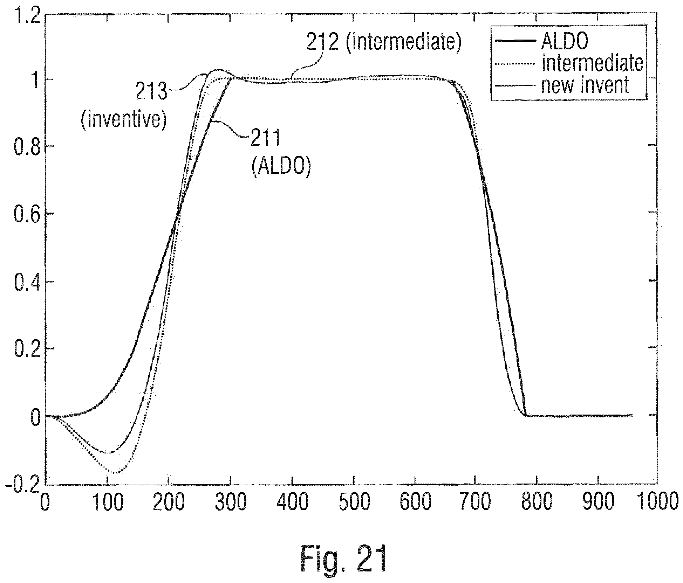

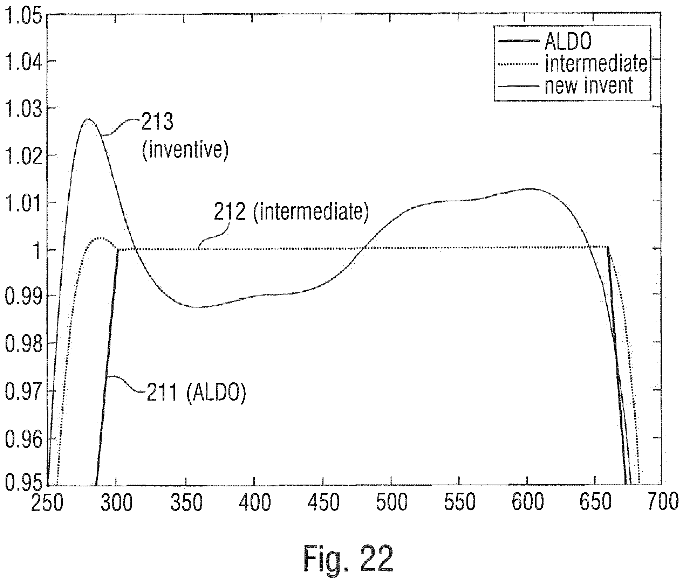

Figs. 21 and 22 show a comparison of the design approaches. In particular, Fig. 21 shows a comparison window shape ALDO (211) vs intermediate (212) vs new invention (213). Fig. 22 shows a zoom (enlarged view) of window shapes ALDO (211), intermediate (212), new invention (213).

The intermediate window and the new invention window are optimized towards the same focus.

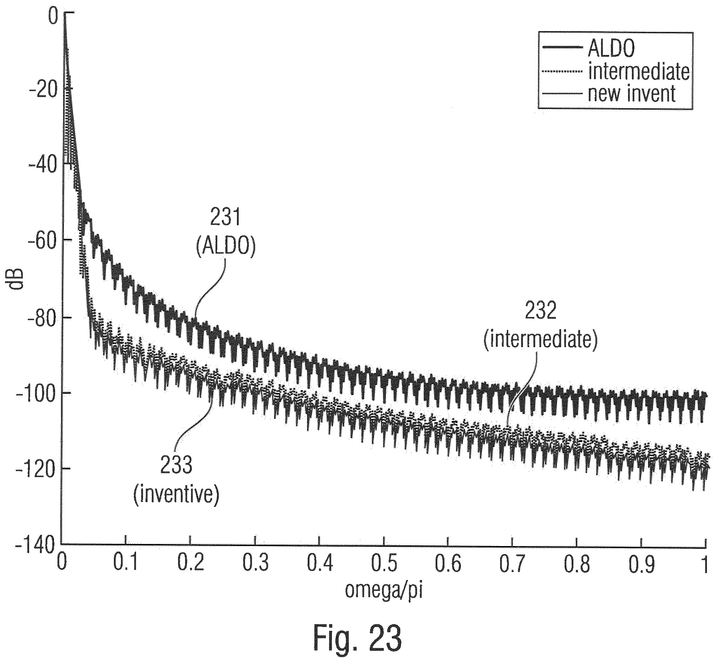

Fig. 23 shows a plot frequency response with ALDO (231), intermediate (232), new invention (233). The intermediate (231) and new invention window (233) can focus on different areas, achieving in this case a better far field attenuation. This is required for instance to avoid any aliasing distortions caused by band limited signals or whenever signals are resampled through a filter bank. This focus is impossible for the ALDO window, as there are only two parameters available controlling the shape. Comparing the intermediate and the new invention window, it becomes evident that the new invention achieves much less fluctuations in the response due to the very continuous shape in the time domain.

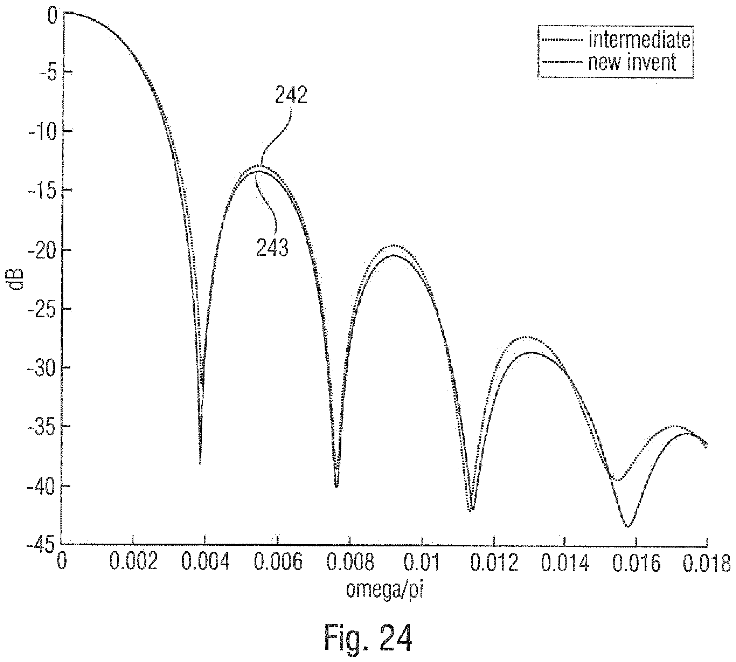

Fig. 24 shows a zoom (enlarged view) of frequency response comparing intermediate (242) and new invention (243). As can be observed, the new invention window (243) always shows a significant higher attenuation of all side lopes. This confirms that the meandering portion (44, 64, 94) is beneficial in the window design over a portion of strict ones.

With reference of the time modulation of window, it is noted that the main motivation for the ALDO window was to combine an asymmetric shape with a maximum amplitude of 1, in order to avoid large temporal fluctuations of the quantization error. The quantization error is added in the frequency domain and its temporal shape is controlled by the synthesis window shape.

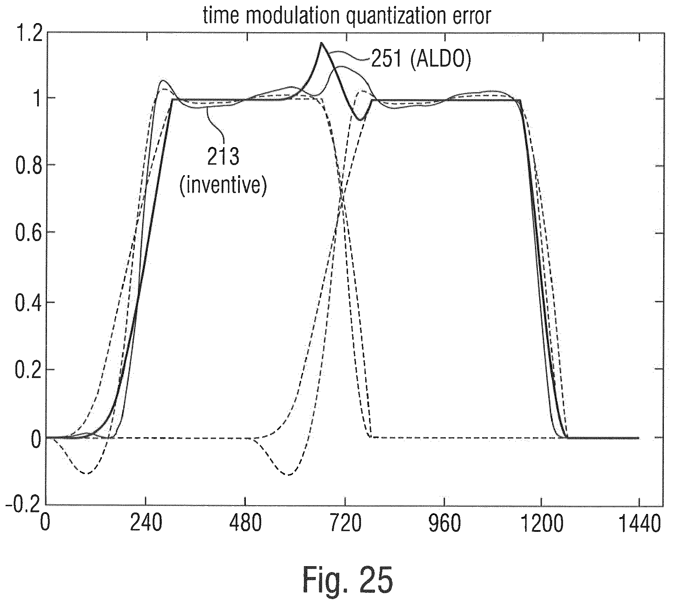

Actually, here also the meandering sequence even improves this window property. Fig. 25 shows a direct comparison the time modulation of the quantization error caused by an ALDO window (253) and a proposed invention (251). As can be seen, the maximum temporal distortion is lower for the new invention and therefore provides less noticeable distortions.

6. Other examples

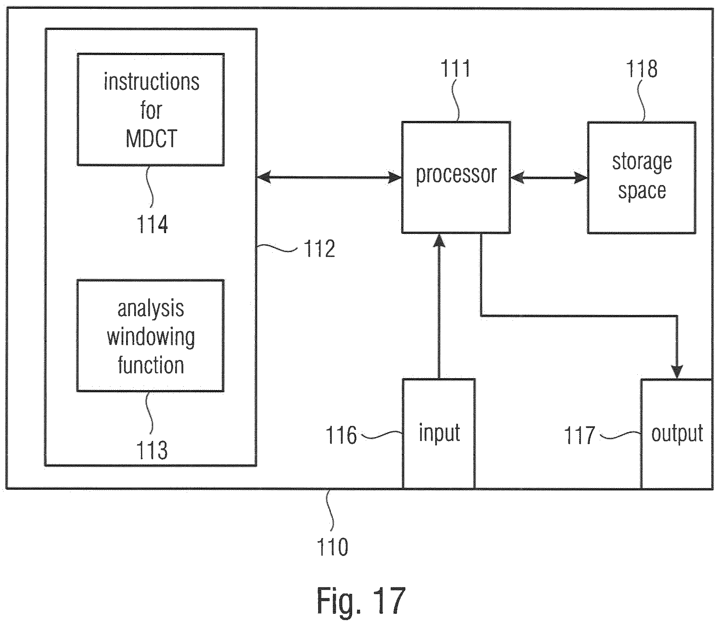

Fig. 17 shows an apparatus 110 which may implement the encoder apparatus 130 (or 130A) and/or MDCT tool 131 and/or perform at least some steps of the method 150. The apparatus 110 may comprise a processor 111 and a non-transitory memory unit 112 with a block 114 storing instructions which, when executed by the processor 111, may cause the processor 111 to perform a MDCT synthesis. The non-transitory memory unit 112 may also store, block 113, an analysis windowing function, e.g., as discussed above. The apparatus 110 may comprise an input unit 116, which may obtain an input information signal (e.g., an audio signal). A transitory storage space 118 may be reserved for saving data to be updated (e.g., input buffers).

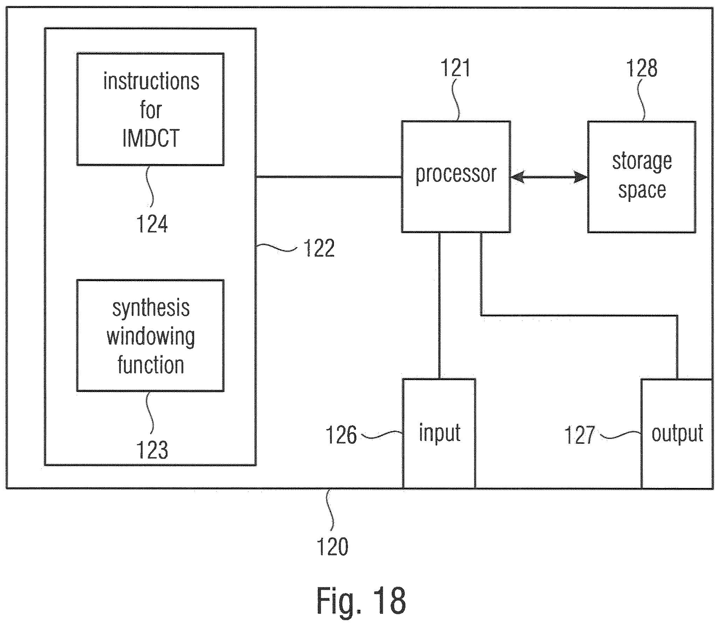

Fig. 18 shows an apparatus 120 which may implement the decoder apparatus 140 (or 140A) and/or the IMDCT 147 and/or perform the method 160. The apparatus 120 may comprise a processor 121 and a non-transitory memory unit 122 with a block 124 storing instructions which, when executed by the processor 121, may cause the processor 121 to perform, inter alia, an MDCT synthesis process. The apparatus 120 may comprise an input unit 126, which may obtain a decoded representation of an information signal (e.g., an audio signal) in the FD. The processor 121 may therefore perform processes to obtain a TD representation of the information signal. This decoded representation may be provided to external units using an output unit 127. The output unit 127 may comprise, for example, a communication unit to communicate to external devices (e.g., using wireless communication, such as Bluetooth) and/or external storage spaces. The processor 121 may save the decoded representation of the audio signal in a local storage space 128.

In examples, the apparatus 110 and 120 may be the same device. In examples, the apparatus 110 and 120 exchange information signals and/or control data e.g., wirelessly, e.g., using protocol Bluetooth.

Depending on certain implementation requirements, examples may be implemented in hardware. The implementation may be performed using a digital storage medium, for example a floppy disk, a Digital Versatile Disc (DVD), a Blu-Ray Disc, a Compact Disc (CD), a Read-only Memory (ROM), a Programmable Read-only Memory (PROM), an Erasable and Programmable Read-only Memory (EPROM), an Electrically Erasable Programmable Read-Only Memory (EEPROM) or a flash memory, having electronically readable control signals stored thereon, which cooperate (or are capable of cooperating) with a programmable computer system such that the respective method is performed. Therefore, the digital storage medium may be computer readable.

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine readable carrier. In other words, an example of method is, therefore, a computer program having a program instructions for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory.

A further example comprises a processing unit, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are illustrative for the principles discussed above. It is understood that modifications and variations of the arrangements and the details described herein will be apparent. It is the intent, therefore, to be limited by the scope of the impending patent claims and not by the specific details presented by way of description and explanation of the examples herein.

7. Some examples of windowing functions

Numerical examples are here provided. As there is no mathematical formula in closed form for obtaining the function, examples, are herewith provided. The values hereinbelow may be provided in backword or forward order, in the sense that in some examples the first value is associated to the time instant n=0 and the last value is associated to the last time instant n=2N-1 (forward direction), while in some examples the first value is associated to the time instant n=2N-1 and the last value is associated to the first time instant n=0 (backward direction). In some cases, the analysis windowing function and the synthesis windowing function are taken from the same list, but the analysis windowing function is read in the backward (or forward) direction, while the synthesis windowing function is read in the forward (or backward) direction.

In order to embody at least one of the examples below, it is possible to extract a sub-succession of at least 10 values (e.g., consecutive values), when the 10 values are different from 0. A tolerance or ± 1% may be possible; in some cases ± 0.5%, ± 0.05%, in other cases, ± 2%, ± 5%, in other cases 0%.

A numerical example of windowing function $w_{80}$, for frame size N=80, is herewith provided by the 160 entries for n = 0...2N-1. As explained above, the last values may be constantly 0.

-7.078546706512391e-04f,   -2.098197727900724e-03f,   -4.525198076002370e-03f,   -8.233976327300612e-03f,
-1.337713096257934e-02f,   -1.999721557401502e-02f,   -2.800909464274782e-02f,   -3.721502082245055e-02f,
-4.731768261606175e-02f,   -5.794654834034055e-02f,   -6.867606753531441e-02f,   -7.904647440788692e-02f,
-8.859705468085925e-02f,   -9.688303623049199e-02f,   -1.034961241263523e-01f,   -1.080766457616878e-01f,
-1.103242262600913e-01f,   -1.099809851424550e-01f,   -1.068172142230882e-01f,   -1.006190418791648e-01f,
-9.116452506492527e-02f,   -7.820617483254730e-02f,   -6.146688124166948e-02f,   -4.063362855701623e-02f,
-1.536329520788766e-02f,   +1.470155068746303e-02f,   +4.989736509080558e-02f,   +9.050369257152079e-02f,
+1.366911019414417e-01f,   +1.884686389218322e-01f,   +2.456456803467095e-01f,   +3.077789078889820e-01f,
+3.741642373060188e-01f,   +4.438114799213576e-01f,   +5.154735456539700e-01f,   +5.876661722564289e-01f,
+6.587619767809000e-01f,   +7.270576699841359e-01f,   +7.908752989295335e-01f,   +8.486643364959733e-01f,
+8.991320235484349e-01f,   +9.413348145272842e-01f,   +9.747634827941575e-01f,   +9.994114730415857e-01f,
+1.015760373791603e+00f,     +1.024736164069697e+00f,     +1.027634294456205e+00f,
+1.025991493983836e+00f,     +1.021427210603284e+00f,     +1.015439859549357e+00f,
+1.009366925499550e+00f,   +1.003508162416449e+00f,   +9.988898206257559e-01f,   +9.953133902427869e-01f,   +9.925943919208190e-01f,   +9.905771957917731e-01f,   +9.891371616557014e-01f,   +9.881790747212391e-01f,   +9.876249269174586e-01f,   +9.874056275509585e-01f,   +9.874524849192456e-01f,   +9.876951134084213e-01f,   +9.880640617030884e-01f,   +9.884926873551375e-01f,   +9.889230031022089e-01f,   +9.893074965384659e-01f,   +9.896146331889107e-01f,   +9.898319269347060e-01f,   +9.899693102025342e-01f,   +9.900603352632121e-01f,   +9.901575015155720e-01f,   +9.903255289051605e-01f,   +9.906303787150326e-01f,   +9.911298894709990e-01f,   +9.918665491182922e-01f,   +9.928619727154252e-01f,   +9.941156069136238e-01f,   +9.956033775539884e-01f,     +9.972793109558521e-01f,     +9.990784840729244e-01f,   +1.000922365901945e+00f,
+1.002728111386909e+00f,     +1.004416038098237e+00f,     +1.005919224127911e+00f,
+1.007189345025525e+00f,     +1.008200146369426e+00f,     +1.008949493525753e+00f,
+1.009458241425143e+00f,     +1.009768980817384e+00f,     +1.009940336228694e+00f,
+1.010039453539107e+00f,     +1.010132323996401    e+00f,     +1.010272524848519e+00f,
+1.010494354532353e+00f,     +1.010808068774316e+00f,     +1.011201071127927e+00f,
+1.011641272406023e+00f,     +1.012080125934687e+00f,     +1.012458183122033e+00f,
+1.012706955800289e+00f,     +1.012755013843985e+00f,     +1.012530134411619e+00f,
+1.011962331100864e+00f,     +1.010982135506986e+00f,     +1.009512438049510e+00f,
+1.007460860286395e+00f,   +1.004708677491086e+00f,   +1.001111413242302e+00f,   +9.965041017623596e-01f,   +9.907199995730845e-01f,   +9.823765865983288e-01f,   +9.708821747608998e-01f,   +9.546732976073705e-01f,   +9.321553861564006e-01f,   +9.018003682081348e-01f,   +8.623984077953557e-01f,   +8.132817365236141e-01f,   +7.544551974836834e-01f,   +6.866580716267418e-01f,   +6.113488038789190e-01f,   +5.306181649316597e-01f,   +4.471309850999502e-01f,   +3.639114681156236e-01f,   +2.841647033392408e-01f,   +2.110209448747969e-01f,   +1.472287968327703e-01f,   +9.482665349502291 e-02f,   +5.482436608328477e-02f,   +2.701461405056264e-02f,     +9.996743588367519e-03f,     +0.000000000000000e+00f,   +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,

A numerical example of windowing function $w_{160}$, for frame size N=160, is herewith provided by the 320 entries for n = 0...2N-1. As explained above, the last values may be constantly 0.

-4.619898752628163e-04f,   -9.747166718929050e-04f,   -1.664473096973725e-03f,   -2.597106916737789e-03f,
-3.806285163352241e-03f,   -5.324608721716763e-03f,   -7.175885277771099e-03f,   -9.382480860899108e-03f,
-1.195270300743193e-02f,   -1.489528159506296e-02f,   -1.820666399965468e-02f,   -2.187570925786862e-02f,
-2.588471937157619e-02f,   -3.020862738245264e-02f,   -3.481597793538342e-02f,   -3.967067992672979e-02f,
-4.472698045914417e-02f,   -4994225863256500e-02f,   -5.526334794593565e-02f,   -6.063717235243996e-02f, -6.600961519440657e-02f, -7.131966266443390e-02f, -7.651178225890490e-02f, -8.152964005319532e-02f, -8.631137544905677e-02f, -9.080411291245728e-02f, -9.495377758870335e-02f, -9.870736514214426e-02f, -1.020202684361974e-01f, -1.048438825017798e-01f, -1.071382314127799e-01f, -1.088690135027248e-01f, -1.099969655786929e-01f, -1.104898474883336e-01f, -1.103225838568563e-01f, -1.094621746650760e-01f, -1.078834293141886e-01f, -1.055612509762041e-01f, -1.024650162703341e-01f, -9.857014566194629e-02f, -9.384684920715425e-02f, -8.826309993000785e-02f, -8.178792716809512e-02f, -7.438785600211463e-02f, -6.602189797715241e-02f, -5.665655641133161e-02f, -4.624456893420224e-02f, -3.474585776145929e-02f, -2.211581608120528e-02f, -8.310425696208936e-03f, +6.717697635290676e-03f, +2.300642061077823e-02f, +4.060106462625085e-02f, +5.953239090915557e-02f, +7.983354189816511e-02f, +1.015233140203748e-01f, +1.246171387327525e-01f, +1.491152519299797e-01f, +1.750067399059861e-01f, +2.022699854906251e-01f, +2.308655379767671e-01f, +2.607365124918583e-01f, +2.918144694729168e-01f, +3.240095704645023e-01f, +3.572175180786021e-01f, +3.913146885756875e-01f, +4.261571642320424e-01f, +4.615925445090212e-01f, +4.974471592901086e-01f, +5.335326819631583e-01f, +5.696546730080154e-01f, +6.056083823929643e-01f, +6.411830842823245e-01f, +6.761653499550255e-01f, +7.103400549562944e-01f, +7.434943718765665e-01f, +7.754281892901473e-01f, +8.059437233154637e-01f, +8.348589373399948e-01f, +8.620108336276733e-01f, +8.872599706865123e-01f, +9.104863121445679e-01f, +9.315962496426278e-01f, +9.505220861927248e-01f, +9.672366712325431e-01f, +9.817397501303696e-01f, +9.940557180662704e-01f, +1.004247514102417e+00f, +1.012407428282884e+00f, +1.018650990561848e+00f, +1.023118841384460e+00f, +1.025972450969440e+00f, +1.027397523939210e+00f, +1.027585830688143e+00f, +1,026738673647482e+00f, +1.025061777648234e+00f, +1.022756514615106e+00f, +1.020009139549275e+00f, +1.016996499560845e+00f, +1.013915946100629e+00f, +1.011044869639164e+00f, +1.007773858455400e+00f, +1.004848753962734e+00f, +1.002245009135684e+00f, +9.999393169239009e-01 f, +9.979055415627330e-01f, +9.961203379971326e-01f, +9.945597525471822e-01f, +9.932031606606762e-01f, +9.920297273323891e-01f, +9.910230654424902e-01f, +9.901668953434221e-01f, +9.894488374513719e-01f, +9.888556356037892e-01f, +9.883778520531268e-01f, +9.880051626345804e-01f, +9.877295459610343e-01f, +9.875412739766566e-01f, +9.874329809802893e-01f, +9.873949921033299e-01f, +9.874197049003676e-01f, +9.874973205882319e-01f, +9.876201238703241e-01f, +9.877781920433015e-01f, +9.879637979933339e-01f, +9.881678007807095e-01f, +9.883835200189653e-01f, +9.886022219397892e-01f, +9.888182771263505e-01f, +9.890247977602895e-01f, +9.892178658748239e-01f, +9.893923680007577e-01f, +9.895463342815009e-01f, +9.896772011542693e-01f, +9.897859195209235e-01f, +9.898725363809847e-01f, +9.899410789223559e-01f, +9.899945557067980e-01f, +9.900394023736973e-01f, +9.900814722948890e-01f, +9.901293790312005e-01f, +9.901902265696609e-01f, +9.902734448815004e-01f, +9.903862280081246e-01f, +9.905379830873822e-01f, +9.907348826312993e-01f, +9.909842592301273e-01f, +9.912905118607647e-01f, +9.916586940166509e-01f, +9.920906151219310e-01f, +9.925887208794144e-01f, +9.931516528513824e-01f, +9.937790866568735e-01f, +9.944668184371617e-01f, +9.952116634297566e-01f, +9.960068616185641e-01f, +9.968461329825753e-01f, +9.977203369515556e-01f, +9.986213520769593e-01f, +9.995382582242990e-01f, +1.000461955079660e+00f, +1.001380551217109e+00f, +1.002284871786226e+00f, +1.003163845364970e+00f, +1.004009147462043e+00f, +1.004811375053364e+00f, +1.005563968008037e+00f, +1.006259855360867e+00f, +1.006895570408563e+00f, +1.007466616298057e+00f, +1.007972441990187e+00f, +1.008411468616852e+00f, +1.008786009787269e+00f, +1.009097763850333e+00f, +1.009351762546296e+00f, +1.009552401900961e+00f, +1.009707093778162e+00f, +1.009822090220407e+00f, +1.009906958448099e+00f, +1.009969021400474e+00f, +1.010017890428877e+00f, +1.010060809299530e+00f, +1.010106564965965e+00f, +1.010161131093372e+00f, +1.010231078494249e+00f, +1.010319484524512e+00f, +1.010430470494512e+00f, +1.010564099281000e+00f, +1.010721360243234e+00f, +1.010899655674578e+00f, +1.011096993993037e+00f, +1.011308167670753e+00f, +1.011529185153809e+00f, +1.011753008569803e+00f, +1.011973876511603e+00f, +1.012182837094955e+00f, +1.012373028737774e+00f, +1.012535058602453e+00f, +1.012660975529858e+00f, +1.012740575296603e+00f, +1.012765922449960e+00f, +1.012726958954961e+00f, +1.012615904116265e+00f, +1.012422888521601e+00f, +1.012140460211194e+00f, +1.011758810583150e+00f, +1.011269960947744e+00f, +1.010663676735228e+00f, +1.009930754807923e+00f, +1.009058249873833e+00f, +1.008034308295421e+00f, +1.006843352506855e+00f, +1.005470005637052e+00f, +1.003894772403371e+00f, +1.002098854400575e+00f, +1.000060686758758e+00f, +9.977600196406868e-01f, +9.951746430061121e-01f, +9.922861082472264e-01f, +9.890757868707590e-01f, +9.847362453480265e-01f, +9.798613526271561e-01f, +9.741378617337759e-01f, +9.673331975559332e-01f, +9.592539757044516e-01f, +9.496984081652284e-01f, +9.384634163826711e-01f, +9.253567968750328e-01f, +9.101986790930605e-01f, +8.928338316495705e-01f, +8.731437835983047e-01f, +8.510420440685049e-01f, +8.264839911291133e-01f, +7.994681492797084e-01f, +7.700431275216928e-01f, +7.383028603058783e-01f, +7.043814340356083e-01f, +6.684616478236647e-01f, +6.307755329382612e-01f, +5.915799587176216e-01f, +5.511703155400274e-01f, +5.098915423728179e-01f, +4.681017110047964e-01f, +4.261772971493010e-01f, +3.845172335531009e-01f, +3.435228672445613e-01f, +3.036004651973099e-01f, +2.651434678028531e-01f, +2.285283969438072e-01f, +1.941021906320984e-01f, +1.621735416384830e-01f, +1.330015240938615e-01f, +1.067840430193724e-01f, +8.365057236623041e-02f, +6.365188111381356e-02f, +4.676538412257621e-02f, +3.288072750732215e-02f, +2.183057564646270e-02f, +1.336381425803019e-02f, +6.758124889697787e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

A numerical example of windowing function $w_{240}$, for frame size N=240, is herewith provided (480 samples):

-3.613496418928369e-04f, -7.078546706512391e-04f, -1.074443637110903e-03f, -1.533478537964509e-03f, -2.098197727900724e-03f, -2.778420871815740e-03f, -3.584129920673041e-03f, -4.525198076002370e-03f, -5.609327243712055e-03f, -6.843234536105624e-03f, -8.233976327300612e-03f, -9.785314755557023e-03f, -1.149880303071551e-02f, -1.337713096257934e-02f, -1.542181679511618e-02f, -1.762979910961727e-02f, -1.999721557401502e-02f, -2.252080561390149e-02f, -2.519406300389030e-02f, -2.800909464274782e-02f, -3.095765092956728e-02f, -3.402996266948349e-02f, -3.721502082245055e-02f, -4.050053247568393e-02f, -4.387219218706189e-02f, -4.731768261606175e-02f, -5.082325342672667e-02f, -5.437166635159518e-02f, -5.794654834034055e-02f, -6.153426201732499e-02f, -6.511708163113709e-02f, -6.867606753531441e-02f, -7.219447805250771e-02f, -7.565695975592170e-02f, -7.904647440788692e-02f, -8.234442557322251e-02f, -8.553324579905185e-02f, -8.859705468085925e-02f, -9.152091100798199e-02f, -9.428847446755965e-02f, -9.688303623049198e-02f, -9.929123258537813e-02f, -1.015008467688577e-01f, -1.034961241263523e-01f, -1.052637003544443e-01f, -1.067939984687745e-01f, -1.080766457616878e-01f, -1.090997300590506e-01f, -1.098524491515805e-01f, -1.103242262600913e-01f, -1.105084619148789e-01f, -1.103977408741932e-01f, -1.099809851424550e-01f, -1.092492774392824e-01f, -1.081974227416502e-01f, -1.068172142230882e-01f, -1.050995803285455e-01f, -1.030360111111103e-01f, -1.006190418791648e-01f, -9.784120023411771e-02f, -9.469304216883027e-02f, -9.116452506492527e-02f, -8.724644532866996e-02f, -8.293043914044632e-02f, -7.820617483254730e-02f, -7.306142427456862e-02f, -6.748468182105991e-02f, -6.146688124166948e-02f, -5.499497258200362e-02f, -4.805444424454820e-02f, -4.063362855701623e-02f, -3.272045590229335e-02f, -2.430122582451853e-02f, -1.536329520788766e-02f, -5.891434269890659e-03f, +4.126595858583295e-03f, +1.470155068746303e-02f, +2.584738191459814e-02f, +3.757652772246801e-02f, +4.989736509080558e-02f, +6.282034030592902e-02f, +7.635397728566121e-02f, +9.050369257152079e-02f, +1.052747118478660e-01f, +1.206703467513333e-01f, +1.366911019414417e-01f, +1.533343890681390e-01f, +1.705954709184399e-01f, +1.884686389218322e-01f, +2.069449962574092e-01f, +2.260093000067393e-01f, +2.456456803467095e-01f, +2.658346019332584e-01f, +2.865543814049772e-01f, +3.077789078889820e-01f, +3.294769437072290e-01f, +3.516171481750350e-01f, +3.741642373060188e-01f, +3.970739591211551e-01f, +4.203043046885219e-01f, +4.438114799213576e-01f, +4.675442291623012e-01f, +4.914498631045615e-01f, +5.154735456539700e-01f, +5.395557644293222e-01f, +5.636399817032525e-01f, +5.876661722564289e-01f, +6.115695310143157e-01f, +6.352890592874099e-01f, +6.587619767809000e-01f, +6.819230974423550e-01f, +7.047092819314779e-01f,
+7.270576699841359e-01f, +7.489068963384272e-01f, +7.701990187606995e-01f, +7.908752989295335e-01f,
+8.108788692151807e-01f, +8.301579139160681e-01f, +8.486643364959733e-01f, +8.663548164329093e-01f,
+8.831896853053627e-01f, +8991320235484349e-01f, +9.141540563656075e-01f, +9.282282546151819e-01f,
+9.413348145272842e-01f, +9.534619388400459e-01f, +9.646048250501910e-01f, +9.747634827941575e-01f,
+9.839435385219192e-01f, +9.921529097154242e-01f, +9.994114730415857e-01f, +1.005746084650236e+00f,
+1.011183971347815e+00f,      +1.015760373791603e+00f,      +1.019515072412387e+00f,
+1.022490937034641e+00f,      +1.024736164069697e+00f,      +1.026304095700693e+00f,
+1.027250978292214e+00f,      +1.027634294456205e+00f,      +1.027511063644843e+00f,
+1.026942795115598e+00f,      +1.025991493983836e+00f,      +1.024716149969084e+00f,
+1.023175976163407e+00f,      +1.021427210603284e+00f,      +1.019521566634239e+00f,
+1.017510118327508e+00f,      +1.015439859549357e+00f,      +1.013460916839174e+00f,
+1.011654901040475e+00f,      +1.009366925499550e+00f,      +1.007263182132894e+00f,
+1.005313192386866e+00f,      +1.003508162416449e+00f,      +1.001840787319378e+00f,
+1.000303927234380e+00f, +9.988898206257559e-01f, +9.975915283480670e-01f, +9.964015284765968e-01f,
+9.953133902427869e-01f, +9.943201078053212e-01f, +9.934158959186011e-01f, +9.925943919208190e-01f,
+9.918510277326026e-01f, +9.911797988363887e-01f, +9.905771957917731e-01f, +9.900381047643838e-01f,
+9.895594394179152e-01f, +9.891371616557014e-01f, +9.887684373604154e-01f, +9.884497924570929e-01f,
+9.881790747212391e-01f, +9.879528358230726e-01f, +9.877691368590689e-01f, +9.876249269174586e-01f,
+9.875179947346887e-01f, +9.874458127312921e-01f, +9.874056275509585e-01f, +9.873951115886979e-01f,
+9.874115368168944e-01f, +9.874524849192456e-01f, +9.875149888347144e-01f, +9.875968894760857e-01f,
+9.876951134084213e-01f, +9.878075819424549e-01f, +9.879311998177238e-01f, +9.880640617030884e-01f,
+9.882032571565917e-01f, +9.883471084085503e-01f, +9.884926873551375e-01f, +9.886386592120545e-01f,
+9.887825578295630e-01f, +9.889230031022089e-01f, +9.890581715933395e-01f, +9.891867674284610e-01f,
+9.893074965384659e-01f, +9.894196399062921e-01f, +9.895220757174378e-01f, +9.896146331889107e-01f,
+9.896970346678272e-01f, +9.897692596535289e-01f, +9.898319269347060e-01f, +9.898852572653667e-01f,
+9.899307640365727e-01f, +9.899693102025343e-01f, +9.900025692522435e-01f, +9.900321562263099e-01f,
+9.900603352632121e-01f, +9.900889812894406e-01f, +9.901206586012907e-01f, +9.901575015155720e-01f,
+9.902023946214220e-01f, +9.902575406142213e-01f, +9.903255289051605e-01f, +9.904087914462694e-01f,
+9 905096491583045e-01f, +9.906303787150326e-01f, +9.907727108894024e-01f, +9.909387444078919e-01f,
+9.911298894709990e-01f, +9.913476318763218e-01f, +9.915928560402563e-01f, +9.918665491182922e-01f,
+9.921691315380984e-01f, +9.925010851461232e-01f, +9.928619727154252e-01f, +9.932519181564613e-01f,
+9.936700207375173e-01f, +9.941156069136238e-01f, +9.945873147903244e-01f, +9.950837402063278e-01f,
+9.956033775539884e-01f, +9.961439922621166e-01f, +9.967034533921340e-01f, +9.972793109558521e-01f,
+9.978690858367024e-01f, +9.984697087896268e-01f, +9.990784840729244e-01f, +9.996919011206490e-01f,
+1.000308193833526e+00f,      +1.000922365901945e+00f,      +1.001532636590676e+00f,
+1.002135464655177e+00f,      +1.002728111386909e+00f,      +1.003307449770187e+00f,
+1.003870934089686e+00f,      +1.004416038098237e+00f,      +1.004940548815171e+00f,
+1.005442141810160e+00f,      +1,005919224127911e+00f,      +1.006370303149314e+00f,
+1.006793927824538e+00f,      +1.007189345025525e+00f,      +1.007555573455895e+00f,
+1.007892674961336e+00f,      +1.008200146369426e+00f,      +1.008478423284851e+00f,
+1.008727884997619e+00f,      +1.008949493525753e+00f,      +1.009144112734761e+00f,
+1.009313224929575e+00f,      +1.009458241425143e+00f,      +1.009581280555682e+00f,
+1.009684090687164e+00f,      +1.009768980817384e+00f,      +1.009838308708799e+00f,
+1.009894548257807e+00f,      +1.009940336228694e+00f,      +1.009977916643680e+00f,
+1.010010230290263e+00f,      +1.010039453539107e+00f,      +1.010068202038694e+00f,
+1.010098388689342e+00f,      +1.010132323996401e+00f,      +1.010171656775640e+00f,
+1.010218096148412e+00f,      +1.010272524848519e+00f,      +1      010336490294771e+00f,
+1.010410221483215e+00f,      +1.010494354532353e+00f,      +1.010588873699422e+00f,
+1.010693501186928e+00f,      +1.010808068774316e+00f,      +1.010931436739342e+00f,
+1.011062876503041e+00f       +1.011201071127927e+00f,      +1.011344700694417e+00f,
+1.011491904228184e+00f,      +1.011641272406023e+00f,      +1.011790282474963e+00f,
+1.011937567254485e+00f,      +1.012080125934687e+00f,      +1.012216235487353e+00f,
+1.012342907951334e+00f,      +1.012458183122033e+00f,      +1.012558879696851e+00f,
+1.012642857380847e+00f,      +1.012706955800289e+00f,      +1.012748952907404e+00f,
+1.012765799894453e+00f,      +1.012755013843985e+00f,      +1.012713798678211e+00f,
+1.012639775003457e+00f,      +1.012530134411619e+00f,      +1.012382309473470e+00f,
+1.012194068117524e+00f,      +1.011962331100864e+00f,      +1.011685173724601e+00f, +1.011359143572147e+00f, +1.010982135506986e+00f, +1.010550715971368e+00f,
+1.010062133151922e+00f, +1.009512438049510e+00f, +1.008898689394160e+00f,
+1.008215923600973e+00f, +1.007460860286395e+00f, +1.006627741823389e+00f,
+1.005712337656749e+00f, +1.004708677491086e+00f, +1.003611467285588e+00f,
+1.002414286392268e+00f, +1.001111413242302e+00f, +9.996961651093181e-01f, +9.981625949525345e-01f, +9.965041017623596e-01f, +9.947148884277037e-01f, +9.927891912841345e-01f, +9.907199995730845e-01f, +9.884793707533194e-01f, +9.855347660016696e-01f, +9.823765865983286e-01f, +9.789747333404933e-01f, +9.751623811486372e-01f, +9.708821747608998e-01f, +9.660805524695870e-01f, +9.606976399184645e-01f, +9.546732976073706e-01f, +9.479479345282376e-01f, +9.404609052933396e-01f, +9.321553861564006e-01f, +9.229775478442888e-01f, +9.128745354570823e-01f, +9.018003682081348e-01f, +8.897163275605041e-01f, +8.765908974996186e-01f, +8.623984077953557e-01f, +8.471200801854385e-01f, +8.307479727020245e-01f, +8.132817365236141e-01f, +7.947291447585267e-01f, +7.751108841891807e-01f, +7.544551974836834e-01f, +7.327963552921717e-01f, +7.101790843209148e-01f, +6.866580716267418e-01f, +6.622962432368731e-01f, +6.371684119604742e-01f, +6.113488038789190e-01f +5.849206604934815e-01f, +5.579747428663487e-01f, +5.306181649316717e-01f, +5.029523957059122e-01f, +4.750868825511614e-01f, +4.471309850999535e-01f, +4.192049917945288e-01f, +3.914252910998820e-01f, +3.639114681156252e-01f, +3.367837772954476e-01f, +3.101627843160973e-01f, +2.841647033392418e-01f, +2.589033711808454e-01f, +2.344880603710975e-01f, +2.110209448747974e-01f, +1.885997642296488e-01f, +1.673100807904834e-01f, +1.472287968327706e-01f, +1.284223074167396e-01f, +1.109422548710344e-01f, +9.482665349502306e-02f, +8.009914366829558e-02f, +6.676765847398403e-02f, +5.482436608328485e-02f, +4.424588851571281e-02f, +3.499361000717621e-02f, +2.701461405056267e-02f, +2.024370180670145e-02f, +1.460796755137538e-02f, +9.996743588367531e-03f, +5.305235098871444e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f}

A numerical example of windowing function $w_{320}$, for frame size N=320, is herewith provided (640 samples):

-3.021153494057143e-04f, -5.867737487939294e-04f, -8.366504004139796e-04f, -1.126635355725494e-03f, -1.470492941694331e-03f, -1.873473391018495e-03f, -2.339292362082021e-03f, -2.872008069419264e-03f, -3.476256385086407e-03f, -4.155963816705528e-03f, -4.914563787665504e-03f, -5.755172503953251e-03f,

```
-6.680623380533122e-03f,  -7.693816924650567e-03f,  -8.796760749750191e-03f,  -9.990503073705982e-03f,
-1.127574117138621e-02f,  -1.265334152129685e-02f,  -1.412438986522702e-02f,  -1.568889620430290e-02f,
-1.734512089366117e-02f,  -1.909097368362797e-02f,  -2.092546711168754e-02f,  -2.284684792818856e-02f,
-2.485207716234951e-02f,  -2.693746704328349e-02f,  -2.909952486193999e-02f,  -3.133504629493832e-02f,
-3.363960728361352e-02f,  -3.600820974457969e-02f,  -3.843601741746971e-02f,  -4.091746034850161e-02f,
-4.344654894948344e-02f,  -4.601786724624048e-02f,  -4.862598509282497e-02f,  -5.126474204655663e-02f,
-5.392644753556616e-02f,  -5.660384311081047e-02f,  -5.929116747072080e-02f,  -6.198268202511926e-02f,
-6.467025548071184e-02f,  -6.734542216184526e-02f,  -7.000099017198280e-02f,  -7.263057011354321e-02f,
-7.522784961377151e-02f,  -7.778525942347714e-02f,  -8.029480247839878e-02f,  -8.274924535373614e-02f,
-8.514125464087215e-02f,  -8.746379123238275e-02f,  -8.971069341834263e-02f,  -9.187564084638347e-02f,
-9.395176975347193e-02f,  -9.593137735886889e-02f,  -9.780843257659243e-02f,  -9.957851303827886e-02f,
-1.012361165314596e-01f,  -1.027741036495644e-01f,  -1.041861222641119e-01f,  -1.054680247057000e-01f,
-1.066160875985523e-01f,  -1.076255384835563e-01f,  -1.084912299471198e-01f,  -1.092087422379003e-01f,
-1.097736146613313e-01f,  -1.101808861640070e-01f,  -1.104271876052675e-01f,  -1.105108362290460e-01f,
-1.104281465492726e-01f,  -1.101739218186236e-01f,  -1.097437360338336e-01f,  -1.091353125572511e-01f,
-1.083467335729228e-01f,  -1.073739938306107e-01f,  -1.062130155324388e-01f  -1.048606145834788e-01f,
-1.033132401525343e-01f,  -1.015673163469357e-01f,  -9.962005506126154e-02f,  -9.746803229469267e-02f,
-9.510723623306666e-02f,  -9.253303383231506e-02f,  -8.974125216128212e-02f,  -8.672877689119252e-02f,
-8.349213839083708e-02f,  -8.002639902061687e-02f,  -7.632679536516856e-02f,  -7.238806162166744e-02f,
-6.820576796149519e-02f,  -6.377611429172260e-02f,  -5.909386001558149e-02f,  -5.415316322402774e-02f,
-4.894812724598650e-02f,  -4.347347112195197e-02f,  -3.772461300253332e-02f,  -3.169587609244436e-02f,
-2.538179830690266e-02f,  -1.877689096555516e-02f,  -1.187461378850388e-02f,  -4.669099247423082e-03f,
+2.844096748870385e-03f,  +1.066976124794342e-02f,  +1.881355950582949e-02f,  +2.728156010437695e-02f,
+3.607810469851272e-02f,  +4.520702759803914e-02f,  +5.467238802204326e-02f,  +6.447866054615346e-02f,
+7.462862199422061e-02f,  +8.512490568723846e-02f,  +9.596983987496970e-02f,  +1.071650779014335e-01f,
+1.187115850305241e-01f,  +1.306101067250375e-01f,  +1.428596447589721e-01f,  +1.554584725339102e-01f,
+1.684041609371527e-01f,  +1.816947894623263e-01f,  +1.953273880886783e-01f,  +2.092963206850239e-01f,
+2.235945635254679e-01f,  +2.382160219461597e-01f,  +2.531529721334063e-01f,  +2.683961570569586e-01f,
+2.839361392493072e-01f,  +2.997624255177811e-01f,  +3.158619077906196e-01f,  +3.322210551086769e-01f,
+3.488264676990591e-01f,  +3.656640377499646e-01f,  +3.827152968157059e-01f,  +3.999611859760947e-01f,
+4.173843265025887e-01f,  +4.349669624916473e-01f,  +4.526876397402144e-01f,  +4.705242008503956e-01f,
+4.884539254831315e-01f,  +5.064545550235134e-01f,  +5.245006748662190e-01f,  +5.425674372882107e-01f,
+5.606312044701524e-01f,  +5.786672646386708e-01f,  +5.966477035050948e-01f  6.145458904162185e-01f,
+6.323361944662236e-01f,  +6.499926319211774e-01f,  +6.674874032292857e-01f,  +6.847932667399612e-01f,
+7.018835463513400e-01f,  +7.187322544823347e-01f,  +7.353128213893310e-01f,  +7.516001985652684e-01f,
+7.675699252273948e-01f,  +7.831974571624924e-01f,  +7.984583859818390e-01f,  +8.133295347030278e-01f,
+8.277892271515950e-01f,  +8.418178561101360e-01f,  +8.553961300139363e-01f,  +8.685068980898102e-01f,
+8.811334436653052e-01f,  +8.932596784799233e-01f,  +9.048748835980528e-01f,  +9.159657608120536e-01f,
+9.265215299450000e-01f,  +9.365339988633418e-01f,  +9.459977028429117e-01f,  +9.549088408436811e-01f,
+9.632658122557368e-01f,  +9.710688896122810e-01f,  +9.783204156360773e-01f,  +9.850226760127131e-01f,
+9.911792082081333e-01f,          +9.967989944502682e-01f,          +1.001894024615659e+00f,
+1.006474342231823e+00f,          +1.010552057109195e+00f,          +1.014142538208007e+00f,
+1.017262593268930e+00f,          +1.019928842669923e+00f,          +1.022159867011177e+00f,
+1.023976320927187e+00f,          +1.025400734608122e+00f,          +1.026455340400072e+00f,
+1.027164510654160e+00f,          +1.027552729180790e+00f,          +1.027644462380432e+00f,
+1.027463246660797e+00f,          +1.027035903410657e+00f,          +1.026389068000259e+00f,
+1.025548201799728e+00f,          +1.024537134749709e+00f,          +1.023380803775376e+00f,
+1.022103695693341e+00f,          +1.020728359657958e+00f,          +1.019275334687329e+00f,
+1.017765178792830e+00f,          +1.016217355867531e+00f,          +1.014665311686846e+00f,
+1.013249071090664e+00f,          +1.011948006992127e+00f,          +1.010189090179223e+00f,
+1.008557961167850e+00f,          +1.007011287608451e+00f,          +1.005548764575910e+00f,
+1.004168417268956e+00f,          +1.002867268893035e+00f,          +1.001641769115897e+00f,
+1.000489068954641e+00f,  +9.994060799749374e-01f,  +9.983898865406841e-01f,  +9.974370849972721e-01f,
+9.965444836911705e-01f,  +9.957098545943852e-01f,  +9.949302413030897e-01f,  +9.942024045863540e-01f,
+9.935241604969254e-01f,  +9.928930430130044e-01f,  +9.923068103443909e-01f,  +9.917633778190438e-01f,
+9.912597642374404e-01f,  +9.907954498484041e-01f,  +9.903677893656558e-01f,  +9.899751611066148e-01f,
+9.896160337369861e-01f,  +9.892890160408989e-01f,  +9.889928511129679e-01f,  +9.887260333430423e-01f,
+9.884868721088945e-01f,  +9.882751039537586e-01f,  +9.880892168751595e-01f  +9.879277114724612e-01f,
```

+9.877898261218510e-01f, +9.876743442038471e-01f, +9.875807496078497e-01f, +9.875072021876561e-01f,
+9.874529447589979e-01f, +9.874169741527905e-01f, +9.873984685207834e-01f, +9.873958301311858e-01f,
+9.874080027710336e-01f, +9.874343401290739e-01f, +9.874736235387018e-01f, +9.875243137719285e-01f,
+9.875856201221135e-01f, +9.876563785063032e-01f, +9.877358921155149e-01f, +9.878225576787804e-01f,
+9.879150968481590e-01f, +9.880132731565830e-01f, +9.881156946084619e-01f, +9.882211314188272e-01f,
+9.883289032519310e-01f, +9.884378310018685e-01f, +9.885476787868710e-01f, +9.886568414746639e-01f,
+9.887645868459630e-01f, +9.888708540445242e-01f, +9.889744320992592e-01f, +9.890747269455915e-01f,
+9.891710038703801e-01f, +9.892631024032380e-01f, +9.893507219573624e-01f, +9.894330645494204e-01f,
+9.895096919388534e-01f, +9.895810813422480e-01f, +9.896467469067676e-01f, +9.897067365020641e-01f,
+9.897606930400666e-01f, +9.898094478563998e-01f, +9.898530133261707e-01f, +9.898914705684924e-01f,
+9.899254194103574e-01f, +9.899554202030650e-01f, +9.899824494486951e-01f, +9.900065116928948e-01f,
+9.900284805353695e-01f, +9.900497484789281e-01f, +9.900709561632662e-01f, +9.900928358611601e-01f,
+9.901163920607219e-01f, +9.901427479709606e-01f, +9.901734275350572e-01f, +9.902087332329851e-01f,
+9.902498637985275e-01f, +9.902983686695558e-01f, +9.903548501470234e-01f, +9.904205084933333e-01f,
+9.904959297726740e-01f, +9.905825150202904e-01f, +9.906812569810133e-01f, +9.907922087340426e-01f,
+9.909165464981378e-01f, +9.910550740962871e-01f, +9.912084614290896e-01f, +9.913768610980639e-01f,
+9.915605826937839e-01f, +9.917604214872976e-01f, +9.919767175562684e-01f, +9.922091101818779e-01f,
+9.924579135466506e-01f, +9.927231225056266e-01f, +9.930049538427406e-01f, +9.933027281437943e-01f,
+9.936161084869942e-01f, +9.939453714404443e-01f, +9.942895145656371e-01f, +9.946481676207727e-01f,
+9.950203031067961e-01f, +9.954058173659507e-01f, +9.958038713694317e-01f, +9.962130271017117e-01f,
+9.966324689957675e-01f, +9.970615306490058e-01f, +9.974990583293081e-01f, +9.979437430375855e-01f,
+9983940572002874e-01f, +9.988493116887893e-01f, +9.993083430214909e-01f, +9.997689221333534e-01f,
+1.000231131275969e+00f,        +1.000692135698996e+00f,        +1.001152013920163e+00f,
+1.001608526000461e+00f,        +1.002060493867275e+00f,        +1.002507212061815e+00f,
+1.002947129400411e+00f,        +1.003378909587027e+00f,        +1.003801368578070e+00f,
+1.004213810320699e+00f,        +1.004615386562846e+00f,        +1.005004618375781e+00f,
+1.005380628601598e+00f,        +1.005743282364652e+00f,        +1.006091510392348e+00f,
+1.006424907424988e+00f,        +1.006742427727669e+00f,        +1.007044321511378e+00f,
+1.007330218597112e+00f,        +1.007599401798709e+00f,        +1.007852064386603e+00f,
+1.008088176165563e+00f,        +1.008308033204578e+00f,        +1.008511247273756e+00f,
+1.008698144207627e+00f,        +1.008869515256392e+00f,        +1.009025659761512e+00f,
+1.009166718967367e+00f,        +1.009293362609020e+00f,        +1.009406398832440e+00f,
+1.009507017171120e+00f,        +1.009595264293017e+00f,        +1.009672145744679e+00f,
+1.009739084785160e+00f,        +1.009796675060142e+00f,        +1.009846137382005e+00f,
+1.009888083631667e+00f,        +1.009924092276850e+00f,        +1.009955384765721e+00f,
+1.009982268770147e+00f,        +1.010006298177305e+00f,        +1.010028618428735e+00f,
+1.010050254076988e+00f,        +1.010071952131355e+00f,        +1.010094366238073e+00f,
+1.010118917317053e+00f,        +1.010146497096682e+00f,        +1.010177110711677e+00f,
+1.010211755260102e+00f,        +1.010251003469427e+00f,        +1.010295468653759e+00f,
+1.010345234996637e+00f,        +1.010400316698172e+00f,        +1.010461564316351e+00f,
+1.010528615445659e+00f,        +1.010601521285347e+00f,        +1.010679788081867e+00f,
+1.010763905869062e+00f,        +1.010853429760676e+00f,        +1.010947547074519e+00f,
+1.011045953108263e+00f,        +1.011148486293359e+00f,        +1.011254397791134e+00f,
+1.011363082075863e+00f,        +1.011473302008831e+00f,        +1.011584996312149e+00f,
+1.011697416504599e+00f,        +1.011808919793469e+00f,        +1.011919264025716e+00f,
+1.012027240794153e+00f,        +1.012132151631041e+00f,        +1.012232734564333e+00f,
+1.012327560477901e+00f,        +1.012416383754384e+00f,        +1.012497890726292e+00f,
+1.012570434021054e+00f,        +1.012633295255708e+00f,        +1.012685277016726e+00f,
+1.012725564992284e+00f,        +1.012752577651415e+00f,        +1.012765062889864e+00f,
+1.012762356719162e+00f,        +1.012743376077777e+00f,        +1.012706484200181e+00f,
+1.012650842226435e+00f,        +1.012575427778520e+00f,        +1.012479473490919e+00f,
+1.012361105121003e+00f,        +1.012219809594718e+00f,        +1.012054359992419e+00f,
+1.011864000215460e+00f,        +1.011647223869087e+00f,        +1.011402518267713e+00f,
+1.011129654652857e+00f,        +1.010826951260377e+00f,        +1.010492924436361e+00f,
+1.010126353960416e+00f,        +1.009725892479312e+00f,        +1.009290060983833e+00f,
+1.008817301052548e+00f,        +1.008305027555130e+00f,        +1.007752833675443e+00f,
+1.007157827358150e+00f,        +1.006518049344503e+00f,        +1.005831403532018e+00f,
+1.005095592119373e+00f,        +1.004308630055050e+00f,        +1.003467498305776e+00f, +1.002569500413888e+00f, +1.001612710105563e+00f, +1.000594272975683e+00f, +9.995111701168786e-01f, +9.983609218719522e-01f, +9.971409288327860e-01f, +9.958488863050556e-01f, +9.944818543153893e-01f, +9.930375282832211e-01f, +9.915146560759479e-01f, +9.899136802423638e-01f, +9.881930623810997e-01f, +9.859422591203311e-01f, +9.835667898378924e-01f, +9.811423034808365e-01f, +9.785214441250228e-01f, +9+9.725453442532574e-01f, +9.691456634185092e-01f, +9.654406178310209e-01f, +9.614043615076308e-01f, +9.570113065179300e-01f, +9.522367669696690e-01f, +9.470548839544214e-01f, +9.414403740008491e-01f, +9.353691612846549e-01f, +9.288190093977164e-01f, +9.217662887169115e-01f, +9.141896283466009e-01f, +9.060694681113471e-01f, +8.973891675497357e-01f, +8.881332000806269e-01f, +8.782893885841422e-01f, +8.678469565343039e-01f, +8.567970644671067e-01f, +8.451334654019180e-01f, +8.328542805780399e-01f, +8.199594783897041e-01f, +8.064511006873497e-01f, +7.923346478686025e-01f, +7.776204488292163e-01f, +7.623206183595970e-01f, +7.464486491227057e-01f, +7.300205729992958e-01f, +7.130567383226717e-01f, +6.955805444755916e-01f, +6.776173229836567e-01f, +6.591955305148172e-01f, +6.403486426892321e-01f, +6.211072197441818e-01f, +6.015049275244730e-01f, +5.815787608870452e-01f, +5.613674511156324e-01f, +5.409188627354076e-01f, +5.202736834971303e-01f, +4.994780733459294e-01f, +4.785774177949064e-01f, +4.576172599874928e-01f, +4.366490208265804e-01f, +4.157221460415995e-01f, +3.948856590950757e-01f, +3.741903189229770e-01f, +3.536868899553974e-01f, +3.334260017756462e-01f, +3.134586473252229e-01f, +2.938337904395871e-01f, +2.745992637590817e-01f, +2.558030636168172e-01f, +2.374902188466697e-01f, +2.197036032185785e-01f, +2.024855415115456e-01f, +1.858749915117319e-01f, +1.699067802117410e-01f, +1.546132267478873e-01f +1.400238206749695e-01f, +1.261637395672913e-01f, +1.130534434072719e-01f, +1.007084973747940e-01f 8.914024389873081e-02f, +7.835612100141792e-02f, +6.835821233920988e-02f, +5.914211536028976e-02f, +5.069893012340832e-02f, +4.301717763585550e-02f, +3.608020726673359e-02f, +2.986316337017630e-02f, +2.433722657129812e-02f, +1.947675241971700e-02f, +1.525710171255895e-02f, +1.163787492636240e-02f, +8.433087782643718e-03f, +4.449668997344735e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0,000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f,

+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

A numerical example of windowing function $w_{480}$, for frame size N=480, is herewith provided (960 samples):

-2.353032150516754e-04f, -4.619898752628163e-04f, -6.262931535610879e-04f, -7.929180432976445e-04f,
-9.747166718929050e-04f, -1.180256894474562e-03f, -1.409209039594871e-03f, -1.664473096973725e-03f,
-1.946591608170231e-03f, -2.257081732588478e-03f, -2.597106916737789e-03f, -2.967607624839524e-03f,
-3.370454877988472e-03f, -3.806285163352241e-03f, -4.276873767639064e-03f, -4.782469904501813e-03f,
-5.324608721716763e-03f, -5.903403814095400e-03f, -6.520419726599805e-03f, -7.175885277771099e-03f,
-7.871422820642307e-03f, -8.606586039759667e-03f, -9.382480860899108e-03f, -1.019827182163307e-02f,
-1.105520547739066e-02f, -1.195270300743193e-02f, -1.289205910303846e-02f, -1.387263484323160e-02f,
-1.489528159506296e-02f, -1.595856621933800e-02f, -1.706288556735433e-02f, -1.820666399965468e-02f,
-1.939065975232718e-02f, -2.061355417582714e-02f, -2.187570925786862e-02f, -2.317526315266411e-02f,
-2.451227449041489e-02f, -2.588471937157619e-02f, -2.729263737090799e-02f, -2.873390902713615e-02f,
-3.020862738245264e-02f, -3.171440372994384e-02f, -3.325098858986303e-02f, -3.481597793538342e-02f,
-3.640892406933019e-02f, -3.802742318209150e-02f, -3.967067992672979e-02f, -4.133575417353826e-02f,
-4.302203371734278e-02f, -4.472698045914417e-02f, -4.645022292934329e-02f, -4.818891490266687e-02f,
-4.994225863256500e-02f, -5.170690802826666e-02f, -5.348162036097223e-02f, -5.526334794593565e-02f,
-5.705123152423822e-02f, -5.884271749745559e-02f, -6.063717235243996e-02f, -6.243104027829089e-02f,
-6.422303545004304e-02f, -6.600961519440657e-02f, -6.778962269634495e-02f, -6.955996868581379e-02f,
-7.131966266443390e-02f, -7.306581273272733e-02f, -7.479758913001458e-02f, -7.651178225890490e-02f,
-7.820711420768856e-02f, -7.988010693411644e-02f, -8.152964005319532e-02f, -8.315237353264004e-02f,
-8.474728946770714e-02f, -8.631137544905677e-02f, -8.784374452959058e-02f, -8.934164364321417e-02f,
-9.080411291245728e-02f, -9.222795761428432e-02f, -9.361232867223340e-02f, -9.495377758870335e-02f,
-9.625155313139856e-02f, -9.750284620437569e-02f, -9.870736514214426e-02f, -9.986271288271026e-02f,
-1.009680221406219e-01f, -1.020202684361974e-01f, -1.030183804850491e-01f, -1.039596356759290e-01f,
-1.048438825017798e-01f, -1.056686838192766e-01f, -1.064342821660323e-01f, -1.071382314127799e-01f,
-1.077799961121537e-01f, -1.083570625865931e-01f, -1.088690135027248e-01f, -1.093135588677235e-01f,
-1.096903559498340e-01f, -1.099969655786929e-01f, -1.102332261219973e-01f, -1.103972812085189e-01f,
-1.104898474883336e-01f, -1.105086416532167e-01f, -1.104537426996073e-01f, -1.103225838568563e-01f,
-1.101145827722143e-01f, -1.098276928170364e-01f, -1.094621746650760e-01f, -1.090163960055733e-01f,
-1.084908852561722e-01f, -1.078834293141886e-01f, -1.071937180231978e-01f, -1,064196358069465e-01f,
-1.055612509762041e-01f, -1.046162812518618e-01f, -1.035849043557610e-01f, -1.024650162703341 e-01f,
-1.012568997532046e-01f, -9.995864571932928e-02f, -9.857014566194627e-02f, -9.708911135857967e-02f,
-9.551545820689084e-02f, -9.384684920715425e-02f, -9.208300062891550e-02f, -9.022171021406450e-02f,
-8.826309993000785e-02f, -8.620493821803937e-02f, -8.404742152815330e-02f, -8.178792716809512e-02f,
-7.942625026703617e-02f, -7.695980775819990e-02f, -7.438785600211463e-02f, -7.170797002873608e-02f,
-6.891994783815969e-02f, -6.602189797715241e-02f, -6.301349420724424e-02f, -5.989191912667712e-02f,
-5.665655641133161e-02f, -5.330406164482222e-02f, -4.983427241976235e-02f, -4.624456893420224e-02f,
-4.253455686336916e-02f, -3.870195772538443e-02f, -3.474585776145929e-02f, -3.066341518682682e-02f,
-2.645425077642105e-02f, -2.211581608120528e-02f, -1.764740541599136e-02f, -1.304581363895818e-02f,
-8.310425696208936e-03f, -3.438268661133170e-03f, +1.570315476576933e-03f, +6.717697635290676e-03f,
+1.200477020244778e-02f, +1.743398319747869e-02f, +2.300642061077823e-02f, +2.872481423270595e-02f,
+3.458896350634671e-02f, +4.060106462625085e-02f, +4.676102915752826e-02f, +5307133911821893e-02f,
+5.953239090915557e-02f, +6.614647812869151e-02f, +7.291293184312803e-02f, +7.983354189816511e-02f,
+8.690807412770696e-02f, +9.413813765275064e-02f, +1.015233140203748e-01f, +1.090651518336202e-01f,
+1.167626546016197e-01f, +1.246171387327525e-01f, +1.326272948938113e-01f, +1.407938190608664e-01f,
+1.491152519299797e-01f, +1.575921408388593e-01f, +1.662224799248571e-01f, +1.750067399059861e-01f,
+1.839431938620024e-01f, +1.930318183054904e-01f, +2.022699854906251e-01f, +2.116567430906184e-01f,
+2.211888523410642e-01f, +2.308655379767671e-01f, +2.406837992341654e-01f, +2.506420640291662e-01f,
+2.607365124918583e-01f, +2.709659073501196e-01f, +2.813259021832532e-01f, +2.918144694729168e-01f,
+3.024270279840051e-01f, +3.131603499997996e-01f, +3.240095704645023e-01f, +3.349719592361666e-01f,
+3.460422935204829e-01f, +3.572175180786021e-01f, +3.684915649120530e-01f, +3.798595119591716e-01f,
+3.913146885756875e-01f, +4.028532873867052e-01f, +4.144688328137527e-01f +4.261571642320424e-01f, +4.379113897565727e-01f, +4.497256320417501e-01f, +4.615925445090212e-01f, +4.735067030065239e-01f, +4.854600184866710e-01f, +4.974471592901086e-01f, +5.094597228333853e-01f, +5.214909841729947e-01f, +5.335326819631583e-01f, +5.455789811615239e-01f, +5.576217157959890e-01f, +5.696546730080154e-01f, +5.816685576268035e-01f, +5.936560624526468e-01f, +6.056083823929643e-01f, +6.175192060085208e-01f, +6.293796611336280e-01f, +6.411830842823245e-01f, +6.529203544876097e-01f, +6.645840786371451e-01f, +6.761653499550255e-01f, +6.876573952173626e-01f, +6.990511539119996e-01f, +7.103400549562944e-01f, +7.215149331458728e-01f, +7.325691772738999e-01f, +7.434943718765665e-01f, +7.542846327442048e-01f, +7.649313654540612e-01f, +7.754281892901473e-01f, +7.857670170752049e-01f, +7.959414651061612e-01f, +8.059437233154637e-01f +8.157687070715176e-01f, +8.254086223972127e-01f, +8.348589373399948e-01f, +8.441125827416620e-01f, +8.531651194538425e-01f, +8.620108336276733e-01f, +8.706456337542150e-01f, +8.790631561061171e-01f, +8.872599706865123e-01f, +8.952313288619367e-01f, +9.029751680353524e-01f, +9.104863121445679e-01f, +9.177625550620636e-01f, +9.247997426966093e-01f, +9.315962496426278e-01f, +9.381494858921667e-01f, +9.444588390359354e-01f, +9.505220861927248e-01f, +9.563402921286364e-01f, +9.619114522936701e-01f, +9.672366712325431e-01f, +9.723156637834687e-01f, +9.771501187120180e-01f, +9.817397501303696e-01f, +9.860865871353246e-01f, +9.901906380163595e-01f, +9.940557180662704e-01f, +9.976842395284637e-01f, +1.001080961257010e+00f, +1.004247514102417e+00f, +1.007188578458507e+00f, +1.009906654565108e+00f, +1.012407428282884e+00f, +1.014694702432600e+00f, +1.016774659209400e+00f, +1.018650990561848e+00f, +1.020330464463111e+00f, +1.021817328911793e+00f, +1.023118841384460e+00f, +1.024240262467000e+00f, +1.025189721888128e+00f, +1.025972450969440e+00f, +1.026596938589443e+00f, +1.027069179375841e+00f, +1.027397523939210e+00f, +1.027587902203109e+00f, +1.027648951922701e+00f, +1.027585830688143e+00f, +1.027408519661012e+00f, +1.027122986826984e+00f, +1.026738673647482e+00f, +1.026261663878092e+00f, +1.025701002415063e+00f, +1.025061777648234e+00f, +1.024353980976701e+00f, +1.023582385618774e+00f, +1.022756514615106e+00f, +1.021880604350422e+00f, +1.020963871317665e+00f, +1.020009139549275e+00f, +1.019027285501251e+00f, +1.018019442784231e+00f, +1.016996499560845e+00f, +1.015957433206324e+00f, +1.014923441259795e+00f, +1.013915946100629e+00f, +1.013047565149327e+00f, +1.012216130365610e+00f, +1.011044869639164e+00f, +1.009914592130044e+00f, +1.008824888092573e+00f, +1.007773858455400e+00f, +1.006761700412993e+00f, +1.005786648810854e+00f, +1.004848753962734e+00f, +1.003946083413733e+00f, +1.003078846506546e+00f, +1.002245009135684e+00f, +1.001444733905817e+00f, +1.000676188436651e+00f, +9.999393169239009e-01f, +9.992320848298057e-01f, +9.985548127155425e-01f, +9.979055415627330e-01f, +9.972842679758880e-01f, +9.966890948441745e-01f, +9.961203379971326e-01f, +9.955761256313581e-01f, +9.950565724564597e-01f, +9.945597525471822e-01f, +9.940860378486615e-01f, +9.936337788972491e-01f, +9.932031606606759e-01f, +9.927921871265732e-01f, +9.924015177880798e-01f, +9.920297273323891e-01f, +9.916767775088281e-01f, +9.913408767719142e-01f, +9.910230654424902e-01f, +9.907216425865902e-01f, +9.904366799536263e-01f, +9.901668953434221e-01f, +9.899131011580791e-01f, +9.896735637374597e-01f, +9.894488374513719e-01f, +9.892374835404283e-01f, +9.890401927796704e-01f, +9.888556356037892e-01f, +9.886843467692753e-01f, +9.885247606051014e-01f, +9.883778520531268e-01f, +9.882423270582524e-01f, +9.881185638915363e-01f, +9.880051626345804e-01f, +9.879032023766432e-01f, +9.878111744348976e-01t, +9.877295459610343e-01f, +9.876571983429736e-01f, +9.875949843246187e-01f, +9.875412739766566e-01f, +9.874969061399389e-01f, +9.874606249127551e-01f, +9.874329809802893e-01f, +9.874126414437681e-01f, +9.874004750404033e-01f, +9.873949921033299e-01f, +9.873969162747074e-01f, +9.874049060317581e-01f, +9.874197049003676e-01f, +9874399717110517e-01f, +9.874663281231737e-01f, +9.874973205882319e-01f, +9.875338926695315e-01f, +9.875746535410983e-01f, +9.876201238703241e-01f, +9.876689801932402e-01f, +9.877221556193183e-01f, +9.877781920433015e-01f, +9.878376489591358e-01f, +9.878991990245439e-01f, +9.879637979933339e-01f, +9.880300303653743e-01f, +9.880984675859855e-01f, +9.881678007807095e-01f, +9.882390300097154e-01f, +9.883107693992456e-01f +9.883835200189653e-01f, +9.884560159878955e-01f, +9.885294200392185e-01f, +9.886022219397892e-01f, +9.886749404176028e-01f, +9.887466261142505e-01f, +9.888182771263505e-01f, +9.888882480852147e-01f, +9.889574384705896e-01f, +9.890247977602895e-01f, +9.890911247701029e-01f, +9.891551701556196e-01f, +9.892178658748239e-01f, +9.892779555818088e-01f, +9.893365186903538e-01f, +9.893923680007577e-01f, +9.894462830852175e-01f, +9.894972124952000e-01f, +9.895463342815009e-01f, +9.895923617530382e-01f, +9.896362652966239e-01f, +9.896772011542693e-01f, +9.897162195263046e-01f, +9.897520286480039e-01f, +9.897859195209235e-01f, +9.898170267411330e-01f, +9.898462068764986e-01f, +9.898725363809847e-01f, +9.898975138787787e-01f, +9.899200050208486e-01f, +9.899410789223559e-01f, +9.899600605054418e-01f, +9.899782261038060e-01f, +9.899945557067980e-01f, +9.900103500807507e-01f, +9.900248320990181e-01f, +9.900394023736973e-01f, +9.900532105829365e-01f, +9.900674746047259e-01f, +9.900814722948890e-01f, +9.900966926051257e-01f, +9.901122448734595e-01f, +9.901293790312005e-01f, +9.901474648912307e-01f, +9.901680598867444e-01f, +9.901902265696609e-01f, +9.902151896501201e-01f, +9.902424418296485e-01f, +9.902734448815004e-01f, +9.903071270768942e-01f, +9.903448913950654e-01f, +9.903862280081246e-01f, +9.904324484666853e-01f, +9.904825650601110e-01f, +9.905379830873822e-01f, +9.905980602136440e-01f, +9.906640366554630e-01f, +9.907348826312993e-01f, +9.908120376822228e-01f, +9.908947858311721e-01f, +9.909842592301273e-01f, +9.910795247770178e-01f, +9.911819240108124e-01f, +9.912905118607647e-01f, +9.914064705361564e-01f, +9.915288011543961e-01f, +9.916586940166509e-01f, +9.917952720685562e-01f, +9.919396217291009e-01f, +9.920906151219310e-01f, +9.922495028313456e-01f, +9.924152398352751e-01f, +9.925887208794144e-01f, +9.927688708468421e-01f, +9.929569112537944e-01f, +9.931516528513824e-01f, +9.933539244159140e-01f, +9.935626893131695e-01f, +9.937790866568735e-01f, +9.940016434044485e-01f, +9.942312024833810e-01f, +9.944668184371617e-01f, +9.947093441694513e-01f, +9.949572854565533e-01f, +9.952116634297566e-01f, +9.954712635321227e-01f, +9.957367951478069e-01f +9.960068616185641e-01f, +9.962823025614079e-01f, +9.965617986382630e-01f, +9.968461329825753e-01f, +9.971338271912752e-01f, +9.974256691222113e-01f, +9.977203369515556e-01f, +9.980185087055744e-01f, +9.983185871761977e-01f, +9.986213520769593e-01f, +9.989255426466267e-01f, +9.992317314100975e-01f, +9.995382582242990e-01f, +9.998461160718275e-01f, +1.000153907612080e+00f, +1.000461955079660e+00f, +1.000768859280338e+00f, +1.001075613053728e+00f, +1.001380551217109e+00f, +1.001684244734497e+00f, +1.001985425397567e+00f, +1.002284871786226e+00f, +1.002580975161843e+00f, +1.002874411368430e+00f, +1.003163845364970e+00f, +1,003450063374329e+00f, +1.003731570287893e+00f, +1.004009147462043e+00f, +1.004281457582935e+00f, +1.004549339226336e+00f, +1.004811375053364e+00f, +1,005068272394360e+00f, +1.005318795748286e+00f, +1.005563968008037e+00f, +1,005802269635282e+00f, +1,006034554002353e+00f, +1.006259855360867e+00f, +1.006479018139540e+00f, +1.006690541428116e+00f, +1.006895570408563e+00f +1.007093045696527e+00f, +1.007283799246233e+00f, +1.007466616298057e+00f, +1.007642728426847e+00f, +1.007811036585595e+00f, +1.007972441990187e+00f, +1.008125875904472e+00f, +1.008272602383284e+00f, +1.008411468616852e+00f, +1.008543573152632e+00f, +1.008668018334797e+00f, +1,008786009787269e+00f, +1.008896526233555e+00f, +1.009000766336071e+00f, +1.009097763850333e+00f, +1.009188880897370e+00f, +1.009273163797313e+00f, +1.009351762546296e+00f, +1.009423944949143e+00f, +1.009491175244507e+00f, +1.009552401900961e+00f, +1.009608886895764e+00f, +1.009659973830751e+00f, +1.009707093778162e+00f, +1.009749238562067e+00f, +1.009787744284661e+00f, +1.009822090220407e+00f, +1.009853706282597e+00f, +1.009881498943010e+00f, +1.009906958448099e+00f, +1.009929567021562e+00f, +1.009950573483366e+00f, +1.009969021400474e+00f, +1.009986499185054e+00f, +1.010002363879044e+00f, +1.010017890428877e+00f, +1.010032170180360e+00f, +1.010046722045583e+00f, +1.010060809299530e+00f, +1.010075674445289e+00f, +1.010090449982098e+00f, +1.010106564965965e+00f, +1.010123226584120e+00f, +1.010141762173145e+00f, +1.010161131093372e+00f, +1.010182635897876e+00f, +1.010205587931660e+00f, +1.010231078494249e+00f, +1.010257950227988e+00f, +1.010287732968580e+00f, +1.010319484524512e+00f, +1.010354079663767e+00f, +1.010390635488037e+00f, +1.010430470494512e+00f, +1.010472266495074e+00f, +1.010517096381509e+00f, +1.010564099281000e+00f, +1.010614266894512e+00f, +1.010666285876455e+00f, +1.010721360243234e+00f, +1.010778416755264e+00f, +1.010838252644461e+00f, +1.010899655674578e+00f, +1.010963729626641e+00f, +1.011029191301694e+00f, +1.011096993993037e+00f, +1.011165861239173e+00f, +1.011236610341260e+00f, +1.011308167670753e+00f, +1.011381453638912e+00f, +1.011454785713102e+00f, +1.011529185153809e+00f, +1.011603680910505e+00f, +1.011678803938046e+00f, +1.011753008569803e+00f, +1.011827484797985e+00f, +1.011900936547881e+00f, +1.011973876511603e+00f, +1.012044885003304e+00f, +1.012114985644919e+00f, +1.012182837094955e+00f, +1.012249023976742e+00f, +1.012312095063070e+00f, +1.012373028737774e+00f, +1.012430463679316e+00f, +1.012484972246822e+00f, +1.012535058602453e+00f, +1.012581678169188e+00f, +1.012623472898504e+00f, +1.012660975529858e+00f, +1.012692758750213e+00f, +1.012719789201144e+00f, +1.012740575296603e+00f, +1.012755753887085e+00f, +1.012763948841204e+00f, +1.012765922449960e+00f, +1.012760298661069e+00f, +1.012747819936584e+00f, +1.012726958954961e+00f, +1.012698607692183e+00f, +1.012661400539405e+00f, +1.012615904116265e+00f, +1.012560833005713e+00f,
+1.012497050269805e+00f, +1.012422888521601e+00f, +1.012339226241367e+00f,
+1.012244921966297e+00f, +1.012140460211194e+00f, +1.012024302085441e+00f,
+1.011897560567707e+00f, +1.011758810583150e+00f, +1.011608449127642e+00f,
+1.011445162723270e+00f, +1.011269960947744e+00f, +1.011081255645969e+00f,
+1.010879608424312e+00f, +1.010663676735228e+00f, +1.010434184200640e+00f,
+1.010189681124657e+00f, +1,009930754807923e+00f, +1.009655660215271e+00f,
+1.009365251564694e+00f, +1.009058249873833e+00f, +1,008734758578989e+00f,
+1.008393079963091e+00f, +1.008034308295421e+00f, +1.007656661215973e+00f,
+1.007260142622887e+00f, +1.006843352506855e+00f, +1.006407009542103e+00f,
+1.005949145170711e+00f, +1.005470005637052e+00f, +1.004967986424467e+00f,
+1.004443531995945e+00f, +1.003894772403371e+00f, +1.003321903663793e+00f,
+1.002723127308148e+00f, +1.002098854400575e+00f, +1.001447278873483e+00f,
+1.000768505317086e+00f, +1.000060686758758e+00f, +9.993242684851855e-01f, +9.985573503390627e-01f, +9.977600196406868e-01f, +9.969306036935497e-01f, +9.960694269553644e-01f, +9.951746430061121e-01f, +9.942466438407230e-01f, +9.932837131068657e-01f, +9.922861082472264e-01f, +9.912523092989319e-01f, +9.901827419790691e-01f, +9.890757868707590e-01f, +9.879313024174022e-01f, +9.863553220272523e-01f, +9.847362453480265e-01f, +9.831750948772566e-01f, +9.815583336011345e-01f, +9.798613526271561e-01f, +9.780617486993630e-01f, +9.761574317374303e-01f, +9741378617337759e-01f, +9.719990112065752e-01f, +9.697327413658168e-01f, +9.673331975559332e-01f, +9.647915124057732e-01f, +9.621011497566145e-01f, +9.592539757044516e-01f, +9.562427177295731e-01f, +9.530600909726344e-01f, +9.496984081652284e-01f, +9.461498120176854e-01f, +9.424071613625743e-01f, +9.384634163826711e-01f, +9.343112966094085e-01f, +9.299449872197452e-01f, +9.253567968750328e-01f, +9.205404627076625e-01f, +9.154896280575360e-01f, +9.101986790930605e-01f, +9.046620597741508e-01f, +8.988755194372424e-01f, +8.928338316495705e-01f, +8.865337190368053e-01f, +8.799712722567934e-01f, +8.731437835983047e-01f, +8.660476534563131e-01f, +8.586812520174252e-01f, +8.510420440685049e-01f, +8.431297226886574e-01f, +8.349435141989714e-01f, +8.264839911291133e-01f, +8.177505366573690e-01f, +8.087449817124315e-01f, +7.994681492797084e-01f, +7.899235162194718e-01f, +7.801137731566502e-01f, +7.700431275216928e-01f, +7.597145736971065e-01f, +7.491330971820804e-01f, +7.383028603058783e-01f, +7.272298755824693e-01f, +7.159201919962611e-01f, +7.043814340356083e-01f, +6.926196927377140e-01f, +6.806438831866077e-01f, +6.684616478236647e-01f, +6.560830137986515e-01f, +6.435179268559957e-01f, +6.307755329382612e-01f, +6.178641647786525e-01f, +6.047954625702541e-01f, +5.915799587176216e-01f, +5.782289366005894e-01f, +5.647535885752191e-01f, +5.511703155400274e-01f, +5.374905090437071e-01f, +5.237263500445715e-01f, +5.098915423728255e-01f +4960008074926423e-01f, +4.820662943337458e-01f, +4.681017110048007e-01f, +4.541216995958746e-01f, +4.401421815729068e-01f, +4.261772971493010e-01f, +4.122417888542512e-01f, +3.983499612526493e-01f, +3.845172335531009e-01f, +3.707583717376236e-01f, +3570886786795506e-01f, +3.435228672445627e-01f, +3.300763764703638e-01f, +3.167640325043893e-01f, +3.036004651973109e-01f, +2.905996158436682e-01f, +2.777758503744847e-01f, +2.651434678028531e-01f, +2.527161881181577e-01f, +2.405069849650012e-01f, +2.285283969438072e-01f, +2.167933432162879e-01f, +2.053139897833021e-01f, +1.941021906320988e-01f, +1.831680872008943e-01f, +1.725221947208913e-01f, +1.621735416384834e-01f, +1.521320683467849e-01f, +1.424052801149985e-01f, +1.330015240938615e-01f, +1.239260664828526e-01f, +1.151858295527293e-01f, +1.067840430193724e-01f, +9.872637505002878e-02f, +9.101379000888035e-02f, +8.365057236623055e-02f, +7.663508305536153e-02f, +6.997033405748826e-02f, +6.365188111381365e-02f, +5.768176015814392e-02f, +5.205244216987966e-02f, +4.676538412257621e-02f, +4.180950541438362e-02f, +3.718640251368464e-02f, +3.288072750732215e-02f, +2.889548499582958e-02f, +2.520980565928884e-02f, +2.183057564646272e-02f, +1.872896194002638e-02f, +1.592127815153420e-02f, +1.336381425803020e-02f, +1.108558877807282e-02f, +8.943474189364638e-03f, +6.758124889697787e-03f, +3.504438130619497e-03f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,

```
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0,000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f,        +0.000000000000000e+00f,        +0.000000000000000e+00f,
+0.000000000000000e+00f, +0.000000000000000e+00f, +0.000000000000000e+00f
```

## 8 Bibliography

[1] 3GPP, "Codec for Enhanced Voice Services (EVS); Detailed algorithmic description," [Online]. Available:

http://www.3gpp.org/ftp/Specs/archive/26_series/26.445/26445-d00.zip.

[2] P. P. Julien Faure, "Delay-optimized overlap transform, coding/decoding weighting windows". US Patent US8847795, 28 06 2011.
[3] Geiger, Audio Coding based on integer transform, Ilmenau: https://www.db-thueringen.de/receive/dbt_mods_00010054, 2004.

**Claims**

1.  An apparatus (130, 130A, 110) for encoding an information signal comprising a plurality of frames, the apparatus comprising:

    a modulated lapped transform tool (131) for transforming a time domain, TD, representation of the information signal, or a processed version thereof, into a frequency domain, FD, representation, the modulated lapped transform tool (131) being configured to perform a modulated lapped transform analysis using an analysis windowing function (40, 50, 60, 70) having a meandering portion (44, 64) crossing a linear function (40', 60') in correspondence of at least four points (#1, #2, #3, #4); and
    a bitstream writer (137) configured to prepare a bitstream based on the FD representation of the information signal or a processed version thereof.

2.  The apparatus of claim 1, wherein the modulated lapped transform tool is configured to:

    scale time input buffers and/or cosine or sine values with values of the analysis windowing function (40, 50, 60, 70).

3.  The apparatus of claim 2, wherein the modulated lapped transform tool is configured to use input buffers in the form of

$$t(n) = x(Z - N_F + n) \ for \ \ n = 0..2N_F - 1 - Z,$$

    and

$$t(2N - Z + n) = 0 \ \ for \ \ n = 0..Z - 1$$

    wherein $x(n)$ is a TD sample of the information signal or a processed version of the information signal at the time instant $n$, $N_F$ is the number of samples processed in one frame, and $Z$ is the number of leading zeros in modulated lapped transform window.

4.  The apparatus of any of the preceding claims, wherein the modulated lapped transform tool (131) is configured to perform:

$$X(k) = \sqrt{\frac{2}{N_F}} \sum_{n=0}^{2N_F-1} w_N(n) \cdot t(n) \cos\left[\frac{\pi}{N_F}\left(n + \frac{1}{2} + \frac{N_F}{2}\right)\left(k + \frac{1}{2}\right)\right] \ for \ k = 0..N_F - 1$$

    where $X(k)$ is the modulated lapped transform frequency value at a frequency index $k$, n is the time instant, $w_N(n)$ is the analysis windowing function, $t(n)$ is a time input buffer, and $N_F$ is the number of samples processed in one frame.

5.  An apparatus (140, 140A, 120) for decoding an information signal, or a processed version thereof, defined in the frequency domain, FD, the apparatus comprising:

    a bitstream reader (141) configured to read a bitstream encoding the information signal; and
    an inverse modulated lapped transform tool (147) configured to perform an inverse modulated lapped transform synthesis on the information signal, or a processed version thereof, using a synthesis windowing function (90) having a meandering portion (94) crossing a linear function in correspondence of at least four points (#1, #2, #3, #4).

6. The apparatus of claim 5, wherein the inverse modulated lapped transform tool (147) is configured to:

scale values at a time domain aliasing buffer with values of the synthesis windowing function (90).

7. The apparatus of claim 5 or 6, wherein the inverse modulated lapped transform tool (147) is configured to generate a time domain, TD, signal representation in the form of

$$\hat{t}(n) = \sqrt{\frac{2}{N_F}} \sum_{k=0}^{N_F-1} \hat{X}(k) \cos\left[\frac{\pi}{N_F}\left(n + \frac{1}{2} + \frac{N_F}{2}\right)\left(k + \frac{1}{2}\right)\right] \ for \ n = 0..2N_F - 1$$

wherein $\hat{t}(n)$ is an aliasing buffer, $\hat{X}(k)$ is the information signal or a processed version thereof, and $N_F$ is the number of samples for a TD frame.

8. The apparatus of any of claims 5-7, wherein the inverse modulated lapped transform tool (147) is configured to:

perform a windowing (S162) of the time-aliased buffer.

9. The apparatus of any of claims 5-7, wherein the inverse modulated lapped transform tool (147) is configured to perform a windowing operation by performing:

$$\hat{t}(n) = w_N(2N - 1 - n) \cdot \hat{t}(n) \ for \ n = 0..2N_F - 1$$

10. The apparatus of any of claims 6-9, wherein the inverse modulated lapped transform tool (147) is configured to perform an overlap-and-add operation (S163).

11. The apparatus of claim 10, wherein the inverse modulated lapped transform tool (147) is configured to perform an overlap-and-add operation as:

$$\hat{x}(n) = mem\_ola\_add(n) + \hat{t}(Z + n) \ for \ n = 0..N_F - Z - 1$$

$$\hat{x}(n) = \hat{t}(Z + n) \ for \ n = N_F - Z..N_F - 1$$

$$mem\_ola\_add(n) = \hat{t}(N_F + Z + n) \ for \ n = 0..N_F - Z - 1$$

wherein $\hat{x}(n)$ is the output value, $\hat{t}(.)$ is a windowed time-aliasing buffer, and $N_F$ is the number of samples in one frame.

12. The apparatus (13, 140, 140A, 110, 120) of any of the preceding claims, wherein:

the analysis windowing function (40, 60) and/or the synthesis windowing function (90) is defined so as to be, in the meandering portion (44, 64, 94):

greater than the linear function (40', 60') in a first interval (41, 61', 91) between a first crossing point (#1) and a second crossing point (#2);
lower than the linear function (40', 60') in a second interval (42, 62', 92) between the second crossing point (#2) and a third crossing point (#3);
greater than the linear function (40', 60') in a third interval (43, 63', 93) between the third crossing point (#2) and a fourth crossing point (#4).

13. The apparatus of claim 12, wherein:

the analysis windowing function (40, 60) and/or the synthesis windowing function (90) is defined so that the absolute maximum value (41') is in the first or third interval (41, 43).

14. The apparatus of claim 13, wherein:

the analysis windowing function (40) and/or the synthesis windowing function (90) is defined so that, in the meandering portion (44), a relative maximum value (43') is in the first or third interval (41, 43) and a relative minimum value (42') is in the second interval (42).

15. The apparatus of any of claims 12-14, wherein:

the analysis windowing function (40, 60) and/or the synthesis windowing function (90) is defined so that, in the meandering portion (44, 64, 94), the value of the meandering window function in correspondence to at least one of the first and third interval (41, 43, 61, 63, 91, 93) is greater than 0.9.

16. The apparatus of any of the preceding claims, wherein:

the analysis windowing function (40, 60) and/or the synthesis windowing function (90) is defined so as to present, in the meandering portion (44, 64, 94), a value greater than the linear function in an interval comprised of the 30% and 50% of two frames.

17. The apparatus of any of claims 12-16, wherein:

the analysis windowing function (40, 60) and/or the synthesis windowing function (90) is defined so that the maximum of the analysis windowing function (40, 60) and/or the synthesis windowing function (90) is less than 25% greater than the value of the linear function at the same time instant.

18. The apparatus of any of claims 12-17, wherein:

the analysis windowing function (40, 60) and/or the synthesis windowing function (90) is defined so that the maximum of the analysis windowing function (40, 60) and/or the synthesis windowing function (90) is less than 5% greater than the value of the linear function at the same time instant.

19. The apparatus of any of claims 12-18, wherein:

the analysis windowing function (40, 60) and/or the synthesis windowing function (90) is defined so as to present a second numerical differentiation is between $-3*10^{-4}$ and $+3*10^{-4}$ and/or the third numerical differentiation is between $-2*10^{-5}$ and $+2*10^{-5}$.

20. The apparatus of any of the preceding claims, wherein:

the linear function (40', 60') is defined so as to be a non-increasing function.

21. The apparatus of any of the preceding claims, wherein:

the linear function (40', 60') is defined so as to be a strictly decreasing function.

22. The apparatus of any of the preceding claims, wherein:

the linear function (40', 60') is defined so as to be a non-decreasing function.

23. The apparatus of any of the preceding claims, wherein:

the linear function is defined so as to be a strictly increasing function.

24. The apparatus of any of the preceding claims, wherein:

the linear function (40', 60') is defined so as to have a value which is constant or varies of maximum +2% or -2%.

25. The apparatus of any of the preceding claims, wherein:

   the linear function (40', 60') is defined so as to have increments between - 0.05 and -0.20.

26. The apparatus of any of the preceding claims, wherein:

   the analysis windowing function (40, 60) and/or the synthesis windowing function (90) is defined so as to be asymmetric.

27. The apparatus of any of the preceding claims, wherein:

   the analysis windowing function (40, 60) and the synthesis windowing function (90) is defined are symmetric with each other.

28. The apparatus of any of the preceding claims, further comprising:

   a storage space (113) to store the values of the analysis windowing function (40, 60) and/or the synthesis windowing function (90).

29. The apparatus of any of the preceding claims, wherein the modified lapped transform is a modified discrete cosine transform, MDCT, or a modified discrete sine transform, MDST, and the inverse modified lapped transform is an inverse modified discrete cosine transform, IMDCT, or inverse modified discrete sine transform, IMDST.

30. A system comprising:

   an encoder 130, 130A, 110) as the apparatus of any of claims 1-4 and/or 12-29 in combination with any of claims 1-4; and
   a decoder (140, 140A, 120) as the apparatus of any of claims 5-11 and/or 12-29 in combination with any of claims 5-11.

31. The system of claim 29 or 30, wherein the encoder comprises a communication unit (117) configured to transmit a bitstream and/or the decoder comprises a communication unit (126) configured to receive a bitstream.

32. The system of claim 30 or 31, wherein the analysis windowing function (40, 60) and/or the synthesis windowing function (90) comprises at least a succession, in forward or backward order, formed by the following values or at least a sub-succession with 10 of the following values if different from 0, with $\pm 1\%$ of tolerance:

   -7.078546706512391e-04f, -2.098197727900724e-03f, -4.525198076002370e-03f, -8.233976327300612e-03f, -1.337713096257934e-02f, -1.999721557401502e-02f, -2.800909464274782e-02f, -3.721502082245055e-02f, -4.731768261606175e-02f, -5.794654834034055e-02f, -6.867606753531441e-02f, -7.904647440788692e-02f, -8.859705468085925e-02f, -9.688303623049199e-02f, -1.034961241263523e-01f, -1.080766457616878e-01f, -1.103242262600913e-01f, -1.099809851424550e-01f, -1.068172142230882e-01f, -1.006190418791648e-01f, -9.116452506492527e-02f, -7.820617483254730e-02f, -6.146688124166948e-02f, -4.063362855701623e-02f, -1.536329520788766e-02f, +1.470155068746303e-02f, +4.989736509080558e-02f, +9.050369257152079e-02f, +1.366911019414417e-01f, +1.884686389218322e-01f, +2.456456803467095e-01f, +3.077789078889820e-01f, +3.741642373060188e-01f, +4.438114799213576e-01f, +5.154735456539700e-01f, +5.876661722564289e-01f, +6.587619767809000e-01f, +7.270576699841359e-01f, +7.908752989295335e-01f, +8.486643364959733e-01f, +8.991320235484349e-01f, +9.413348145272842e-01f, +9.747634827941575e-01f, +9.994114730415857e-01f, +1.015760373791603e+00f, +1.024736164069697e+00f, +1.027634294456205e+00f, +1.025991493983836e+00f, +1.021427210603284e+00f, +1.015439859549357e+00f, +1.009366925499550e+00f, +1.003508162416449e+00f, +9.988898206257559e-01f, +9.953133902427869e-01f, +9.925943919208190e-01f, +9.905771957917731e-01f, +9.891371616557014e-01f, +9.881790747212391e-01f, +9.876249269174586e-01f, +9.874056275509585e-01f, +9.874524849192456e-01f, +9.876951134084213e-01f, +9.880640617030884e-01f, +9.884926873551375e-01f, +9.889230031022089e-01f, +9.893074965384659e-01f, +9.896146331889107e-01f, +9.898319269347060e-01f, +9.899693102025342e-01f, +9.900603352632121e-01f, +9.901575015155720e-01f, +9.903255289051605e-01f, +9.906303787150326e-01f, +9.911298894709990e-01f, +9.918665491182922e-01f, +9.928619727154252e-01f, +9.941156069136238e-01f, +9.956033775539884e-01f, +9.972793109558521e-01f, +9.990784840729244e-01f, +1.000922365901945e+00f, +1.002728111386909e+00f, +1.004416038098237e+00f, +1.005919224127911e+00f, +1.007189345025525e+00f, +1,008200146369426e+00f, +1.008949493525753e+00f, +1.009458241425143e+00f, +1.009768980817384e+00f, +1.009940336228694e+00f, +1.010039453539107e+00f, +1.010132323996401e+00f, +1.010272524848519e+00f, +1.010494354532353e+00f, +1.010808068774316e+00f, +1.011201071127927e+00f, +1.011641272406023e+00f, +1.012080125934687e+00f, +1.012458183122033e+00f, +1.012706955800289e+00f, +1.012755013843985e+00f, +1.012530134411619e+00f, +1.011962331100864e+00f, +1.010982135506986e+00f, +1.009512438049510e+00f, +1.007460860286395e+00f, +1.004708677491086e+00f, +1.001111413242302e+00f, +9.965041017623596e-01f, +9.907199995730845e-01f, +9.823765865983288e-01f, +9.708821747608998e-01f, +9.546732976073705e-01f, +9.321553861564006e-01f, +9.018003682081348e-01f, +8.623984077953557e-01f, +8.132817365236141e-01f, +7.544551974836834e-01f, +6.866580716267418e-01f, +6.113488038789190e-01f, +5.306181649316597e-01f, +4.471309850999502e-01f, +3.639114681156236e-01f, +2.841647033392408e-01f, +2.110209448747969e-01f, +1.472287968327703e-01f, +9.482665349502291e-02f, +5.482436608328477e-02f, +2.701461405056264e-02f, +9.996743588367519e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

33. The system of claim 30 or 31, wherein the analysis windowing function (40, 60) and/or the synthesis windowing function (90) comprises at least a succession, in forward or backward order, formed by the following values or at least a sub-succession with 10 of the following values if different from 0, with ±1% of tolerance:

-4.619898752628163e-04f, -9.747166718929050e-04f, -1,664473096973725e-03f, -2.597106916737789e-03f, -3.806285163352241e-03f, -5.324608721716763e-03f, -7.175885277771099e-03f, -9.382480860899108e-03f, -1.195270300743193e-02f, -1.489528159506296e-02f, -1.820666399965468e-02f, -2.187570925786862e-02f, -2.588471937157619e-02f, -3.020862738245264e-02f, -3.481597793538342e-02f, -3.967067992672979e-02f, -4.472698045914417e-02f, -4.994225863256500e-02f, -5.526334794593565e-02f, -6.063717235243996e-02f, -6.600961519440657e-02f, -7.131966266443390e-02f, -7.651178225890490e-02f, -8.152964005319532e-02f, -8.631137544905677e-02f, -9.080411291245728e-02f, -9.495377758870335e-02f, -9.870736514214426e-02f, -1.020202684361974e-01f, -1.048438825017798e-01f, -1.071382314127799e-01f, -1.088690135027248e-01f, -1.099969655786929e-01f, -1.104898474883336e-01f, -1.103225838568563e-01f, -1.094621746650760e-01f, -1.078834293141886e-01f, -1.055612509762041e-01f, -1.024650162703341e-01f, -9.857014566194629e-02f, -9.384684920715425e-02f, -8.826309993000785e-02f, -8.178792716809512e-02f, -7.438785600211463e-02f, -6.602189797715241e-02f, -5.665655641133161e-02f, -4.624456893420224e-02f, -3.474585776145929e-02f, -2.211581608120528e-02f, -8.310425696208936e-03f, +6.717697635290676e-03f, +2.300642061077823e-02f, +4.060106462625085e-02f, +5.953239090915557e-02f, +7.983354189816511e-02f, +1.015233140203748e-01f, +1.246171387327525e-01f, +1.491152519299797e-01f, +1.750067399059861e-01f, +2.022699854906251e-01f, +2.308655379767671e-01f, +2.607365124918583e-01f, +2.918144694729168e-01f, +3.240095704645023e-01f, +3.572175180786021e-01f, +3.913146885756875e-01f, +4.261571642320424e-01f, +4.615925445090212e-01f, +4.974471592901086e-01f, +5.335326819631583e-01f, +5.696546730080154e-01f, +6.056083823929643e-01f, +6.411830842823245e-01f, +6.761653499550255e-01f, +7.103400549562944e-01f, +7.434943718765665e-01f, +7.754281892901473e-01f, +8.059437233154637e-01f, +8.348589373399948e-01f, +8.620108336276733e-01f, +8.872599706865123e-01f, +9.104863121445679e-01f, +9.315962496426278e-01f, +9.505220861927248e-01f, +9.672366712325431e-01f, +9.817397501303696e-01f, +9.940557180662704e-01f, +1.004247514102417e+00f, +1.012407428282884e+00f, +1.018650990561848e+00f,
+1.023118841384460e+00f, +1.025972450969440e+00f, +1.027397523939210e+00f,
+1.027585830688143e+00f, +1.026738673647482e+00f, +1.025061777648234e+00f,
+1.022756514615106e+00f, +1.020009139549275e+00f, +1.016996499560845e+00f,
+1.013915946100629e+00f, +1.011044869639164e+00f, +1.007773858455400e+00f,
+1.004848753962734e+00f, +1.002245009135684e+00f, +9.999393169239009e-01f,
+9.979055415627330e-01f, +9.961203379971326e-01f, +9.945597525471822e-01f, +9.932031606606762e-01f, +9.920297273323891e-01f, +9.910230654424902e-01f, +9.901668953434221e-01f,
+9.894488374513719e-01f, +9.888556356037892e-01f, +9.883778520531268e-01f, +9.880051626345804e-01f, +9.877295459610343e-01f, +9.875412739766566e-01f, +9.874329809802893e-01f,
+9.873949921033299e-01f, +9.874197049003676e-01f, +9.874973205882319e-01f, +9.876201238703241e-01f, +9.877781920433015e-01f, +9.879637979933339e-01f, +9.881678007807095e-01f,
+9.883835200189653e-01f, +9.886022219397892e-01f, +9.888182771263505e-01f, +9.890247977602895e-01f, +9.892178658748239e-01f, +9.893923680007577e-01f, +9.895463342815009e-01f,
+9.896772011542693e-01f, +9.897859195209235e-01f, +9.898725363809847e-01f, +9.899410789223559e-01f, +9.899945557067980e-01f, +9.900394023736973e-01f, +9.900814722948890e-01f,
+9.901293790312005e-01f, +9.901902265696609e-01f, +9.902734448815004e-01f, +9.903862280081246e-01f, +9.905379830873822e-01f, +9.907348826312993e-01f, +9.909842592301273e-01f,
+9.912905118607647e-01f, +9.916586940166509e-01f, +9.920906151219310e-01f, +9.925887208794144e-01f, +9.931516528513824e-01f, +9.937790866568735e-01f, +9.944668184371617e-01f,
+9.952116634297566e-01f, +9.960068616185641e-01f, +9.968461329825753e-01f, +9.977203369515556e-01f, +9.986213520769593e-01f, +9.995382582242990e-01f, +1.000461955079660e+00f,
+1.001380551217109e+00f, +1.002284871786226e+00f, +1.003163845364970e+00f,
+1.004009147462043e+00f, +1.004811375053364e+00f, +1.005563968008037e+00f,
+1.006259855360867e+00f, +1.006895570408563e+00f, +1.007466616298057e+00f,
+1.007972441990187e+00f, +1.008411468616852e+00f, +1,008786009787269e+00f,
+1.009097763850333e+00f, +1.009351762546296e+00f, +1.009552401900961e+00f,
+1.009707093778162e+00f, +1,009822090220407e+00f, +1,009906958448099e+00f,
+1.009969021400474e+00f, +1.010017890428877e+00f, +1.010060809299530e+00f,
+1.010106564965965e+00f, +1.010161131093372e+00f, +1,010231078494249e+00f,
+1.010319484524512e+00f, +1.010430470494512e+00f, +1.010564099281000e+00f,
+1.010721360243234e+00f, +1.010899655674578e+00f, +1.011096993993037e+00f,
+1.011308167670753e+00f, +1.011529185153809e+00f, +1.011753008569803e+00f,
+1.011973876511603e+00f, +1.012182837094955e+00f, +1.012373028737774e+00f,
+1.012535058602453e+00f, +1.012660975529858e+00f, +1.012740575296603e+00f,
+1.012765922449960e+00f, +1.012726958954961e+00f, +1.012615904116265e+00f,
+1,012422888521601e+00f, +1.012140460211194e+00f, +1.011758810583150e+00f,
+1.011269960947744e+00f, +1.010663676735228e+00f, +1.009930754807923e+00f,
+1.009058249873833e+00f, +1.008034308295421e+00f, +1.006843352506855e+00f,
+1,005470005637052e+00f, +1.003894772403371e+00f, +1.002098854400575e+00f,
+1.000060686758758e+00f, +9.977600196406868e-01f, +9.951746430061121e-01f,
+9.922861082472264e-01f, +9.890757868707590e-01f, +9.847362453480265e-01f, +9.798613526271561e-01f, +9.741378617337759e-01f, +9.673331975559332e-01f, +9.592539757044516e-01f,
+9,496984081652284e-01f, +9.384634163826711e-01f, +9.253567968750328e-01f, +9.101986790930605e-01f, +8.928338316495705e-01f, +8.731437835983047e-01f, +8.510420440685049e-01f,
+8.264839911291133e-01f, +7994681492797084e-01f, +7.700431275216928e-01f, +7.383028603058783e-01f, +7.043814340356083e-01f, +6.684616478236647e-01f, +6.307755329382612e-01f,
+5.915799587176216e-01f, +5.511703155400274e-01f, +5.098915423728179e-01f, +4.681017110047964e-01f, +4.261772971493010e-01f, +3.845172335531009e-01f, +3.435228672445613e-01f,
+3.036004651973099e-01f, +2.651434678028531e-01f, +2.285283969438072e-01f, +1.941021906320984e-01f, +1.621735416384830e-01f, +1.330015240938615e-01f, +1.067840430193724e-01f,
+8.365057236623041e-02f, +6.365188111381356e-02f, +4.676538412257621e-02f, +3.288072750732215e-02f, +2,183057564646270e-02f, +1.336381425803019e-02f, +6.758124889697787e-03f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,

+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.00000O000000000e+00f, +0.000000000000000e+00f,
+0.000000000000000e+00f, +0.000000000000OOe+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

34. The system of claim 30 or 31, wherein the analysis windowing function (40, 60) and/or the synthesis windowing function (90) comprises at least a succession, in forward or backward order, formed by the following values or at least a sub-succession with 10 of the following values if different from 0, with ±1 % of tolerance:

-3.613496418928369e-04f, -7.078546706512391e-04f, -1.074443637110903e-03f, -1.533478537964509e-03f, -2.098197727900724e-03f, -2.778420871815740e-03f, -3.584129920673041e-03f, -4.525198076002370e-03f, -5.609327243712055e-03f, -6.843234536105624e-03f, -8.233976327300612e-03f, -9.785314755557023e-03f, -1.149880303071551e-02f, -1.337713096257934e-02f, -1.542181679511618e-02f, -1.762979910961727e-02f, -1.999721557401502e-02f, -2.252080561390149e-02f, -2.519406300389030e-02f, -2.800909464274782e-02f, -3.095765092956728e-02f, -3.402996266948349e-02f, -3.721502082245055e-02f, -4.050053247568393e-02f, -4.387219218706189e-02f, -4.731768261606175e-02f, -5.082325342672667e-02f, -5.437166635159518e-02f, -5.794654834034055e-02f, -6.153426201732499e-02f, -6.511708163113709e-02f, -6.867606753531441e-02f, -7.219447805250771e-02f, -7.565695975592170e-02f, -7.904647440788692e-02f, -8.234442557322251e-02f, -8.553324579905185e-02f, -8.859705468085925e-02f, -9.152091100798199e-02f, -9.428847446755965e-02f, -9.688303623049198e-02f, -9.929123258537813e-02f, -1.015008467688577e-01f, -1.034961241263523e-01f, -1.052637003544443e-01f, -1.067939984687745e-01f, -1.080766457616878e-01f, -1.090997300590506e-01f, -1.098524491515805e-01f, -1.103242262600913e-01f, -1.105084619148789e-01f, -1.103977408741932e-01 f, -1.099809851424550e-01f, -1.092492774392824e-01f, -1.081974227416502e-01f, -1.068172142230882e-01f, -1.050995803285455e-01f, -1.030360111111103e-01f, -1.006190418791648e-01f, -9.784120023411771e-02f, -9.469304216883027e-02f, -9.116452506492527e-02f, -8.724644532866996e-02f, -8.293043914044632e-02f, -7.820617483254730e-02f, -7.306142427456862e-02f, -6.748468182105991e-02f, -6.146688124166948e-02f, -5.499497258200362e-02f, -4.805444424454820e-02f, -4.063362855701623e-02f, -3.272045590229335e-02f, -2.430122582451853e-02f, -1,536329520788766e-02f, -5.891434269890659e-03f, +4.126595858583295e-03f, +1.470155068746303e-02f, +2.584738191459814e-02f, +3.757652772246801e-02f, +4.989736509080558e-02f, +6.282034030592902e-02f, +7.635397728566121e-02f, +9.050369257152079e-02f, +1.052747118478660e-01f, +1.206703467513333e-01f, +1.366911019414417e-01f, +1.533343890681390e-01f, +1.705954709184399e-01f, +1.884686389218322e-01f, +2.069449962574092e-01f, +2.260093000067393e-01f, +2.456456803467095e-01f, +2.658346019332584e-01f, +2.865543814049772e-01f, +3.077789078889820e-01f, +3.294769437072290e-01f, +3.516171481750350e-01f, +3.741642373060188e-01f, +3.970739591211551e-01f, +4.203043046885219e-01f, +4.438114799213576e-01f, +4.675442291623012e-01f, +4.914498631045615e-01f, +5.154735456539700e-01f, +5.395557644293222e-01f, +5.636399817032525e-01f, +5.876661722564289e-01f, +6.115695310143157e-01f, +6.352890592874099e-01f, +6.587619767809000e-01f, +6.819230974423550e-01f, +7.047092819314779e-01f, +7.270576699841359e-01f, +7.489068963384272e-01f, +7.701990187606995e-01f, +7.908752989295335e-01f, +8.108788692151807e-01f, +8.301579139160681e-01f, +8.486643364959733e-01f, +8.663548164329093e-01f, +8.831896853053627e-01f, +8.991320235484349e-01f, +9.141540563656075e-01f, +9.282282546151819e-01f, +9.413348145272842e-01f, +9.534619388400459e-01f, +9.646048250501910e-01f, +9.747634827941575e-01f, +9.839435385219192e-01f, +9.921529097154242e-01f, +9.994114730415857e-01f, +1.005746084650236e+00f, +1.011183971347815e+00f, +1.015760373791603e+00f, +1.019515072412387e+00f, +1.022490937034641e+00f,
+1.024736164069697e+00f, +1.026304095700693e+00f, +1.027250978292214e+00f,
+1.027634294456205e+00f, +1.027511063644843e+00f, +1.026942795115598e+00f,
+1.025991493983836e+00f, +1.024716149969084e+00f, +1.023175976163407e+00f,
+1.021427210603284e+00f, +1.019521566634239e+00f, +1.017510118327508e+00f,
+1.015439859549357e+00f, +1.013460916839174e+00f, +1.011654901040475e+00f,
+1.009366925499550e+00f, +1.007263182132894e+00f, +1.005313192386866e+00f,
+1.003508162416449e+00f, +1.001840787319378e+00f, +1.000303927234380e+00f,
+9.988898206257559e-01f, +9.975915283480670e-01f, +9.964015284765968e-01f, +9.953133902427869e-01f, +9.943201078053212e-01f, +9.934158959186011e-01f, +9.925943919208190e-01f, +9.918510277326026e-01f, +9.911797988363887e-01f, +9.905771957917731e-01f, +9900381047643838e-01f, +9.895594394179152e-01f, +9.891371616557014e-01f, +9.887684373604154e-01f, +9.884497924570929e-01f, +9.881790747212391e-01f, +9.879528358230726e-01f, +9.877691368590689e-01f, +9.876249269174586e-01f, +9.875179947346887e-01f, +9.874458127312921e-01f, +9.874056275509585e-01f, +9.873951115886979e-01f, +9.874115368168944e-01f, +9.874524849192456e-01f, +9.875149888347144e-01f, +9.875968894760857e-01f, +9.876951134084213e-01f, +9.878075819424549e-01f, +9.879311998177238e-01f, +9.880640617030884e-01f, +9.882032571565917e-01f, +9.883471084085503e-01f, +9.884926873551375e-01f, +9.886386592120545e-01f, +9.887825578295630e-01f, +9.889230031022089e-01f, +9.890581715933395e-01f, +9.891867674284610e-01f, +9.893074965384659e-01f, +9.894196399062921e-01f, +9.895220757174378e-01f, +9.896146331889107e-01f, +9.896970346678272e-01f, +9.897692596535289e-01f, +9898319269347060e-01f, +9.898852572653667e-01f, +9.899307640365727e-01f, +9.899693102025343e-01f, +9.900025692522435e-01f, +9.900321562263099e-01f, +9.900603352632121e-01f, +9.900889812894406e-01f, +9.901206586012907e-01f, +9.901575015155720e-01f, +9.902023946214220e-01f, +9.902575406142213e-01f, +9.903255289051605e-01f, +9.904087914462694e-01f, +9.905096491583045e-01f, +9.906303787150326e-01f, +9.907727108894024e-01f, +9.909387444078919e-01f, +9.911298894709990e-01f, +9.913476318763218e-01f, +9.915928560402563e-01f, +9.918665491182922e-01f, +9.921691315380984e-01f, +9.925010851461232e-01f, +9.928619727154252e-01f, +9.932519181564613e-01f, +9.936700207375173e-01f, +9.941156069136238e-01f, +9.945873147903244e-01f, +9.950837402063278e-01f, +9.956033775539884e-01f, +9.961439922621166e-01f, +9.967034533921340e-01f, +9.972793109558521e-01f, +9.978690858367024e-01f, +9.984697087896268e-01f, +9.990784840729244e-01f, +9.996919011206490e-01f, +1.000308193833526e+00f,
+1.000922365901945e+00f, +1.001532636590676e+00f, +1.002135464655177e+00f,
+1.002728111386909e+00f, +1.003307449770187e+00f, +1.003870934089686e+00f,
+1.004416038098237e+00f, +1.004940548815171e+00f, +1.005442141810160e+00f,
+1.005919224127911e+00f, +1.006370303149314e+00f, +1.006793927824538e+00f,
+1.007189345025525e+00f, +1.007555573455895e+00f, +1.007892674961336e+00f,
+1.008200146369426e+00f, +1.008478423284851e+00f, +1.008727884997619e+00f,
+1.008949493525753e+00f, +1.009144112734761e+00f, +1.009313224929575e+00f,
+1.009458241425143e+00f, +1.009581280555682e+00f, +1.009684090687164e+00f,
+1.009768980817384e+00f, +1.009838308708799e+00f, +1.009894548257807e+00f,
+1.009940336228694e+00f, +1.009977916643680e+00f, +1.010010230290263e+00f,
+1.010039453539107e+00f, +1.010068202038694e+00f, +1.010098388689342e+00f,
+1.010132323996401e+00f, +1.010171656775640e+00f, +1.010218096148412e+00f,
+1.010272524848519e+00f, +1.010336490294771e+00f, +1.010410221483215e+00f,
+1.010494354532353e+00f, +1.010588873699422e+00f, +1.010693501186928e+00f,
+1.010808068774316e+00f, +1.010931436739342e+00f, +1.011062876503041e+00f,
+1.011201071127927e+00f, +1.011344700694417e+00f, +1.011491904228184e+00f,
+1.011641272406023e+00f, +1.011790282474963e+00f, +1.011937567254485e+00f,
+1.012080125934687e+00f, +1.012216235487353e+00f, +1.012342907951334e+00f,
+1.012458183122033e+00f, +1,012558879696851e+00f, +1.012642857380847e+00f,
+1.012706955800289e+00f, +1.012748952907404e+00f, +1.012765799894453e+00f,
+1.012755013843985e+00f, +1.012713798678211e+00f, +1.012639775003457e+00f,
+1.012530134411619e+00f, +1.012382309473470e+00f, +1.012194068117524e+00f,
+1.011962331100864e+00f, +1.011685173724601e+00f, +1.011359143572147e+00f, +1.010982135506986e+00f, +1.010550715971368e+00f, +1.010062133151922e+00f,
+1.009512438049510e+00f, +1.008898689394160e+00f, +1.008215923600973e+00f,
+1.007460860286395e+00f, +1.006627741823389e+00f, +1.005712337656749e+00f, +1.004708677491086e+00f, +1.003611467285588e+00f, +1.002414286392268e+00f, +1.001111413242302e+00f, +9.996961651093181e-01f, +9.981625949525345e-01f, +9.965041017623596e-01f, +9.947148884277037e-01f, +9.927891912841345e-01f, +9.907199995730845e-01f, +9884793707533194e-01f, +9.855347660016696e-01f, +9.823765865983286e-01f, +9.789747333404933e-01f, +9.751623811486372e-01f, +9.708821747608998e-01f, +9.660805524695870e-01f, +9.606976399184645e-01f, +9.546732976073706e-01f, +9.479479345282376e-01f, +9.404609052933396e-01f, +9.321553861564006e-01f, +9.229775478442888e-01f, +9.128745354570823e-01f, +9.018003682081348e-01f, +8.897163275605041e-01f, +8.765908974996186e-01f, +8.623984077953557e-01f, +8.471200801854385e-01f, +8.307479727020245e-01f, +8.132817365236141e-01f, +7.947291447585267e-01f, +7.751108841891807e-01f, +7.544551974836834e-01f, +7.327963552921717e-01f, + 7.101790843209148e-01f, +6.866580716267418e-01f, +6.622962432368731e-01f, +6.371684119604742e-01f, +6.113488038789190e-01f, +5.849206604934815e-01f, +5.579747428663487e-01f, +5.306181649316717e-01f, +5.029523957059122e-01f, +4.750868825511614e-01f, +4.471309850999535e-01f, +4.192049917945288e-01f, +3.914252910998820e-01f, +3.639114681156252e-01f, +3.367837772954476e-01f, +3.101627843160973e-01f, +2.841647033392418e-01f, +2.589033711808454e-01f, +2.344880603710975e-01f, +2.110209448747974e-01f, +1.885997642296488e-01f, +1.673100807904834e-01f, +1.472287968327706e-01f, +1.284223074167396e-01f, +1.109422548710344e-01f, +9.482665349502306e-02f, +8.009914366829558e-02f, +6.676765847398403e-02f, +5,482436608328485e-02f, +4.424588851571281e-02f, +3.499361000717621e-02f, +2.701461405056267e-02f, +2.024370180670145e-02f, +1.460796755137538e-02f, +9.996743588367531e-03f, +5.305235098871444e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.0000O0000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000O00e+00f, +0.000000000000036e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f. +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

**35.** The system of claim 30 or 31, wherein the analysis windowing function (40, 60) and/or the synthesis windowing function (90) comprises at least a succession, in forward or backward order, formed by the following values or at least a sub-succession with 10 of the following values if different from 0, with ±1% of tolerance:

-3.021153494057143e-04f, -5.867737487939294e-04f, -8.366504004139796e-04f, -1.126635355725494e-03f, -1.470492941694331e-03f, -1.873473391018495e-03f, -2.339292362082021e-03f, -2.872008069419264e-03f, -3.476256385086407e-03f, -4.155963816705528e-03f, -4.914563787665504e-03f, -5.755172503953251e-03f, -6.680623380533122e-03f, -7.693816924650567e-03f, -8.796760749750191e-03f, -9.990503073705982e-03f, -1.127574117138621e-02f, -1.265334152129685e-02f, -1.412438986522702e-02f, -1.568889620430290e-02f, -1.734512089366117e-02f, -1.909097368362797e-02f, -2.092546711168754e-02f, -2.284684792818856e-02f, -2.485207716234951e-02f, -2.693746704328349e-02f, -2.909952486193999e-02f, -3.133504629493832e-02f, -3.363960728361352e-02f, -3.600820974457969e-02f, -3.843601741746971e-02f, -4.091746034850161e-02f, -4.344654894948344e-02f, -4.601786724624048e-02f, -4.862598509282497e-02f, -5.126474204655663e-02f, -5.392644753556616e-02f, -5.660384311081047e-02f, -5.929116747072080e-02f, -6.198268202511926e-02f, -6.467025548071184e-02f, -6.734542216184526e-02f, -7.000099017198280e-02f, -7.263057011354321e-02f, -7.522784961377151e-02f, -7.778525942347714e-02f, -8.029480247839878e-02f, -8.274924535373614e-02f, -8.514125464087215e-02f, -8.746379123238275e-02f, -8.971069341834263e-02f, -9.187564084638347e-02f, -9.395176975347193e-02f, -9.593137735886889e-02f, -9.780843257659243e-02f, -9.957851303827886e-02f, -1.012361165314596e-01f, -1.027741036495644e-01f, -1.041861222641119e-01f, -1.054680247057000e-01f, -1.066160875985523e-01f, -1.076255384835563e-01f, -1.084912299471198e-01f, -1.092087422379003e-01f, -1.097736146613313e-01f, -1.101808861640070e-01f, -1.104271876052675e-01f, -1.105108362290460e-01f, -1.104281465492726e-01f, -1.101739218186236e-01f, -1,097437360338336e-01f, -1.091353125572511e-01f, -1.083467335729228e-01f, -1073739938306107e-01f, -1.062130155324388e-01f, -1.048606145834788e-01f, -1.033132401525343e-01f, -1.015673163469357e-01f, -9.962005506126154e-02f, -9.746803229469267e-02f, -9.510723623306666e-02f, -9.253303383231506e-02f, -8.974125216128212e-02f, -8.672877689119252e-02f, -8.349213839083708e-02f, -8.002639902061687e-02f, -7.632679536516856e-02f, -7.238806162166744e-02f, -6.820576796149519e-02f, -6.377611429172260e-02f, -5.909386001558149e-02f, -5.415316322402774e-02f, -4.894812724598650e-02f, -4.347347112195197e-02f, -3.772461300253332e-02f, -3.169587609244436e-02f, -2.538179830690266e-02f, -1.877689096555516e-02f, -1.187461378850388e-02f, -4.669099247423082e-03f, +2.844096748870385e-03f, +1.066976124794342e-02f, +1.881355950582949e-02f, +2.728156010437695e-02f, +3.607810469851272e-02f, +4.520702759803914e-02f, +5,467238802204326e-02f, +6.447866054615346e-02f, +7.462862199422061e-02f, +8.512490568723846e-02f, +9.596983987496970e-02f, +1.071650779014335e-01f, +1.187115850305241e-01f, +1.306101067250375e-01f, +1.428596447589721e-01f, +1.554584725339102e-01f, +1.684041609371527e-01f, +1.816947894623263e-01f, +1,953273880886783e-01f, +2.092963206850239e-01f, +2.235945635254679e-01f, +2.382160219461597e-01f, +2.531529721334063e-01f, +2.683961570569586e-01f, +2.839361392493072e-01f, +2.997624255177811e-01f, +3.158619077906196e-01f, +3.322210551086769e-01f, +3.488264676990591e-01f, +3.656640377499646e-01f, +3.827152968157059e-01f, +3.999611859760947e-01f, +4.173843265025887e-01f, +4.349669624916473e-01f, +4.526876397402144e-01f, +4.705242008503956e-01f, +4.884539254831315e-01f, +5.064545550235134e-01f, +5.245006748662190e-01f, +5.425674372882107e-01f, +5.606312044701524e-01f, +5.786672646386708e-01f, +5.966477035050948e-01f, +6.145458904162185e-01f, +6.323361944662236e-01f, +6.499926319211774e-01f, +6.674874032292857e-01f, +6.847932667399612e-01f, +7.018835463513400e-01f, +7.187322544823347e-01f, +7.353128213893310e-01f, + 7.516001985652684e-01f, +7.675699252273948e-01f, +7.831974571624924e-01f, +7.984583859818390e-01f, +8.133295347030278e-01f, +8.277892271515950e-01f, +8.418178561101360e-01f, +8.553961300139363e-01f, +8.685068980898102e-01f, +8.811334436653052e-01f, +8.932596784799233e-01f, +9048748835980528e-01f, +9.159657608120536e-01f, +9.265215299450000e-01f, +9.365339988633418e-01f, +9.459977028429117e-01f, +9.549088408436811e-01f, +9.632658122557368e-01f, +9.710688896122810e-01f, +9.783204156360773e-01f, +9.850226760127131e-01f, +9.911792082081333e-01f, +9.967989944502682e-01f, +1.001894024615659e+00f, +1.006474342231823e+00f, +1.010552057109195e+00f, +1.014142538208007e+00f, +1.017262593268930e+00f, +1,019928842669923e+00f, +1.022159867011177e+00f, +1.023976320927187e+00f, +1.025400734608122e+00f, +1,026455340400072e+00f, +1.027164510654160e+00f, +1.027552729180790e+00f, +1.027644462380432e+00f, +1,027463246660797e+00f, +1.027035903410657e+00f, +1.026389068000259e+00f, +1.025548201799728e+00f, +1.024537134749709e+00f, +1.023380803775376e+00f, +1.022103695693341e+00f, +1.020728359657958e+00f, +1.019275334687329e+00f, +1.017765178792830e+00f, +1.016217355867531e+00f, +1.014665311686846e+O0f, +1.013249071090664e+00f, +1.011948006992127e+00f, +1.010189090179223e+00f, +1.008557961167850e+00f, +1.007011287608451e+00f, +1.005548764575910e+00f, +1.004168417268956e+00f,      +1.002867268893035e+00f,      +1.001641769115897e+00f,
+1.000489068954641e+00f,      +9.994060799749374e-01f,      +9.983898865406841e-01f,
+9.974370849972721e-01f, +9.965444836911705e-01f, +9.957098545943852e-01f, +9.949302413030897e-01f,      +9.942024045863540e-01f,      +9.935241604969254e-01f,      +9.928930430130044e-01f,
+9.923068103443909e-01f, +9917633778190438e-01f, +9.912597642374404e-01f, +9.907954498484041e-01f,      +9.903677893656558e-01f,      +9.899751611066148e-01f,      +9.896160337369861e-01f,
+9.892890160408989e-01f, +9.889928511129679e-01f, +9.887260333430423e-01f, +9.884868721088945e-01f,      +9.882751039537586e-01f,      +9.880892168751595e-01f,      +9.879277114724612e-01f,
+9.877898261218510e-01f, +9.876743442038471e-01f, +9.875807496078497e-01f, +9.875072021876561e-01f,      +9.874529447589979e-01f,      +9.874169741527905e-01f,      +9.873984685207834e-01f,
+9.873958301311858e-01f, +9.874080027710336e-01f, +9.874343401290739e-01f, +9.874736235387018e-01f,      +9.875243137719285e-01f,      +9.875856201221135e-01f,      +9.876563785063032e-01f,
+9.877358921155149e-01f, +9.878225576787804e-01f, +9.879150968481590e-01f, +9.880132731565830e-01f,      +9.881156946084619e-01f,      +9.882211314188272e-01f,      +9.883289032519310e-01f,
+9.884378310018685e-01f, +9885476787868710e-01f, +9.886568414746639e-01f, +9.887645868459630e-01f,      +9.888708540445242e-01f,      +9.889744320992592e-01f,      +9.890747269455915e-01f,
+9.891710038703801e-01f, +9.892631024032380e-01f, +9.893507219573624e-01f, +9.894330645494204e-01f,      +9.895096919388534e-01f,      +9.895810813422480e-01f,      +9.896467469067676e-01f,
+9.897067365020641e-01f, +9.897606930400666e-01f, +9.898094478563998e-01f, +9.898530133261707e-01f,      +9.898914705684924e-01f,      +9.899254194103574e-01f,      +9.899554202030650e-01f,
+9.899824494486951e-01f, +9.900065116928948e-01f, +9.900284805353695e-01f, +9.900497484789281e-01f,      +9.900709561632662e-01f,      +9.900928358611601e-01f,      +9.901163920607219e-01f,
+9.901427479709606e-01f, +9.901734275350572e-01f, +9.902087332329851e-01f, +9.902498637985275e-01f,      +9.902983686695558e-01f,      +9.903548501470234e-01f,      +9.904205084933333e-01f,
+9.904959297726740e-01f, +9.905825150202904e-01f, +9.906812569810133e-01f, +9.907922087340426e-01f,      +9.909165464981378e-01f,      +9.910550740962871e-01f,      +9.912084614290896e-01f,
+9.913768610980639e-01f, +9.915605826937839e-01f, +9.917604214872976e-01f, +9.919767175562684e-01f,      +9.922091101818779e-01f,      +9.924579135466506e-01f,      +9.927231225056266e-01f,
+9.930049538427406e-01f, +9.933027281437943e-01f, +9.936161084869942e-01f, +9.939453714404443e-01f,      +9.942895145656371e-01f,      +9.946481676207727e-01f,      +9.950203031067961e-01f,
+9.954058173659507e-01f, +9.958038713694317e-01f, +9.962130271017117e-01f, +9.966324689957675e-01f,      +9.970615306490058e-01f,      +9.974990583293081e-01f,      +9.979437430375855e-01f,
+9.983940572002874e-01f, +9.988493116887893e-01f, +9.993083430214909e-01f, +9.997689221333534e-01f,      +1.000231131275969e+00f,      +1.000692135698996e+00f,      +1.001152013920163e+00f,
+1.001608526000461e+00f,      +1.002060493867275e+00f,      +1.002507212061815e+00f,
+1.002947129400411e+00f,      +1.003378909587027e+00f,      +1.003801368578070e+00f,
+1.004213810320699e+00f,      +1.004615386562846e+00f,      +1.005004618375781e+00f,
+1.005380628601598e+00f,      +1.005743282364652e+00f,      +1.006091510392348e+00f,
+1.006424907424988e+00f,      +1.006742427727669e+00f,      +1.007044321511378e+00f,
+1.007330218597112e+00f,      +1.007599401798709e+00f,      +1.007852064386603e+00f,
+1.008088176165563e+00f,      +1.008308033204578e+00f,      +1.008511247273756e+00f,
+1.008698144207627e+00f,      +1.008869515256392e+00f,      +1.009025659761512e+00f,
+1.009166718967367e+00f,      +1.009293362609020e+00f,      +1.009406398832440e+00f,
+1.009507017171120e+00f,      +1.009595264293017e+00f,      +1.009672145744679e+00f,
+1.009739084785160e+00f,      +1.009796675060142e+00f,      +1.009846137382005e+00f,
+1.009888083631667e+00f,      +1,009924092276850e+00f,      +1.009955384765721e+00f,
+1.009982268770147e+00f,      +1.010006298177305e+00f,      +1.010028618428735e+00f,
+1.010050254076988e+00f,      +1.010071952131355e+00f,      +1.010094366238073e+00f,
+1.010118917317053e+00f,      +1.010146497096682e+00f,      +1.010177110711677e+00f,
+1.010211755260102e+00f,      +1.010251003469427e+00f,      +1.010295468653759e+00f,
+1.010345234996637e+00f,      +1.010400316698172e+00f,      +1.010461564316351e+00f,
+1.010528615445659e+00f,      +1.010601521285347e+00f,      +1.010679788081867e+00f,
+1.010763905869062e+00f,      +1.010853429760676e+00f,      +1.010947547074519e+00f,
+1.011045953108263e+00f,      +1.011148486293359e+00f,      +1.011254397791134e+00f,
+1.011363082075863e+00f,      +1.011473302008831e+00f,      +1.011584996312149e+00f,
+1.011697416504599e+00f,      +1.011808919793469e+00f,      +1.011919264025716e+00f,
+1.012027240794153e+00f,      +1.012132151631041e+00f,      +1.012232734564333e+00f,
+1.012327560477901e+00f,      +1.012416383754384e+00f,      +1.012497890726292e+00f, +1.012570434021054e+00f, +1.012633295255708e+00f, +1.012685277016726e+00f,
+1.012725564992284e+00f, +1.012752577651415e+00f, +1.012765062889864e+00f,
+1.012762356719162e+00f, +1.012743376077777e+00f, +1.012706484200181e+00f,
+1.012650842226435e+00f, +1.012575427778520e+00f, +1.012479473490919e+00f,
+1.012361105121003e+00f, +1.012219809594718e+00f, +1.012054359992419e+00f,
+1.011864000215460e+00f, +1.011647223869087e+00f, +1.011402518267713e+00f,
+1.011129654652857e+00f, +1.010826951260377e+00f, +1.010492924436361e+00f,
+1.010126353960416e+00f, +1.009725892479312e+00f, +1.009290060983833e+00f,
+1.008817301052548e+00f, +1.008305027555130e+00f, +1.007752833675443e+00f,
+1.007157827358150e+00f, +1.006518049344503e+00f, +1.005831403532018e+00f,
+1.005095592119373e+00f, +1.004308630055050e+00f, +1,003467498305776e+00f,
+1.002569500413888e+00f, +1.001612710105563e+00f, +1.000594272975683e+00f,
+9.995111701168786e-01f, +9.983609218719522e-01f, +9.971409288327860e-01f, +9.958488863050556e-01f, +9.944818543153893e-01f, +9.930375282832211e-01f, +9.915146560759479e-01f,
+9.899136802423638e-01f, +9.881930623810997e-01f, +9.859422591203311e-01f, +9.835667898378924e-01f, +9.811423034808365e-01f, +9.785214441250228e-01f, +9.756636036109838e-01f,
+9.725453442532574e-01f, +9.691456634185092e-01f, +9.654406178310209e-01f, +9.614043615076308e-01f, +9.570113065179300e-01f, +9.522367669696690e-01f, +9.470548839544214e-01f,
+9.414403740008491e-01f, +9.353691612846549e-01f, +9.288190093977164e-01f, +9.217662887169115e-01f, +9.141896283466009e-01f, +9.060694681113471e-01f, +8.973891675497357e-01f,
+8.881332000806269e-01f, +8.782893885841422e-01f, +8.678469565343039e-01f, +8.567970644671067e-01f, +8.451334654019180e-01f, +8.328542805780399e-01f, +8.199594783897041e-01f,
+8.064511006873497e-01f, +7.923346478686025e-01f, +7.776204488292163e-01f, +7.623206183595970e-01f, +7.464486491227057e-01f, +7.300205729992958e-01f, +7.130567383226717e-01f,
+6.955805444755916e-01f, +6.776173229836567e-01f, +6.591955305148172e-01f, +6.403486426892321e-01f, +6.211072197441818e-01f, +6.015049275244730e-01f, +5.815787608870452e-01f,
+5.613674511156324e-01f, +5.409188627354076e-01f, +5.202736834971303e-01f, +4.994780733459294e-01f, +4.785774177949064e-01f, +4.576172599874928e-01 f, +4.366490208265804e-01f,
+4.157221460415995e-01f, +3.948856590950757e-01f, +3.741903189229770e-01f, +3.536868899553974e-01f, +3.334260017756462e-01f, +3.134586473252229e-01f, +2.938337904395871e-01f,
+2.745992637590817e-01f, +2.558030636168172e-01f, +2.374902188466697e-01f, +2.197036032185785e-01f, +2.024855415115456e-01f, +1.858749915117319e-01f, +1.699067802117410e-01f,
+1.546132267478873e-01f, +1.400238206749695e-01f, +1.261637395672913e-01f, +1.130534434072719e-01f, +1.007084973747940e-01f, +8.914024389873081e-02f, +7.835612100141792e-02f,
+6.835821233920988e-02f, +5.914211536028976e-02f, +5.069893012340832e-02f, +4.301717763585550e-02f, +3.608020726673359e-02f, +2.986316337017630e-02f, +2.433722657129812e-02f,
+1.947675241971700e-02f, +1.525710171255895e-02f, +1.163787492636240e-02f, +8.433087782643718e-03f, +4.449668997344735e-03f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,

+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.00000000000O000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f,

36. The system of claim 30 or 31, wherein the analysis windowing function (40, 60) and/or the synthesis windowing function (90) comprises at least a succession, in forward or backward order, formed by the following values or at least a sub-succession with 10 of the following values if different from 0, with ±1% of tolerance:

-2.353032150516754e-04f, -4.619898752628163e-04f, -6.262931535610879e-04f, -7.929180432976445e-04f, -9.747166718929050e-04f, -1.180256894474562e-03f, -1.409209039594871e-03f, -1.664473096973725e-03f, -1.946591608170231e-03f, -2.257081732588478e-03f, -2.597106916737789e-03f, -2.967607624839524e-03f, -3.370454877988472e-03f, -3.806285163352241e-03f, -4.276873767639064e-03f, -4.782469904501813e-03f, -5.324608721716763e-03f, -5.903403814095400e-03f, -6.520419726599805e-03f, -7.175885277771099e-03f, -7.871422820642307e-03f, -8.606586039759667e-03f, -9.382480860899108e-03f, -1.019827182163307e-02f, -1.105520547739066e-02f, -1.195270300743193e-02f, -1.289205910303846e-02f, -1.387263484323160e-02f, -1.489528159506296e-02f, -1.595856621933800e-02f, -1.706288556735433e-02f, -1.820666399965468e-02f, -1.939065975232718e-02f, -2.061355417582714e-02f, -2.187570925786862e-02f, -2.317526315266411e-02f, -2.451227449041489e-02f, -2.588471937157619e-02f, -2.729263737090799e-02f, -2.873390902713615e-02f, -3.020862738245264e-02f, -3.171440372994384e-02f, -3.325098858986303e-02f, -3.481597793538342e-02f, -3.640892406933019e-02f, -3.802742318209150e-02f, -3.967067992672979e-02f, -4.133575417353826e-02f, -4.302203371734278e-02f, -4.472698045914417e-02f, -4.645022292934329e-02f, -4.818891490266687e-02f, -4.994225863256500e-02f, -5.170690802826666e-02f, -5.348162036097223e-02f, -5.526334794593565e-02f, -5.705123152423822e-02f, -5.884271749745559e-02f, -6.063717235243996e-02f, -6.243104027829089e-02f, -6.422303545004304e-02f, -6.600961519440657e-02f, -6.778962269634495e-02f, -6.955996868581379e-02f, -7.131966266443390e-02f, -7.306581273272733e-02f, -7.479758913001458e-02f, -7.651178225890490e-02f, -7.820711420768856e-02f, -7.988010693411644e-02f, -8.152964005319532e-02f, -8.315237353264004e-02f, -8.474728946770714e-02f, -8.631137544905677e-02f, -8.784374452959058e-02f, -8.934164364321417e-02f, -9.080411291245728e-02f, -9.222795761428432e-02f, -9.361232867223340e-02f, -9.495377758870335e-02f, -9.625155313139856e-02f, -9.750284620437569e-02f, -9.870736514214426e-02f, -9.986271288271026e-02f, -1.009680221406219e-01f, -1.020202684361974e-01f, -1.030183804850491e-01f, -1.039596356759290e-01f, -1.048438825017798e-01f, -1.056686838192766e-01f, -1.064342821660323e-01f, -1.071382314127799e-01f, -1.077799961121537e-01f, -1.083570625865931e-01f, -1.088690135027248e-01f, -1.093135588677235e-01f, -1.096903559498340e-01f, -1.099969655786929e-01f, -1.102332261219973e-01f, -1.103972812085189e-01f, -1.104898474883336e-01f, -1.105086416532167e-01f, -1.104537426996073e-01f, -1.103225838568563e-01f, -1.101145827722143e-01f, -1.098276928170364e-01f, -1.094621746650760e-01f, -1.090163960055733e-01f, -1.084908852561722e-01f, -1.078834293141886e-01f, -1.071937180231978e-01f, -1.064196358069465e-01f, -1.055612509762041e-01f, -1.046162812518618e-01f, -1.035849043557610e-01f, -1.024650162703341e-01f, -1.012568997532046e-01f, -9.995864571932928e-02f, -9.857014566194627e-02f, -9.708911135857967e-02f, -9.551545820689084e-02f, -9.384684920715425e-02f, -9.208300062891550e-02f, -9.022171021406450e-02f, -8.826309993000785e-02f, -8.620493821803937e-02f, -8.404742152815330e-02f, -8.178792716809512e-02f, -7.942625026703617e-02f, -7.695980775819990e-02f, -7.438785600211463e-02f, -7.170797002873608e-02f, -6.891994783815969e-02f, -6.602189797715241e-02f, -6.301349420724424e-02f, -5.989191912667712e-02f, -5.665655641133161e-02f, -5.330406164482222e-02f, -4.983427241976235e-02f, -4.624456893420224e-02f, -4.253455686336916e-02f, -3.870195772538443e-02f, -3.474585776145929e-02f, -3.066341518682682e-02f, -2.645425077642105e-02f, -2.211581608120528e-02f, -1.764740541599136e-02f, -1.304581363895818e-02f, -8.310425696208936e-03f, -3.438268661133170e-03f, +1.570315476576933e-03f, +6.717697635290676e-03f, +1.200477020244778e-02f, +1.743398319747869e-02f, +2.300642061077823e-02f, +2,872481423270595e-02f, +3.458896350634671e-02f, +4.060106462625085e-02f, +4.676102915752826e-02f, +5.307133911821893e-02f, +5.953239090915557e-02f, +6.614647812869151e-02f, +7.291293184312803e-02f, +7.983354189816511e-02f, +8.690807412770696e-02f, +9.413813765275064e-02f, +1.015233140203748e-01f, +1.090651518336202e-01f, +1.167626546016197e-01f, +1.246171387327525e-01f, +1.326272948938113e-01f, +1.407938190608664e-01f, +1.491152519299797e-01f, +1.575921408388593e-01f, +1.662224799248571e-01f, +1.750067399059861e-01f, +1.839431938620024e-01f, +1.930318183054904e-01f, +2.022699854906251e-01f, +2.116567430906184e-01f, +2.211888523410642e-01f, +2.308655379767671e-01f, +2.406837992341654e-01f, +2.506420640291662e-01f, +2.607365124918583e-01f, +2.709659073501196e-01f, +2.813259021832532e-01f, +2.918144694729168e-01f, +3.024270279840051e-01f, +3.131603499997996e-01f, +3.240095704645023e-01f, +3.349719592361666e-01f, +3.460422935204829e-01f, +3.572175180786021e-01f, +3.684915649120530e-01f, +3.798595119591716e-01f, +3.913146885756875e-01f, +4.028532873867052e-01f, +4.144688328137527e-01f, +4.261571642320424e-01f, +4.379113897565727e-01f, +4.497256320417501e-01f, +4.615925445090212e-01f, +4.735067030065239e-01f, +4.854600184866710e-01f, +4.974471592901086e-01f, +5.094597228333853e-01f, +5.214909841729947e-01f, +5.335326819631583e-01f, +5.455789811615239e-01f, +5.576217157959890e-01f, +5.696546730080154e-01f, +5.816685576268035e-01f, +5.936560624526468e-01f, +6.056083823929643e-01f, +6.175192060085208e-01f, +6.293796611336280e-01f, +6.411830842823245e-01f, +6.529203544876097e-01f, +6.645840786371451e-01f, +6.761653499550255e-01f, +6.876573952173626e-01f, +6.990511539119996e-01f, +7.103400549562944e-01f, +7.215149331458728e-01f, +7.325691772738999e-01f, +7.434943718765665e-01f, +7.542846327442048e-01f, +7.649313654540612e-01f, +7.754281892901473e-01f, +7.857670170752049e-01f, +7.959414651061612e-01f, +8.059437233154637e-01f, +8.157687070715176e-01f, +8.254086223972127e-01f, +8.348589373399948e-01f, +8.441125827416620e-01f, +8.531651194538425e-01f, +8.620108336276733e-01f, +8.706456337542150e-01f, +8.790631561061171e-01f, +8.872599706865123e-01f, +8.952313288619367e-01f, +9.029751680353524e-01f, +9.104863121445679e-01f, +9.177625550620636e-01f, +9.247997426966093e-01f, +9.315962496426278e-01f, +9.381494858921667e-01f, +9.444588390359354e-01f, +9.505220861927248e-01f, +9.563402921286364e-01f, +9.619114522936701e-01f, +9.672366712325431e-01f, +9.723156637834687e-01f, +9.771501187120180e-01f, +9.817397501303696e-01f, +9.860865871353246e-01f, +9.901906380163595e-01f, +9.940557180662704e-01f, +9.976842395284637e-01f, +1.001080961257010e+00f, +1.004247514102417e+00f, +1.007188578458507e+00f, +1.009906654565108e+00f, +1.012407428282884e+00f, +1,014694702432600e+00f, +1.016774659209400e+00f, +1.018650990561848e+00f, +1.020330464463111e+00f, +1.021817328911793e+00f, +1.023118841384460e+00f, +1.024240262467000e+00f, +1.025189721888128e+00f, +1.025972450969440e+00f, +1.026596938589443e+00f, +1.027069179375841e+00f, +1.027397523939210e+00f, +1.027587902203109e+00f, +1.027648951922701e+00f, +1.027585830688143e+00f, +1.027408519661012e+00f, +1.027122986826984e+00f, +1.026738673647482e+00f, +1.026261663878092e+00f, +1.025701002415063e+00f, +1.025061777648234e+00f, +1.024353980976701e+00f, +1.023582385618774e+00f, +1.022756514615106e+00f, +1.021880604350422e+00f, +1.020963871317665e+00f, +1.020009139549275e+00f, +1.019027285501251e+00f, +1.018019442784231e+00f, +1.016996499560845e+00f, +1.015957433206324e+00f, +1.014923441259795e+00f, +1.013915946100629e+00f, +1.013047565149327e+00f, +1.012216130365610e+00f, +1.011044869639164e+00f, +1.009914592130044e+00f, +1.008824888092573e+00f, +1.007773858455400e+00f, +1.006761700412993e+00f, +1.005786648810854e+00f, +1.004848753962734e+00f, +1.003946083413733e+00f, +1.003078846506546e+00f, +1.002245009135684e+00f, +1.001444733905817e+00f, +1.000676188436651e+00f, +9.999393169239009e-01f, +9992320848298057e-01f, +9.985548127155425e-01f, +9.979055415627330e-01f, +9.972842679758880e-01f, +9.966890948441745e-01f, +9.961203379971326e-01f, +9.955761256313581e-01f, +9.950565724564597e-01f, +9.945597525471822e-01f, +9.940860378486615e-01f, +9.936337788972491e-01f, +9.932031606606759e-01f, +9.927921871265732e-01f, +9.924015177880798e-01f, +9.920297273323891e-01f, +9.916767775088281e-01f, +9.913408767719142e-01f, +9.910230654424902e-01f, +9.907216425865902e-01f, +9.904366799536263e-01f, +9.901668953434221e-01f, +9.899131011580791e-01f, +9.896735637374597e-01f, +9.894488374513719e-01f, +9.892374835404283e-01f, +9.890401927796704e-01f, +9.888556356037892e-01f, +9.886843467692753e-01f, +9.885247606051014e-01f, +9.883778520531268e-01f, +9.882423270582524e-01f, +9.881185638915363e-01f, +9.880051626345804e-01f, +9.879032023766432e-01f, +9.878111744348976e-01f, +9.877295459610343e-01f, +9.876571983429736e-01f, +9.875949843246187e-01f, +9.875412739766566e-01f, +9.874969061399389e-01f, +9.874606249127551e-01f, +9.874329809802893e-01f, +9.874126414437681e-01f, +9.874004750404033e-01f, +9.873949921033299e-01f, +9.873969162747074e-01f, +9.874049060317581e-01f, +9.874197049003676e-01f, +9.874399717110517e-01f, +9.874663281231737e-01f, +9.874973205882319e-01f, +9.875338926695315e-01f, +9.875746535410983e-01f, +9.876201238703241e-01f, +9.876689801932402e-01f, +9.877221556193183e-01f, +9.877781920433015e-01f, +9.878376489591358e-01f, +9.878991990245439e-01f, +9.879637979933339e-01f, +9.880300303653743e-01f, +9.880984675859855e-01f, +9.881678007807095e-01f, +9.882390300097154e-01f, +9.883107693992456e-01f, +9.883835200189653e-01f, +9.884560159878955e-01f, +9.885294200392185e-01f, +9.886022219397892e-01f, +9.886749404176028e-01f, +9.887466261142505e-01f, +9.888182771263505e-01f, +9.888882480852147e-01f, +9.889574384705896e-01f, +9.890247977602895e-01f, +9.890911247701029e-01f, +9.891551701556196e-01f, +9.892178658748239e-01f, +9.892779555818088e-01f, +9.893365186903538e-01f, +9.893923680007577e-01f, +9.894462830852175e-01f, +9.894972124952000e-01f, +9.895463342815009e-01f, +9.895923617530382e-01f, +9.896362652966239e-01f, +9.896772011542693e-01f, +9.897162195263046e-01f, +9.897520286480039e-01f, +9897859195209235e-01f, +9.898170267411330e-01f, +9.898462068764986e-01f, +9.898725363809847e-01f, +9.898975138787787e-01f, +9.899200050208486e-01f, +9.899410789223559e-01f, +9.899600605054418e-01f, +9.899782261038060e-01f, +9.899945557067980e-01f, +9.900103500807507e-01f, +9.900248320990181e-01f, +9.900394023736973e-01f, +9.900532105829365e-01f, +9.900674746047259e-01 f, +9.900814722948890e-01f, +9.900966926051257e-01f, +9.901122448734595e-01f, +9.901293790312005e-01f, +9.901474648912307e-01f, +9.901680598867444e-01f, +9.901902265696609e-01f, +9.902151896501201e-01f, +9.902424418296485e-01f, +9.902734448815004e-01f, +9.903071270768942e-01f, +9.903448913950654e-01f, +9.903862280081246e-01f, +9.904324484666853e-01f, +9.904825650601110e-01f, +9.905379830873822e-01f, +9.905980602136440e-01f, +9.906640366554630e-01f, +9.907348826312993e-01f, +9.908120376822228e-01f, +9.908947858311721e-01f, +9.909842592301273e-01f, +9.910795247770178e-01f, +9.911819240108124e-01f, +9.912905118607647e-01f, +9.914064705361564e-01f, +9.915288011543961e-01f, +9.916586940166509e-01f, +9.917952720685562e-01f, +9.919396217291009e-01f, +9.920906151219310e-01f, +9.922495028313456e-01f, +9.924152398352751e-01f, +9.925887208794144e-01f, +9.927688708468421e-01f, +9.929569112537944e-01f, +9.931516528513824e-01f, +9.933539244159140e-01f, +9.935626893131695e-01f, +9.937790866568735e-01f, +9940016434044485e-01f, +9.942312024833810e-01f, +9.944668184371617e-01f, +9.947093441694513e-01f, +9.949572854565533e-01f, +9.952116634297566e-01f, +9.954712635321227e-01f, +9.957367951478069e-01f, +9.960068616185641e-01f, +9.962823025614079e-01f, +9.965617986382630e-01f, +9968461329825753e-01f, +9.971338271912752e-01f, +9.974256691222113e-01f, +9.977203369515556e-01f, +9.980185087055744e-01f, +9.983185871761977e-01f, +9.986213520769593e-01f, +9.989255426466267e-01f, +9.992317314100975e-01f, +9.995382582242990e-01f, +9.998461160718275e-01f, +1.000153907612080e+00f, +1.000461955079660e+00f, +1.000768859280338e+00f, +1.001075613053728e+00f, +1.001380551217109e+00f, +1.001684244734497e+00f, +1.001985425397567e+00f, +1.002284871786226e+00f, +1.002580975161843e+00f, +1.002874411368430e+00f, +1.003163845364970e+00f, +1.003450063374329e+00f, +1.003731570287893e+00f, +1.004009147462043e+00f, +1.004281457582935e+00f, +1,004549339226336e+00f, +1.004811375053364e+00f, +1.005068272394360e+00f, +1.005318795748286e+00f, +1.005563968008037e+00f, +1.005802269635282e+00f, +1,006034554002353e+00f, +1.006259855360867e+00f, +1.006479018139540e+00f, +1.006690541428116e+00f, +1.006895570408563e+00f, +1.007093045696527e+00f, +1.007283799246233e+00f, +1.007466616298057e+00f, +1.007642728426847e+00f,  +1.007811036585595e+00f,  +1.007972441990187e+00f,
+1.008125875904472e+00f,  +1.008272602383284e+00f,  +1.008411468616852e+00f,
+1.008543573152632e+00f,  +1.008668018334797e+00f,  +1.008786009787269e+00f,
+1.008896526233555e+00f,  +1.009000766336071e+00f,  +1.009097763850333e+00f,
+1.009188880897370e+00f,  +1.009273163797313e+00f,  +1.009351762546296e+00f,
+1.009423944949143e+00f,  +1.009491175244507e+00f,  +1.009552401900961e+00f,
+1.009608886895764e+00f,  +1.009659973830751e+00f,  +1.009707093778162e+00f,
+1.009749238562067e+00f,  +1.009787744284661e+00f,  +1.009822090220407e+00f,
+1.009853706282597e+00f,  +1.009881498943010e+00f,  +1.009906958448099e+00f,
+1.009929567021562e+00f,  +1.009950573483366e+00f,  +1.009969021400474e+00f,
+1.009986499185054e+00f,  +1.010002363879044e+00f,  +1.010017890428877e+00f,
+1.010032170180360e+00f,  +1.010046722045583e+00f,  +1.010060809299530e+00f,
+1.010075674445289e+00f,  +1.010090449982098e+00f,  +1.010106564965965e+00f,
+1.010123226584120e+00f,  +1.010141762173145e+00f,  +1.010161131093372e+00f,
+1.010182635897876e+00f,  +1.010205587931660e+00f,  +1.010231078494249e+00f,
+1.010257950227988e+00f,  +1.010287732968580e+00f,  +1.010319484524512e+00f,
+1.010354079663767e+00f,  +1.010390635488037e+00f,  +1.010430470494512e+00f,
+1.010472266495074e+00f,  +1.010517096381509e+00f,  +1.010564099281000e+00f,
+1.010614266894512e+00f,  +1.010666285876455e+00f,  +1.010721360243234e+00f,
+1.010778416755264e+00f,  +1.010838252644461e+00f,  +1.010899655674578e+00f,
+1.010963729626641e+00f,  +1.011029191301694e+00f,  +1.011096993993037e+00f,
+1.011165861239173e+00f,  +1.011236610341260e+00f,  +1.011308167670753e+00f,
+1.011381453638912e+00f,  +1.011454785713102e+00f,  +1.011529185153809e+00f,
+1.011603680910505e+00f,  +1.011678803938046e+00f,  +1.011753008569803e+00f,
+1.011827484797985e+00f,  +1.011900936547881e+00f,  +1.011973876511603e+00f,
+1.012044885003304e+00f,  +1.012114985644919e+00f,  +1.012182837094955e+00f,
+1.012249023976742e+00f,  +1.012312095063070e+00f,  +1.012373028737774e+00f,
+1.012430463679316e+00f,  +1.012484972246822e+00f,  +1.012535058602453e+00f,
+1.012581678169188e+00f,  +1.012623472898504e+00f,  +1.012660975529858e+00f,
+1.012692758750213e+00f,  +1.012719789201144e+00f,  +1.012740575296603e+00f,
+1.012755753887085e+00f,  +1.012763948841204e+00f,  +1.012765922449960e+00f,
+1.012760298661069e+00f,  +1.012747819936584e+00f,  +1.012726958954961e+00f,
+1.012698607692183e+00f,  +1.012661400539405e+00f,  +1.012615904116265e+00f,
+1.012560833005713e+00f,  +1.012497050269805e+00f,  +1.012422888521601e+00f,
+1.012339226241367e+00f,  +1.012244921966297e+00f,  +1.012140460211194e+00f,
+1.012024302085441e+00f,  +1.011897560567707e+00f,  +1.011758810583150e+00f,
+1.011608449127642e+00f,  +1.011445162723270e+00f,  +1.011269960947744e+00f,
+1.011081255645969e+00f,  +1.010879608424312e+00f,  +1.010663676735228e+00f,
+1.010434184200640e+00f,  +1.010189681124657e+00f,  +1.009930754807923e+00f,
+1.009655660215271e+00f,  +1.009365251564694e+00f,  +1.009058249873833e+00f,
+1.008734758578989e+00f,  +1.008393079963091e+00f,  +1.008034308295421e+00f,
+1.007656661215973e+00f,  +1.007260142622887e+00f,  +1.006843352506855e+00f,
+1.006407009542103e+00f,  +1.005949145170711e+00f,  +1.005470005637052e+00f,
+1.004967986424467e+00f,  +1.004443531995945e+00f,  +1.003894772403371e+00f,
+1.003321903663793e+00f,  +1.002723127308148e+00f,  +1.002098854400575e+00f,
+1.001447278873483e+00f,  +1.000768505317086e+00f,  +1.000060686758758e+00f,
+9.993242684851855e-01f, +9.985573503390627e-01f, +9.977600196406868e-01f, +9.969306036935497e-01f,  +9.960694269553644e-01f,  +9.951746430061121e-01f,  +9.942466438407230e-01f,
+9.932837131068657e-01f, +9.922861082472264e-01f, +9.912523092989319e-01f, +9.901827419790691e-01f,  +9.890757868707590e-01f,  +9.879313024174022e-01f,  +9.863553220272523e-01f,
+9.847362453480265e-01f, +9.831750948772566e-01f, +9.815583336011345e-01f, +9.798613526271561e-01f,  +9.780617486993630e-01f,  +9.761574317374303e-01f,  +9.741378617337759e-01f,
+9.719990112065752e-01f, +9.697327413658168e-01f, +9.673331975559332e-01f, +9.647915124057732e-01f,  +9.621011497566145e-01f,  +9.592539757044516e-01f,  +9.562427177295731e-01f,
+9.530600909726344e-01f, +9.496984081652284e-01f, +9.461498120176854e-01f, +9.424071613625743e-01f,  +9.384634163826711e-01f,  +9.343112966094085e-01f,  +9.299449872197452e-01f,
+9.253567968750328e-01f, +9.205404627076625e-01f, +9.154896280575360e-01f, +9.101986790930605e-01f,  +9.046620597741508e-01f,  +8.988755194372424e-01f,  +8.928338316495705e-01f, +8.865337190368053e-01f, +8.799712722567934e-01f, +8.731437835983047e-01f, +8.660476534563131e-01f, +8.586812520174252e-01f, +8.510420440685049e-01f, +8.431297226886574e-01f, +8.349435141989714e-01f, +8.264839911291133e-01f, +8.177505366573690e-01f, +8.087449817124315e-01f, +7.994681492797084e-01f, +7.899235162194718e-01f, +7.801137731566502e-01f, +7.700431275216928e-01f, +7.597145736971065e-01f, +7.491330971820804e-01f, +7.383028603058783e-01f, +7.272298755824693e-01f, +7.159201919962611e-01f, +7.043814340356083e-01f, +6.926196927377140e-01f, +6.806438831866077e-01f, +6.684616478236647e-01f, +6.560830137986515e-01f, +6.435179268559957e-01f, +6.307755329382612e-01f, +6.178641647786525e-01f, +6.047954625702541e-01f, +5.915799587176216e-01f, +5.782289366005894e-01f, +5.647535885752191e-01f, +5.511703155400274e-01f, +5.374905090437071e-01f, +5.237263500445715e-01f, +5.098915423728255e-01f, +4.960008074926423e-01f, +4.820662943337458e-01f, +4.681017110048007e-01f, +4.541216995958746e-01f, +4.401421815729068e-01f, +4.261772971493010e-01f, +4.122417888542512e-01f, +3.983499612526493e-01f, +3.845172335531009e-01f, +3.707583717376236e-01f, +3.570886786795506e-01f, +3.435228672445627e-01f, +3.300763764703638e-01f, +3.167640325043893e-01f, +3.036004651973109e-01f, +2.905996158436682e-01f, +2.777758503744847e-01f, +2.651434678028531e-01f, +2.527161881181577e-01f, +2.405069849650012e-01f, +2.285283969438072e-01f, +2.167933432162879e-01f, +2.053139897833021e-01f, +1.941021906320988e-01f, +1.831680872008943e-01f, +1.725221947208913e-01f, +1.621735416384834e-01f, +1.521320683467849e-01f, +1.424052801149985e-01f, +1.330015240938615e-01f, +1.239260664828526e-01f, +1.151858295527293e-01f, +1.067840430193724e-01f, +9.872637505002878e-02f, +9.101379000888035e-02f, +8.365057236623055e-02f, +7.663508305536153e-02f, +6.997033405748826e-02f, +6.365188111381365e-02f, +5.768176015814392e-02f, +5.205244216987966e-02f, +4.676538412257621e-02f, +4.180950541438362e-02f, +3.718640251368464e-02f, +3.288072750732215e-02f, +2.889548499582958e-02f, +2.520980565928884e-02f, +2.183057564646272e-02f, +1.872896194002638e-02f, +1.592127815153420e-02f, +1.336381425803020e-02f, +1.108558877807282e-02f, +8.943474189364638e-03f, +6.758124889697787e-03f, +3.504438130619497e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f,

```
+0.000000000000000e+00f,    +0.000000000000000e+00f,    +0.000000000000000e+00f,
+0.0000000000000O0e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f,    +0.000000000000000e+00f,    +0.000000000000000e+00f,
+0.000000000000000e+00f, +0.000000000000000e+00f, +0.000000000000000e+00f
```

**37.** A method comprising performing a modified cosine transformation, MDCT, analysis for transforming a time domain, TD, representation of an information signal, or a processed version thereof, into a frequency domain, FD, representation, using an analysis windowing function (40, 50, 60, 70) having a meandering portion (44, 64) which passes a linear function (40', 60') in correspondence of at least four points (#1, #2, #3, #4).

**38.** A method comprising performing an modified cosine transformation, MDCT, synthesis for transforming a frequency domain, FD, representation of an information signal, or a processed version thereof, into a time domain, TD, representation, using a synthesis windowing function (90) having a meandering portion (94) which passes a linear function in correspondence of at least four points (#1, #2, #3, #4).

Fig. 1
(PRIOR ART)

Fig. 2
(PRIOR ART)

Fig. 3

Fig. 4

Fig. 5

Fig. 6

Fig. 7

analysis
folding: 2N –> N

DCT kernel size N

synthesis
unfolding: N –> 2N and overlap add

Fig. 8

EP 3 483 879 A1

analysis and synthesis window

Fig. 9

Fig. 10

Fig. 11

Fig. 12

Fig. 13

Fig. 14

Fig. 13A

EP 3 483 879 A1

Fig. 14A

~150

| Update input buffers | ~S151 |
|---|---|

↓

| Transform from TD to FD | ~S152 |
|---|---|

Fig. 15

~160

| Generate the time domain aliasing buffer | ~S161 |
|---|---|

↓

| Window the time domain aliasing buffer | ~S162 |
|---|---|

↓

| Conduct overlap-add operation to get reconstructed time samples | ~S163 |
|---|---|

Fig. 16

Fig. 17

EP 3 483 879 A1

Fig. 18

EP 3 483 879 A1

Fig. 19

Fig. 20
(PRIOR ART)

Fig. 21

Fig. 22

Fig. 23

Fig. 24

Fig. 25

Europäisches
Patentamt

European
Patent Office

Office européen
des brevets

**EUROPEAN SEARCH REPORT**

Application Number

EP 17 20 1086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HENRIQUE S MALVAR: "Biorthogonal and Nonuniform Lapped Transforms for Transform Coding with Reduced Blocking and Ringing Artifacts", IEEE TRANSACTIONS ON SIGNAL PROCESSING, IEEE SERVICE CENTER, NEW YORK, NY, US, vol. 46, no. 4, April 1998 (1998-04), XP011058114, ISSN: 1053-587X | 1-25, 28-31, 37,38 | INV. G10L19/022 G10L19/02 H04N19/60 G06F17/14 G06T9/00 G10L25/45 |
| A | * page 1046, paragraph III. - page 1048; figure 8 * <br> * page 1049, paragraph IV. - page 1052, paragraph V. * <br> ----- | 26,27, 32-36 | |
| X | ANONYMOUS: "ISO/IEC 14496-3:2005/FDAM 9, AAC-ELD", 82. MPEG MEETING;22-10-2007 - 26-10-2007; SHENZHEN; (MOTION PICTURE EXPERT GROUP OR ISO/IEC JTC1/SC29/WG11),, no. N9499, 21 February 2008 (2008-02-21), XP030015994, | 1-31,37, 38 | |
| | | | TECHNICAL FIELDS SEARCHED (IPC) |
| A | * page 17, paragraph 4.6.20 - page 18, paragraph 4.6.20.2 * <br> * page 20 - page 41; tables AMD9.15, AMD9.16 * <br> ----- | 32-36 | G10L H04N G06F G06T |
| X | US 2017/011747 A1 (FAURE JULIEN [FR] ET AL) 12 January 2017 (2017-01-12) | 1-31,37, 38 | |
| A | * paragraph [0003] - paragraph [0018] * <br> * paragraph [0087] - paragraph [0099]; figures 2,3A * <br> ----- <br> -/-- | 32-36 | |

The present search report has been drawn up for all claims

| Place of search | Date of completion of the search | Examiner |
|---|---|---|
| Munich | 14 March 2018 | Virette, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | David Virette: "Low Delay Transform for High Quality Low Delay Audio Coding", , 10 December 2012 (2012-12-10), pages 1-195, XP055261425, Universit? de Rennes 1 Retrieved from the Internet: URL:https://hal.inria.fr/tel-01205574/document [retrieved on 2016-03-30] | 1-31,37, 38 | |
| A | * page 74, paragraph 3.1.2 - page 79, paragraph 3.1.3; figures 28,29 * * page 95, paragraph 4.1.6 - page 96; figure 37 * * page 106, paragraph 4.2.3 - page 108; figure 45 * ----- | 32-36 | |
| X,D | US 8 847 795 B2 (FAURE JULIEN [FR]; PHILIPPE PIERRICK [FR]; ORANGE [FR]) 30 September 2014 (2014-09-30) | 1-18,20, 21,23, 25-31, 37,38 | |
| A | * column 1, line 23 - column 3, line 14; figure 2 * ----- | 19,22, 24,32-36 | TECHNICAL FIELDS SEARCHED (IPC) |

The present search report has been drawn up for all claims

| Place of search | Date of completion of the search | Examiner |
|---|---|---|
| Munich | 14 March 2018 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 1086

This annex lists the patent family members relating to the patent documents cited in  the above-mentioned European search report.
The members are as contained in the European Patent Office EDP file on
The European Patent Office is in no way liable for these particulars which are merely given for the purpose of information.

14-03-2018

| Patent document cited in search report | | | Publication date | Patent family member(s) | | | Publication date |
|---|---|---|---|---|---|---|---|
| US 2017011747 | A1 | | 12-01-2017 | BR | 112014000611 | A2 | 14-02-2017 |
| | | | | CA | 2841303 | A1 | 17-01-2013 |
| | | | | CN | 103814406 | A | 21-05-2014 |
| | | | | EP | 2732448 | A1 | 21-05-2014 |
| | | | | ES | 2556268 | T3 | 14-01-2016 |
| | | | | FR | 2977969 | A1 | 18-01-2013 |
| | | | | JP | 6177239 | B2 | 09-08-2017 |
| | | | | JP | 2014524048 | A | 18-09-2014 |
| | | | | KR | 20140050056 | A | 28-04-2014 |
| | | | | RU | 2014104488 | A | 20-08-2015 |
| | | | | US | 2014142930 | A1 | 22-05-2014 |
| | | | | US | 2017011747 | A1 | 12-01-2017 |
| | | | | WO | 2013007943 | A1 | 17-01-2013 |
| US 8847795 | B2 | | 30-09-2014 | BR | 112013033727 | A2 | 31-01-2017 |
| | | | | CA | 2839971 | A1 | 03-01-2013 |
| | | | | CN | 103930946 | A | 16-07-2014 |
| | | | | EP | 2727107 | A1 | 07-05-2014 |
| | | | | FR | 2977439 | A1 | 04-01-2013 |
| | | | | JP | 6109162 | B2 | 05-04-2017 |
| | | | | JP | 2014523544 | A | 11-09-2014 |
| | | | | KR | 20140085415 | A | 07-07-2014 |
| | | | | RU | 2014102603 | A | 10-08-2015 |
| | | | | US | 2014139362 | A1 | 22-05-2014 |
| | | | | WO | 2013001226 | A1 | 03-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8847795 B